# EUROPÄISCHE PATENTSCHRIFT

(11) **EP 3 831 242 B1**
(45) Veröffentlichungstag und Bekanntmachung des Hinweises auf die Patenterteilung: **16.11.2022**
(21) Anmeldenummer: 21152236.2
(22) Anmeldetag: 03.01.2012
(51) Int. Cl.: A46B 3/04, A46B 3/22, A46B 1/00, A46B 9/06, A46D 1/00, A46D 3/00

(54) **ZAHNBÜRSTE MIT GESPRITZTEN BORSTEN**
TOOTHBRUSH WITH INJECTION-MOULDED BRISTLES
BROSSE À DENTS POURVUE DE SOIES MOULÉES PAR INJECTION

(30) Priorität: 04.01.2011 EP 11000032
(43) Veröffentlichungstag der Anmeldung: 09.06.2021
(62) Teilanmeldung aus: 19172044.0
(73) Patentinhaber: Trisa Holding AG, 6234 Triengen (CH)
(72) Erfinder: Schär, Michael, 6243 Egolzwil (CH); Zurfluh, Peter, 6055 Alpnach Dorf (CH); Kirchhofer, Roger, 5057 Reitnau (CH)
(74) Vertreter: Latscha Schöllhorn Partner AG

(56) Entgegenhaltungen:
- WO-A1-2009/072747
- US-A1- 2005 172 439
- US-A1- 2008 014 010

## Beschreibung

Die vorliegende Erfindung betrifft eine Zahnbürste gemäss dem Oberbegriff des Anspruchs 1.

Aus dem Dokument WO 2008/135953 A1 ist ein Mundhygienegerät bekannt, dessen Kopfteil eine Basis und eine Vielzahl von elastomeren Elementen aufweist, welche von der Basis abstehen. Die elastomeren Elemente können im Spritzgussverfahren hergestellt sein, wobei die elastomeren Elemente mindestens 250 Kanten bilden und wobei der Spitzenradius der elastomeren Elemente kleiner als 0.01524 cm (0.006 inch) ist. Weiter offenbart das Dokument WO 03/079849 A1 Borsten für eine Borstenware, insbesondere einer Reinigungsbürste, eine Zahnbürste oder eine Applikationsbürste, wobei die Borste einen unteren Wurzelbereich mit dem sie in oder an einem Borstenträger anbringbar oder Teil eines Borstenträgers ist und eine ausserhalb des Borstenträgers liegende oberhalb des Wurzelbereichs angeordnete freie Länge besitzt. Diese setzt sich aus einem an den Wurzelbereich angrenzenden Schaftbereich und einen darüber angeordneten Flex-Bereich zusammen, wobei der Schaftbereich sich zusammensetzt aus einem unteren an den Wurzelbereich angrenzenden Schaft-Basisabschnitt und einem darüber liegenden Schaftabschnitt. Der Flex-Bereich setzt sich aus einem unteren, an den Schaftbereich angrenzenden Wirk- und Flexabschnitt und einem darüber liegenden, das freie Ende der Borsten bildenden Spitzenabschnitt zusammen. Die Borste besitzt im Schaft-Basisabschnitt eine kontinuierliche vertiefungsfreie Mantelfläche und trägt im Flex-Bereich, zumindest abschnittsweise auf der Mantelfläche eine von Erhebungen und/oder Vertiefungen gebildete, innerhalb der Hüllfläche der Borste liegende, Profilierung. Das Spritzgusswerkzeug zur Herstellung dieser Borste besteht aus mehreren quer zur Längserstreckung des Formkanals geschichteten Formplatten, von denen jede einen Längsabschnitt des Formkanals aufweist.

Das Dokument US 2003/0163884 A1 offenbart Bürstenware mit mindestens einem Träger und darauf angeordneten, aus einem spritzbaren Kunststoff hergestellten Borsten. Es wird ein Träger mit wie Spinndüsen wirkenden Durchgangslöchern bereitgestellt, an welchem entsprechend Borsten geformte Spritzkanäle anschliessen. Kunststoffschmelze für die Borsten wird von mindestens einer Seite des Trägers durch die Durchgangslöcher in die Kanäle eingespritzt, dabei werden die Borsten geformt. Die Durchgangslöcher haben entlang wenigstens eines Abschnitts ihrer Länge einen minimalen Querschnitt, welcher ≤ 3 mm ist, und das Verhältnis zwischen diesem Querschnitt und dem Strömungspfad der Schmelze, resultierend von der Tiefe der Durchgangslöcher plus der Länge der Kanäle, ist ≤ 1:5.

US2005172439 offenbart ein Verfahren zur Herstellung einer Borstenstruktur unter Verwendung eines Formwerkzeugs mit von einer Formwand ausgehenden Kanälen zum Formen von Borsten, wobei eine Formmasse zum Formen der Borsten unter Druck in die Kanäle eingebracht wird.

Es ist eine Aufgabe der vorliegenden Erfindung, eine einfach herstellbare Zahnbürste mit gespritzten Borsten zu schaffen.

Diese Aufgabe wird mit einer Zahnbürste gemäss Patentanspruch 1 gelöst. Die Weiterentwicklung der erfindungsgemässen Zahnbürste enthält, neben den gespritzten Borsten, weitere Reinigungselemente, insbesondere auch eingesetzte, vorher extrudierte, konventionelle Borsten und/oder gespritzte (keine Borsten aufweisenden) weichelastische Massage- und Reinigungselemente.

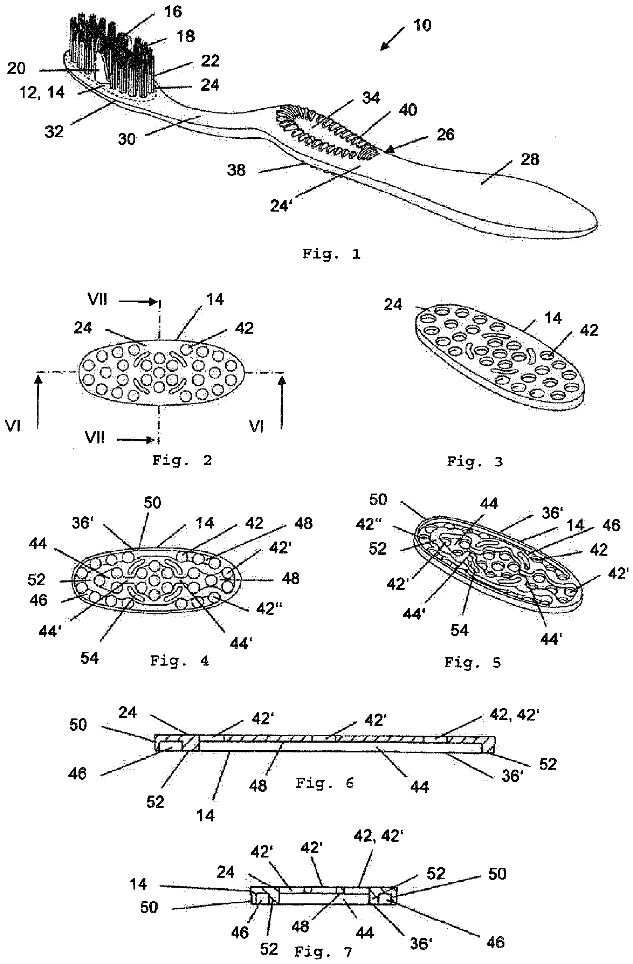

Die Offenbarung im Zusammenhang mit einzelnen Ausführungsformen der erfindungsgemässen Zahnbürste und Herstellverfahren bezüglich gespritzte Borsten, extrudierte konventionelle Borsten sowie (borstenlose) gespritzte weichelastische Massage- und Reinigungselemente gelten grundsätzlich für alle Ausführungsformen, insbesondere für jene gemäss Fig. 1-25 , 27-44 , 58-60 , 61 - 63 und 70 - 76 .

Eine erfindungsgemässe Zahnbürste weist einen im Spritzgussverfahren hergestellten Borstenträger auf, welcher mit mindestens einem Verteilkanal für Borstenmaterial versehen ist. Die ebenfalls im Spritzgussverfahren hergestellten, einen Borstenstamm aufweisenden gespritzten Borsten stehen vom Borstenträger ab und sind mit dem Borstenmaterial im Verteilkanal integral, d.h. einstückig, ausgebildet. Die gespritzten Borsten sind mittels Material- und/oder Formschluss mit dem Borstenträger verbunden. Der Verteilkanal dient der Zufuhr des Borstenmaterials für die gespritzten Borsten ab einem Anspritzpunkt. Der Anspritzpunkt ist im Spritzgusswerkzeug von einer Anspritzdüse gegeben und üblicherweise an der Zahnbürste feststellbar.

Die erfindungsgemässe Zahnbürste kann auf einfache Art und Weise im Spritzgussverfahren, vorzugsweise im Ein-, Zwei- oder Mehrkomponenten Spritzgussverfahren hergestellt werden.

Die gespritzten Borsten verfügen im Bereich des Borstenstamms vorzugsweise über eine konische Form mit gleichbleibender Steigung (Kegelform). An das nutzungsseitige Ende des Borstenstamms schliesst vorzugsweise ein nutzungsseitiger Endbereich der Borsten an, welcher mit dem Borstenstamm integral ausgebildet ist.

Dieser Endbereich ist speziell geformt und weist vorzugsweise eine im Wesentlichen sphärische Form, eine Borstenkappe, auf. Insbesondere kann er halbkugelförmig, kegelförmig oder flach mit einem gerundeten Übergang zum Mantelfläche des Borstenstamms ausgebildet sein. Es ist auch möglich, dass er in eine Anzahl zugespitzte Endborsten unterteilt ist.

Die Form des nutzungsseitigen Endbereichs ist zu jener des Borstenstamms unterschiedlich.

Es kann auf einen speziell geformten nutzungsseitigen Endbereich verzichtet werden, wobei das nutzungsseitige Ende der gespritzten Borsten durch einen ebenen Abschluss des Borstenstamms mit einem scharfkantigen Übergang zur Mantelfläche des Borstenstamms gebildet ist.

Alternativ können die gespritzten Borsten auch unterschiedliche Steigungen oder Absätze aufweisen, solange eine Entformbarkeit in Richtung des Borstenträgers gewährleistet ist.

Bei einer bevorzugten Ausführungsform der Zahnbürste beträgt das Verhältnis des Durchmessers der im Spritzgussverfahren hergestellten gespritzten Borsten beim nutzungsseitigen Ende des Borstenstamms zur (freiliegenden) Länge des Borstenstamms mindestens 1:35. Bevorzugt beträgt dieses Verhältnis mindestens 1:40.

In einer weiteren bevorzugten Ausführungsform der erfindungsgemässen Zahnbürste beträgt das oben genannte Verhältnis höchstens 1:90, bevorzugt höchstens 1:80.

Bevorzugt liegt das oben genannte Verhältnis zwischen 1:35 und 1:90, vorzugsweise zwischen 1:40 und 1:80.

Mit der Wahl dieses Verhältnisses lässt sich auch die Borstenhärte (Elastizität) beeinflussen. So führt die Reduktion dieses Verhältnisses zu hartelastischeren Borsten. Eine Zahnbürste kann über gespritzte Borsten mit unterschiedlichen solchen Verhältnissen verfügen.

Der Verteilkanal für das Borstenmaterial der gespritzten Borsten kann sich auf der der freiliegenden Länge der gespritzten Borsten zugewandten Vorderseite des Borstenträgers befinden. Bevorzugt ist er jedoch auf der der freiliegenden Länge der gespritzten Borsten abgewandten Rückseite des Borstenträgers ausgebildet. In diesem Fall weist der Borstenträger vom Boden des Verteilkanals zur Vorderseite verlaufende Durchlässe für das Borstenmaterial auf.

In einer besonders bevorzugten Ausführungsform sind einem Durchlass des Borstenträgers mehrere gespritzte Borsten zugeordnet, insbesondere bilden 2 bis 15, vorzugweise 3 bis 10 Borsten ein einem Durchlass zugeordnetes Borstenbündel.

Besonders bevorzugt sind 4, 5, 6, 7, 8 oder 9 Borsten einem Borstenbündel zugeordnet. Die genannte Anzahl gespritzter Borsten werden vorzugsweise zu einem Borstenbündel auf einem kreisförmigen Durchlass zusammengefasst. Es können jedoch auch von den Durchlässen unabhängige Bündelgrössen gebildet werden.

Die einzelnen Borstenbündel mit gespritzten Borsten weisen einen minimalen Abstand auf. Dabei hat sich gezeigt, dass ein minimaler Abstand unter 2 mm, vorzugsweise ein Abstand von 0.1 bis 1.5 mm eine optimale Reinigungswirkung mit vorzüglicher Interdentalpenetration der gespritzten Borsten erlaubt.

Vorzugsweise sind auf einem Zahnbürstenkopf 20 bis 50 Borstenbündel vorhanden. Besonders bevorzugt sind 25 bis 45 Bündel mit gespritzten Borsten vorgesehen.

Eine erfindungsgemässe Zahnbürste mit gespritzten Borsten enthält für eine gute Reinigungswirkung zwischen 100 bis 500 gespritzte Borsten. Vorzugsweise sind 150 bis 300 gespritzte Borsten vorhanden.

Die zu einem Borstenbündel zusammengefassten gespritzten Borsten laufen vorzugsweise zu ihrem nutzungsseitigen Ende hin alle leicht zusammen, d.h. die Längsmittelachsen der einzelnen gespritzten Borsten haben eine leichte Neigung zur Längsmittelachse ihres Borstenbündels hin, ausser eine allenfalls mittig angeordnete Borste. Dieses 'Zusammenrücken' der Enden der gespritzten Borsten beeinflusst die Interdentalreinigung sehr positiv.

Bei der Ausführungsform der Zahnbürste, bei welcher der Verteilkanal auf der Rückseite des Borstenträgers ausgebildet ist, ist der Anspritzpunkt für das Borstenmaterial bevorzugt bezüglich der Durchlässe - auch bevorzugt in Längsrichtung der Zahnbürsteversetzt, d.h. dass sich der Anspritzpunkt nicht direkt gegenüber einem Durchlass befindet.

Noch bevorzugter wird der Anspritzpunkt in der Nähe des Randes des Borstenträgers, ausserhalb der Zone mit den Durchlässen positioniert.

Der Anspritzpunkt ist bevorzugt so angelegt, dass das Material nach dem Austritt aus der Düse zuerst auf Kunststoffmaterial des Borstenträgers beziehungsweise eines den Borstenträger bildenden Trägerplättchens trifft und nicht direkt auf einen Durchlass. Dadurch wird eine ausgeglichene Verteilung des Borstenmaterials in der Kavität erzielt und es werden ausgeglichenere Druckverhältnisse in den Borstenkavitäten (verglichen über alle Borstenkavitäten) geschaffen.

Der Querschnitt (Breite und Tiefe) der Verteilkanäle ist abhängig von der Anzahl der Durchlässe, des Abstandes der Durchlässe vom Anspritzpunkt bzw. vom maximalen Abstand eines Durchlasses vom Anspritzpunkt und dem Borstenmaterial.

In einer bevorzugten Ausführungsform der erfindungsgemässen Zahnbürste weist der Verteilkanal - gemessen von dessen Boden bis zur die Rückseite beziehungsweise Vorderseite des Borstenträgers bildenden Oberflächeeine Höhe von mindestens 0,5 mm auf. Vorzugsweise liegt diese Höhe zwischen 0,5 und 2 mm, insbesondere zwischen 0,7 und 1,5 mm.

Der Querschnitt des Verteilkanals entspricht vorzugsweise mindestens 35% des Querschnittes des grössten Durchlasses für das Borstenmaterial. Weiter bevorzugt entspricht der Querschnitt des Verteilkanals mindestens der Grundfläche der Borstenbündel, einer Borstenbasis.

In einer bevorzugten Weiterentwicklung ist am Borstenträger mindestens ein borstenloses weichelastisches Massage- und Reinigungselement angespritzt. Es steht auf derselben Seite vom Borstenträger ab, wie die gespritzten Borsten. Es kann auch ein borstenloses, weichelastisches Zungenreinigungselement vorhanden sein. Dieses befindet sich bevorzugt auf der den Borsten abgewandten Seite.

"Borstenlos" heisst, dass das weichelastische Massage- und Reinigungselement beziehungsweise Zungenreinigungselement keine gespritzten Borsten und keine extrudierten, konventionellen Borsten aufweist.

Das Material für das borstenlose, weichelastischen Massage- und Reinigungselement (es können mehrere vorhanden sein) kann entweder über Weichmaterial-Verteilkanäle oder auf andere Weise verteilt werden. Beispielsweise kann über die Borstenmaterial für die gespritzten Borsten enthaltenden Verteilkanäle eine flächige Abdeckung aus dem Material für das borstenlose, weichelastischen Massage- und Reinigungselement aufgespritzt werden.

Als Weichmaterial für derartige borstenlose, weichelastische Massage- und Reinigungselemente sowie borstenlose Zungenreinigungselemente eignen sich insbesondere thermoplastische Polyurethan-Elastomere (TPE-U), thermoplastische Styrol-Elastomere (TPE-S), wie beispielsweise ein Styrol-Ethylen-Butylen-Styrol-Copolymer (SEBS) oder Styrol-Butadien-Styrol-Copolymer (SBS), thermoplastische Polyamid-Elastomere (TPE-A), thermoplastische Polyolefin-Elastomere (TPE-O) und thermoplastische Polyester-Elastomere (TPE-E). Weiter können thermoplastisches Polyethlen (PE) und Polyurethan (PU) als Weichmaterial eingesetzt werden; diese können auch Einsatz als Hartmaterial finden. Bevorzugt wird TPE-S eingesetzt. Die Shore A Härten der Weichmaterialien liegen vorzugsweise unter 90 Shore A.

Die Shore Härte des Weichmaterials für das oder die borstenlosen, weichelastischen Massage- und Reinigungselemente ist tiefer, bevorzugt wesentlich tiefer als die Shore Härte des Borstenmaterials für die gespritzten Borsten.

Das Weichmaterial für die borstenlosen, weichelastischen Massage- und Reinigungselemente hat vorzugsweise eine Shore A Härte kleiner 40. Wird in einem Griffteil oder Halsteil eines Bürstenkörpers der Zahnbürste Weichmaterial verwendet, hat es dort vorzugsweise eine Shore A Härte kleiner 70. Generell beträgt über die gesamte Zahnbürste gesehen die Shore A Härte der Weichmaterialien weniger als 90.Borstenlose, weichelastische Massage- und Reinigungselemente können verschiedene Formen aufweisen. Beispielsweise können diese eine stammförmige nahezu zylindrische, segelartige, wellenförmige, kugelförmige, kegelförmige, sichelförmige, sternförmige oder tassenförmige Form aufweisen.

Vorzugsweise werden borstenlose, weichelastische Massage- und Reinigungselemente kürzer als gespritzte Borsten ausgestaltet; das heisst, dass sie weniger weit über den Borstenträger vorstehen als gespritzte Borsten.

Borstenlose, weichelastische Massage- und Reinigungselemente sind typischerweise wesentlich voluminöser als gespritzte Borsten. Aus diesem Grund werden für borstenlose, weichelastische Massage- und Reinigungselemente auch Materialien mit einer geringeren Shore Härte eingesetzt. Die gespritzten Borsten erhalten ihre Flexibilität über die lange, dünne Ausgestaltung.

Der Borstenträger kann einen, zwei oder auch mehr Verteilkanäle für Borstenmaterial aufweisen. In diesem Fall ist es möglich, dass pro Verteilkanal für Borstenmaterial ein unterschiedliches Borstenmaterial verwendet wird. Das Borstenmaterial kann sich in der Farbe, der Shore Härte und/oder anderen Eigenschaften, die mittels beigemischten (antibakteriellen -, oberflächenverändernden -, etc.) Masterbatch erzeugt werden, unterscheiden.

Weiter kann der Borstenträger einen (oder mehrere) Weichmaterial-Verteilkanal für das Weichmaterial für die weichelastischen Massage- und Reinigungselemente aufweisen.

Sind zwei oder mehr Weichmaterial-Verteilkanäle vorhanden, ist es möglich, dass pro Weichmaterial-Verteilkanal ein unterschiedliches Material verwendet wird. Das Weichmaterial für borstenlose, weichelastische Massage- und Reinigungselemente kann sich ebenfalls in der Farbe, der Shore Härte und/oder anderen Eigenschaften die mittels beigemischten (antibakteriellen -, oberflächenverändernden -, etc.) Masterbatch erzeugt werden, unterscheiden.

In einer weiteren bevorzugten Ausführungsform der erfindungsgemässen Zahnbürste ist im Borstenträger der Weichmaterial-Verteilkanal vom Verteilkanal für das Borstenmaterial getrennt. Das Borstenmaterial und das Weichmaterial berühren sich somit in dieser Ausführungsform nicht.

Die Verteilkanäle der unterschiedlichen Materialien werden vorzugsweise durch das Hartmaterial des Borstenträgers getrennt. Dies ermöglicht mittels des Spritzgussverfahrens auf einfache Art und Weise das gleichzeitige Herstellen einerseits von gespritzten Borsten aus Borstenmaterial sowie andererseits borstenlosen, weichelastischen Massage- und Reinigungselement gegebenenfalls zusammen mit einem borstenlosen Zungenreinigungselement über einen einzigen Anspritzpunkt für das Weichmaterial. Das borstenlose, weichelastische Massage- und Reinigungselement - beziehungsweise mehrere davon - und gegebenenfalls das borstenlose Zungenreinigungselement sind mit dem Weichmaterial im Weichmaterial-Verteilkanal integral, d.h. zusammenhängend ausgebildet.

In einer besonders bevorzugten Ausführungsform der erfindungsgemässen Zahnbürste weist der Borstenträger ein im Spritzgussverfahren hergestelltes Trägerplättchen auf ( Fig. 1 - 25 ). Die beschriebenen Eigenschaften für den Borstenträger gelten somit jeweils auch für das Trägerplättchen und umgekehrt. An diesem ist der Verteilkanal für das Borstenmaterial und sind gegebenenfalls die Durchlässe und der Weichmaterial-Verteilkanal ausgebildet. Das die gespritzten Borsten aus dem Borstenmaterial und gegebenenfalls die borstenlosen, weichelastischen Massage- und Reinigungselemente tragende Trägerplättchen ist an einem Bürstenkörper befestigt.

Bevorzugt weist der Bürstenkörper in einem Kopfbereich eine Trägerplättchen-Aufnahmeausnehmung auf, in welche das bestückte Trägerplättchen eingesetzt ist.

Bevorzugt ist das Trägerplättchen am Bürstenkörper mittels Ultraschallschweissen befestigt. Es sind jedoch auch andere Befestigungsarten möglich, wie Kleben, Einschnappen, Rasten oder Umspritzen im Spritzgussverfahren. Bei Letzterem kann das Trägerplättchen mit den gespritzten Borsten und gegebenenfalls mit den borstenlosen, weichelastischen Massage- und Reinigungselementen erneut in ein Spritzgusswerkzeug eingelegt werden; die Verbindung kann mittels Überspritzen des Bürstenkörpers und Trägerplättchens im ein-, zwei oder Mehrkomponentenverfahrens gebildet werden.

Es ich auch möglich, das in das Spritzgusswerkzeug erneut eingelegte Trägerplättchen mit den gespritzten Borsten und gegebenenfalls mit den borstenlosen, weichelastischen Massage- und Reinigungselementen zu Überspritzen und dabei den Bürstenkörper zu bilden.

Bei diesen beiden Ausgestaltungsvarianten kann das Trägerplättchen auch nur mit den gespritzten Borsten in das Spritzgusswerkzeug eingelegt werden. Zusätzliche borstenlose, weichelastische Massage- und Reinigungselemente oder borstenlose Zungenreinigungselemente aus Weichmaterial können dann beim Überspritzen gebildet werden.

Mit anderen Worten können in diesen Fällen Materialzonen aus Weichmaterial am Bürstengriff mit demselben Weichmaterial wie die borstenlosen, weichelastischen Massage- und Reinigungselemente oder Zungenreinigungselemente gebildet werden. Dabei können zusammenhängende Materialzonen ab einem einzigen Anspritzpunkt oder nicht zusammenhängende Materialzonen ab mehreren Anspritzpunkten zum Einsatz kommen.

Bei der erfindungsgemässen Bürste handelt es sich um eine Zahnbürste, beispielsweise eine manuelle Zahnbürste oder eine elektrische Zahnbürste. Im letztgenanntem Fall ist es möglich, dass es sich bei dem erfindungsgemäss ausgebildeten Teil um einen Aufsteckteil / Wechselteil handelt. Der in diesem Fall beweglich gelagerte Borstenträger kann unter anderem bei elektrischen Zahnbürsten mit oszillierender, schwenkender oder translatorischer Bewegung, für Vibrations- oder Schallzahnbürsten oder für elektrische Zahnbürsten mit kombinierten Bewegungen verwendet werden.

Aufgrund des tiefen Verschleisses und der hohen Interdentalwirkung der gespritzten Borsten können diese auf elektrischen Zahnbürsten mit hohen Bewegungsfrequenzen eingesetzt werden. Besonders geeignet sind gespritzte Borsten für Bewegungsfrequenzen des Borstenträgers von 6'000 bis 20'000, besonders bevorzugt 12'000 bis 18'000 schwenkende Bewegungen pro Minute und 8'000 bis 12'000 oszillierende Bewegungen pro Minute.

Um das Verletzungspotential am Zahnfleisch zu minimieren, wird ein Weg, den die nutzungsseitigen Enden der gespritzten Borsten zurücklegen, von weniger als 5 mm pro Richtung, vorzugsweise einen Weg von 0.5 - 4 mm pro Richtung angestrebt.

Die erfindungsgemässe Zahnbürste kann als Bürste zum einmaligen Gebrauch (Einwegzahnbürste) als auch als Bürste zum mehrmaligen Gebrauch (Mehrwegzahnbürste analog gängigen Zahnbürsten) ausgelegt sein. Weiter können erfindungsgemässe Borstenträger bzw. Trägerplättchen auf der Rückseite oder mittels eines Hohlraumes auch mit Geometrien für ein Wechselkopf-System an Zahnbürsten versehen sein und so als Wechselköpfe für manuelle oder elektrische Zahnbürsten dienen.

Die erfindungsgemässe Zahnbürste kann auch in einen Zungenreiniger integriert sein. Der Zungenreiniger ist in diesem Fall mit gespritzten Borsten ausgestattet, welche die Zungenoberfläche behandeln. Es ist auch möglich ein Zungenreiniger auf der Rückseite von Zahnbürsten mit erfindungsgemässen gespritzten Borsten auszugestalten.

Adaptiert können erfindungsgemässe Bürsten auch für interdentale Anwendungen konzipiert werden, als Interdentalbürsten.

Bei der erfindungsgemässen Bürste kann es sich an Stelle einer Zahnbürste auch um eine Bürste für die Körperpflege, insbesondere für die Kosmetik handeln, beispielsweise für eine Mascarabürste, einen Nagellackpinsel, eine Haarbürste oder um ein Haartönungsmittel-Auftragegerät.

Weiter ist es möglich, dass es sich bei der erfindungsgemässen Bürste um eine Haushaltsbürste, insbesondere Abwaschbürste, oder um einen Bodenwischer handelt. Erfindungsgemässe Bürsten sind auch als Applikatoren im Medizinalbereich denkbar.

Obwohl es grundsätzlich möglich ist, auch den Borstenträger selber aus dem Borstenmaterial herzustellen, sind jedoch bevorzugt die Materialien des Borstenträgers und das Borstenmaterial unterschiedlich. Bevorzugt besteht der Borstenträger aus einem Hartmaterial. Es ist jedoch auch möglich, dass er zusätzlich zum Hartmaterial ein Weichmaterial aufweist, beispielsweise um an gewünschten Stellen eine besonders hohe Flexibilität des Borstenträgers zu erreichen.

Im Fall eines Trägerplättchens ist es sinnvoll, dass das Hartmaterial des Trägerplättchens und das Hartmaterial des Bürstengriffs identisch oder zumindest affin sind. Dadurch wird gewährleistet, dass beim Verbinden des Bürstenkörpers mit dem Trägerplättchen mittels Schweissen oder Überspritzen ein Materialschluss entsteht.

Selbstverständlich können auch mehrere gleiche oder unterschiedliche Borstenträger wenigstens mit gespritzten Borsten auf der Zahnbürste eingesetzt werden. Dies macht insbesondere Sinn, wenn es sich beim Borstenträger um mehrere Trägerplättchen handelt.

Des Weiteren ist es möglich, den Borstenträger uneben auszugestalten. Der Borstenträger ist vorzugsweise eben, es ist aber auch möglich diesen mit Erhöhungen zu versehen, beispielsweise um verschieden lang freigestellte gespritzte Borsten oder borstenlose, weichelastische Massage- und Reinigungselemente zu gestalten.

Weiter ist es möglich, den Borstenträger beziehungsweise das Trägerplättchen nicht auf seiner gesamten Umfangslänge mit dem Bürstenkörper beziehungsweise dem Kopfteil des Bürstenkörpers zu verbinden und auch zu unterstützen. Beispielsweise kann der Borstenträger beziehungsweise das Trägerplättchen nur im hinteren und vorderen Teil mit dem Bürstenkörper verbunden und gestützt sein, um auf diese Weise eine grössere Flexibilität des Borstenträgers beziehungsweise des Trägerplättchens zu erreichen.

Beim Borstenmaterial handelt es sich bevorzugt um Polyamid-Elastomere, insbesondere um Grillflex ELG5930 von Ems-Chemie AG (Grillflex ist ein Markenzeichen der Ems-Chemie AG) oder Polyester-Elastomere, insbesondere Hytrel 7248 von DuPont, Riteflex 655, Riteflex 663, Riteflex 672 RF Nat, Riteflex 677 von Ticona Polymers oder Riteflex RKX 193 RF Nat von Ticona Polymers (Riteflex und Hytrel sind Markenzeichen von DuPont beziehungsweise Ticona Polymers). Das Borstenmaterial für die gespritzten Borsten weist bevorzugt eine Härte von 10 bis 100, vorzugsweise 30 bis 80 Shore D auf, besonders bevorzugt zwischen 50 - 80 Shore D.

Insbesondere für harte Borsten können auch Borstenmaterialien bis 120 Rockwell D eingesetzt werden. Dazu können auch die nachfolgenden, vorzugsweise für den Bürstenkörper und den Borstenträger beziehungsweise das Trägerplättchen eingesetzten Hartmaterialien berücksichtigt werden.

Als Hartmaterial für den Bürstenkörper und den Borstenträger beziehungsweise das Trägerplättchen sind folgende Thermoplaste besonders geeignet:
Styrolpolymerisate wie Styrolacrylinitril (SAN), Polystyrol (PS), Acrylinitrylbutadienstyrol (ABS), Styrolmethylmethacrylate (SMMA) oder Styrolbutadien (SB);
Polyolefine wie Polypropylen (PP) oder Polyethylen (PE) beispielsweise auch in den Formen high density Polyethylen (HDPE) oder low density Polyethylen (LDPE);
Polyester wie Polyethylenterephtalat (PET) in Form von säuremodifiziertem Polyethylenerephtalat (PETA) oder glykolmodifiziertem Polyethylenterephtalat (PETG), Polybutylenterephtalat (PBT), säuremodifiziertes Polycyclohexylenedimethyleneterephthalate (PCT-A) oder glykolmodifiziertes Polycyclohexylenedimethlyeneterphtalate (PCT-G);
Cellulosederivate wie Celluloseacetat (CA), Celluloseacetobutyrat (CAB), Cellulosepropionat (CP), Celluloseacetatphtalat (CAP) oder Cellulosebutyrat (CB);
Polyamide (PA) wie PA 6.6, PA 6.10 oder PA 6.12;
Polymethylmethacrylat (PMMA);
Polycarbonat (PC);
Polyoxymeethylen (POM);
Polyvinylchlorid (PVC);
Polyurethan (PUR)

Ganz besonders geeignet als Hartmaterial für den Bürstenkörper und den Borstenträger beziehungsweise das Trägerplättchen ist Polypropylen (PP) mit einem E-Modul von 1000 bis 2400 N/mm², vorzugsweise 1300 bis 1800 N/mm². Ein weiteres sehr bevorzugtes Hartmaterial ist Polybutylenterephtalat (PBT), wobei auch andere Materialien möglich sind. Die Materialwahl erfolgt in Abhängigkeit der benötigten Festigkeit der Kanalwände und der Böden der Verteilkanäle und gegebenenfalls Weichmaterial-Verteilkanäle des Borstenträgers beziehungsweise des Trägerplättchens.

Bei der Herstellung des Borstenträgers beziehungsweise des Trägerplättchens sowie des Bürstenkörpers bilden das Hartmaterial und das Weichmaterial vorzugsweise einen Materialschluss; dazu werden gleiche oder affine Materialien verwendet.

Je nach Materialkombination kann auch zwischen den Borstenmaterialien und den Hartmaterialien / Weichmaterialien ein Materialschluss passieren. Sind die Materialien jedoch nicht affin, das heisst es bildet sich kein Materialschluss, so können die Materialien beispielsweise mittels Kraftund Formschluss (mechanisch) miteinander verbunden sein. Dabei kann der Schwund des Borstenmaterials in den Verteilkanälen einen Kraft- und Formschluss erzeugen, der auch ohne Materialschluss eine zuverlässige Befestigung des Borstenmaterials am Borstenträger beziehungsweise Trägerplättchen gewährleistet.

Der Formschluss kann beispielsweise durch die Gestaltung der Kanalwände optimiert werden. Diese können Hinterschnitte aufweisen (was zu einer Zwangsentformung führen kann) und auf diese Weise eine Geometrie bilden, die eine verbesserten Formschluss des Borstenträgers beziehungsweise Trägerplättchens mit dem Material der gespritzten Borsten ermöglicht.

Weiter kann der Formschluss dadurch verbessert werden, dass sich der Durchlass in Richtung zur Vorderseite des Borstenträgers etwas (beispielsweise stufenartig) verbreitert beziehungsweise konisch öffnet. Auf diese Weise wird erreicht, dass das Trägerplättchen quasi umklammert wird.

Mittels Überspritzen des Borstenmaterial enthaltenden Verteilkanals mit einem Weich- oder Hartmaterial kann dieser auch verkapselt werden. Dabei geht das zu überspritzende Material vorzugsweise mit dem Borstenträger beziehungsweise dem Trägerplättchen einen Materialschluss ein. Dabei ist es auch möglich, das Weichmaterial nur auf der Rückseite des Borstenträgers anzubringen. Das Weichmaterial kann dabei beispielsweise beidseitig bis in die Seitenflächen des Borstenträgers ausgebildet werden.

Die Kanalwände der Verteilkanäle können innerhalb eines Trägerplättchens beziehungsweise Borstenträgers unterschiedlich hoch ausgebildet sein. Dabei ist es auch möglich, dass ein Verteilkanal für Borstenmaterial erst ausgebildet ist, wenn in vorgängigen Schritten bereits eine oder mehrere Borstenmaterialien verspritzt worden sind. Dies würde bedeuten, dass die Kanalwände durch das Material des Borstenträgers beziehungsweise des Trägerplättchens geformt sind und der Boden des Verteilkanals aus Borstenmaterial und beispielsweise tieferstehenden Kanalwänden besteht.

Kanalwände können grundsätzlich verschieden hoch vorstehen und mit weiteren Materialien (beispielsweise Borstenmaterial, Weichmaterial) mindestens teilweise überdeckt sein.

Eine weitere Ausführung sieht vor, dass die Zahnbürste einen im Spritzgiessverfahren hergestellten Borstenträger und eine an diesen im Spritzgussverfahren angespritzten Oberflächenschicht aus Borstenmaterial aufweist. Eine Vielzahl von gespritzten Borsten ist integral mit der Oberflächenschicht im Spritzgussverfahren ausgebildet.

Der Borstenträger trägt somit diese gespritzten Borsten indirekt über die Oberflächenschicht.

Es ist denkbar, dass alle gespritzten Borsten von der Oberflächenschicht abstehen.

Es ist jedoch auch möglich, dass die Vielzahl von gespritzten Borsten von der Oberflächenschicht abstehen und die übrigen gespritzten Borsten integral mit dem Borstenmaterial in einem Verteilkanal (oder mehreren Verteilkanälen), wie weiter oben beschrieben, ausgebildet sind.

Bevorzugt bilden jeweils eine Anzahl der von der Oberflächenschicht abstehenden gespritzten Borsten ein Borstenbündel.

2 bis 15 dieser gespritzten Borsten, bevorzugt 3 bis 10, bilden jeweils Borstenbündel.

Besonders bevorzugt bilden 4 bis 9 dieser gespritzten Borsten jeweils ein Borstenbündel.

Bevorzugt sind 10 bis 40, insbesondere 15 bis 30, Borstenbündel integral mit der Oberflächenschicht ausgebildet und stehen von dieser ab.

Die weitere Ausführungsform sieht somit vor, dass die Materialverteilung im Kopfteil nicht ausschliesslich über Kanäle erfolgt, sondern auch flächig sein kann. Dabei wird wiederum im Kopfteil der Handzahnbürste Borstenmaterial eingebracht, beispielsweise über einen Anspritzpunkt im Griffteil der Handzahnbürste und einen Zuführkanal zum Kopfteil oder direkt durch einen Anspritzpunkt im Kopfteil. Nachdem das Borstenmaterial das Kopfteil erreicht hat, verteilt es sich flächig und bildet die Borsten aus.

Dabei wird bevorzugt das Borstenmaterial nicht für alle Borstenbündel durch den Borstenträger bzw. das Trägerplättchen hindurchgeführt bevor es die Borsten formt, sondern mit dem Borstenmaterial wird gleichzeitig auch ein Teil der Oberfläche zwischen den Borstenbündeln geformt. Einzelne Borstenbündel aus gespritzten Borsten werden bei dieser Ausgestaltungsvariante direkt aus der aus Borstenmaterial gebildeten Oberfläche des Borstenträgers geformt und stehen von diesen ab.

Vorzugsweise verteilt sich das Borstenmaterial so, dass es mit dem Material des Bürstenkörpers einen Formschluss eingeht. Der Formschluss kann auf verschiedene Arten passieren, beispielsweise dadurch, dass der Bürstenkörper durchdrungen wird und sich das Borstenmaterial vor und nach der Durchdringung breiter als die Durchdringung ausbreitet, oder, dass der Bürstenkörper von aussen oder durch Durchbrüche hindurch umschlungen wird. Wenn es sich um affine Materialien handelt, können das Borstenmaterial und das Material des Bürstenkörpers einen Materialschluss ausbilden.

Der Formschluss zwischen den Materialien bringt mit sich, dass das Borstenmaterial Anteile auf verschiedenen Oberflächen der Handzahnbürste einnimmt. Aufgrund der gespritzten Borsten wird die Vorderseite des Borstenträgers bzw. Trägerplättchens mindestens teilweise mit Borstenmaterial versehen.

Je nach Formschluss-Ausgestaltung ist das Borstenmaterial auch auf den Seitenflächen des Kopfteils oder auf der Rückseite des Kopfteils angebracht.

Weiter können die gespritzten Borsten der vorher genannten Ausführungsform mit gespritzten Borsten kombiniert werden, die mindestens teilweise durch Verteilkanäle gefüllt werden und Durchbrüche durchstossen, in welchen jeweils nur ein Borstenbündel verankert ist.

Des Weiteren können in der vorher genannten Ausführungsform borstenlose, weichelastische Massage- und Reinigungselemente angebracht werden. Beispielsweise im oder um das Borstenfeld. Diese sind geformt durch ein Weichmaterial. Dieses kann gewisse Stellen des Borstenmaterials überdecken oder komplett von diesem getrennt sein.

Es können auch bei dieser Ausgestaltungsvariante zusätzlich im Borstenträger, bzw. im Trägerplättchen konventionelle, extrudierte Borsten gemäss den offenbarten Ausgestaltungsvarianten eingesetzt werden.

Beim Verfahren zum Herstellen einer erfindungsgemässen Zahnbürste wird im Spritzgussverfahren ein Borstenträger beziehungsweise ein Trägerplättchen hergestellt und dabei mindestens der eine Verteilkanal für das Borstenmaterial ausgebildet. Weiter werden ebenfalls im Spritzgussverfahren die, einen Borstenstamm aufweisenden gespritzten Borsten integral mit dem Borstenmaterial im Verteilkanal ausgebildet.

Besonders bevorzugt wird das Borstenmaterial in den Verteilkanal eingespritzt. Es kann pro Verteilkanal ein Borstenmaterial verteilt werden.

In bevorzugter Art und Weise werden im Spritzgussverfahren ein Trägerplättchen mit dem Verteilkanal als Borstenträger und die gespritzten Borsten hergestellt. Dazu eignet sich insbesondere das Zweioder Mehrkomponenten-Spritzgussverfahren. Das auf diese Art und Weise mit Borsten versehene Trägerplättchen wird dann an einem Bürstenkörper befestigt, vorzugsweise mittels Ultraschallschweissen oder Überspritzen mit der Hartkomponente und/oder Weichkomponente des Bürstenkörpers.

Der Bürstenkörper wird bevorzugt ebenfalls im Spritzgussverfahren hergestellt.

Besonders bevorzugt wird für die Herstellung des Bürstenkörpers, mindestens im Bereich, welcher mit dem Trägerplättchen zusammenwirkt, dasselbe oder ein affines Material verwendet, wie für die Herstellung des Trägerplättchens, um bei der Verbindung mittels Überspritzen oder Schweissen einen Materialschluss zu erzielen. Es ist jedoch auch die Verwendung unterschiedlicher Materialen möglich.

Eine besonders einfache Herstellung ergibt sich, wenn im Spritzgussverfahren der Bürstenkörper mit dem Verteilkanal hergestellt und zur Herstellung der gespritzten Borsten das Borstenmaterial in den Verteilkanal des Bürstenkörpers eingespritzt wird. Der Bürstenkörper weist dabei mindestens einen Kopfteil auf, welcher die gespritzten Borsten trägt, somit den Borstenträger bildet. Bevorzugt ist jedoch der Bürstenkörper auch mit einem Griffteil versehen, welcher integral mit dem Kopfteil ausgebildet ist. Im Fall einer Zahnbürste, weist der Bürstenkörper bevorzugt zwischen dem Griffteil und dem Kopfteil einen Halsteil auf.

Die vorliegende Erfindung betrifft somit auch eine Zahnbürste mit einem im Spritzgussverfahren hergestellten Bürstenkörper, an welchem im Kopfteil der Verteilkanal für das Borstenmaterial angeformt ist, so dass der Bürstenkörper den Borstenträger bildet.

Der Bürstenkörper selber kann im Zwei- oder Mehrkomponenten-Spritzgussverfahren hergestellt werden. Es können dabei unterschiedliche Hartmaterialien oder auch Hart- und Weichmaterialien in bekannter Art und Weise verwendet werden.

An dieser Stelle sei erwähnt, dass der Verteilkanal für das Borstenmaterial sich vom Kopfteil in den Halsteil oder Griffteil hinein erstrecken kann. Der Anspritzpunkt für das Borstenmaterial muss sich dann nicht im Kopfteil befinden sondern kann sich im Halsteil oder Griffteil befinden.

Der Bürstenkörper kann mit einem Anspritzkanal, vorzugsweise ausserhalb des Kopfteils, versehen sein, welcher über einen, vorzugsweise ins Innere des Bürstenkörpers verlaufenden Anspritzdurchlass mit dem Verteilkanal verbunden ist.

Die Herstellung der Zahnbürste kann in einer Herstellvariante in einem Würfelwerkzeug passieren. Im Werkzeug sind vier Stationen integriert, die die Formung und Bearbeitung der Zahnbürste ermöglichen. In einer ersten Station wird der Grundkörper, bestehend aus dem Bürstenkörper mit dem Griffteil, dem Halsteil und dem Kopfteil aus Hartmaterial hergestellt. Eine zweite Station dient der Kühlung des Grundkörpers oder auch einer weiteren Bearbeitung des Grundkörpers, während nachfolgend in der dritten Station die weiteren Spritzguss-Materialien an den Grundkörper angebracht werden, beispielsweise Materialien für die Formung der gespritzten Borsten aus Borstenmaterial und/oder borstenlosen, weichelastischen Massage- und Reinigungselemente. In der vierten Station ist es so, dass das Produkt entnommen wird.

Die rationelle Herstellung kann durch die direkte oder indirekte Verknüpfung der nachfolgenden Prozesse mit dem Spritzgiessprozess erfolgen. Dabei werden die im Spritzgiessprozess hergestellten Zahnbürsten nicht aus dem Herstellprozess entfernt, sondern direkt oder indirekt weiterverarbeitet. Mit indirekt ist dabei nicht das Entfernen aus dem Prozess gemeint, sondern beispielsweise das Puffern.

Vom Spritzgiessen zum Verpacken kann der Weg der Zahnbürste mit verschiedenen weiteren Bearbeitungsprozessen versehen sein. Beispiele für solche Bearbeitungsprozesse sind Prägen (Kennzeichnen oder Dekorieren, Versehen mit der Lotnummer etc.). Es können aber auch Pufferstationen im Prozess integriert sein, damit eine gewisse Entkoppelung der Prozessschritte erfolgen kann und die Schritte eine gewisse Unabhängigkeit erhalten.

Das Verpacken erfolgt am Schluss der Herstellkette. Dabei wird das Produkt mit einer Verpackung umhüllt. Beispiele dafür sind Blisterverpackungen, Beutelverpackungen etc.

Die Vorrichtung zur Herstellung erfindungsgemässer Bürsten, insbesondere Zahnbürsten, ist auch für die Durchführung des erfindungsgemässen Verfahrens geeignet. Sie weist ein Spritzgusswerkzeug mit einer Trägerkavität auf, welche dazu bestimmt ist, einen Borstenträger aufzunehmen. Weiter weist das Werkzeug einen ersten und einen zweiten Werkzeugeinsatz auf.

Der erste Werkzeugeinsatz ist mit wenigstens einer durchgehenden Borstenkavität für die Ausbildung des Borstenstamms der Borste versehen. Diese Borstenkavität steht mit der Trägerkavität in Strömungsverbindung, d.h. sie schliesst an diese an und lässt einen Materialfluss zwischen der Trägerkavität und der Borstenkavität zu.

Der zweite Werkzeugeinsatz dient der Ausbildung des nutzungsseitigen Endes des Borstenstamms beziehungsweise des nutzungsseitigen Endbereichs der gespritzten Borste, insbesondere der Borstenkappe. Bei dieser Alternative weist der zweite Werkzeugeinsatz eine, vorzugsweise geschlossene und nur zur Borstenkavität hin offene Kappenkavität auf.

Diese Ausführungsform des Spritzgusswerkzeugs ermöglicht die Verwendung von unterschiedlichen jeweils besonders geeigneten Stählen. Insbesondere ermöglicht die einstückige, separate Ausbildung des ersten Werkzeugeinsatzes die im Verhältnis zu ihrer Länge sehr dünne Herstellung der Borstenkavität, beispielsweise mittels Laserschneiden und Drahterodieren. Weiter kann für den zweiten Werkzeugeinsatz ein gegenüber dem ersten Werkzeugeinsatz anderes, insbesondere günstigeres oder optimiertes Material verwendet werden.

Wie in Spritzgusswerkzeugen üblich, liegen der erste und der zweite Werkzeugeinsatz für das Borstenmaterial dichtend aneinander an. Der äusserst geringe Spalt kann jedoch der Entlüftung der Borstenkavität und der Kappenkavität dienen. Es können auch poröse Werkzeugeinsätze verwendet werden, welche erlauben, dass die Luft durch den Werkzeugeinsatz entweichen kann.

Da die Borstenkavität und die Kappenkavität einen sehr kleinen Durchmesser aufweisen, müssen der erste und der zweite Werkzeugeinsatz genau aufeinander ausgerichtet sein. Dies wird in bevorzugter Weise mittels eines Blocks, beispielsweise aus Werkzeugstahl, erzielt, welcher eine Führungsausnehmung für die gemeinsame Aufnahme des ersten und des zweiten Werkzeugeinsatzes aufweist. Insbesondere erfolgt die Ausrichtung dieser beiden Werkzeugeinsätze mittels einer Mehrkant-Kontur, insbesondere einer Vierkant-Kontur.

Bevorzugt ist der erste Werkzeugeinsatz aus einem pulvermetallurgischen Stahl hergestellt.

Die Fertigungsverfahren der Pulvermetallurgie sind gekennzeichnet durch die mechanische Verdichtung von Metallpulvern in Formwerkzeugen oder Pressen und gleichzeitiges oder anschließendes Sintern des "Grünlings" bei hohen Temperaturen oder Warmwalzen zu einem Block. Beispielsweise eignet sich der pulvermetallurgische Stahl Microclean M390 der Firma Böhler Edelstahl GmbH & Co. KG (Microclean ist ein Markenzeichen von Böhler Edelstahl GmbH & Co. KG). Bevorzugt wird dieser spezielle pulvermetallurgische Stahl aufgrund der sehr geringen Dimensionen des mittels Laserschneiden zu erstellenden Startlochs fürs Drahterodieren gewählt. Die minimierte Anzahl Materialeinschlüsse, die Korngrössen im Stahl und der regelmässige Gefügeaufbau sind bei solchen Stählen optimiert. Dadurch wird ermöglicht, dass der sehr feine Laserstrahl das Material über die im Verhältnis zum Durchmesser sehr grosse Länge durchdringen kann. Dieser Prozess ist sehr stabil bzw. reproduzierbar, weil eben dieser pulvermetallurgische Stahl verwendet wird. Weiter muss der Stahl auch noch gehärtet und rostbeständig sein.

Die Oberflächen der Borstenkavitäten und Kappenkavitäten werden aufgrund der geringen Dimensionen vorzugsweise nicht oberflächenbehandelt, dagegen ist die Oberflächengüte bzw. die Oberflächenrauheit klar vorgegeben, damit schlussendlich ein stabiler Spritzgussprozess erreicht werden kann, dass eben die Entformung der Borsten funktioniert und diese nicht hängen bleiben. Der Ra-Wert der Oberfläche liegt im Bereich von 0,06 bis 0,12 vorzugsweise 0,07 und 0,1. Bei den vorgegebenen Entformungskonizitäten für die gespritzten Borsten funktionieren Ra-Werte von 0,6 beispielsweise bereits nicht mehr.

Bevorzugt weist der erste Werkzeugeinsatz mehrere Borstenkavitäten und der zweite Werkzeugeinsatz mehrere Kappenkavitäten auf. Insbesondere entspricht die Anzahl der Borstenkavitäten der Anzahl der gespritzten Borsten für ein Borstenbündel, wie weiter oben erwähnt; die Anzahl der Borstenkavitäten ist gleich oder grösser als die Anzahl der gespritzten Borsten für ein Borstenbündel.

Die im Spritzgussverfahren angewendeten Spritzdrücke bewegen sich in einem hohen Bereich. Der Spritzdruck für die Herstellung der Borsten erster und zweiter Art liegt höher als 800 bar, vorzugsweise zwischen 1200 bar und 2000 bar, vorzugsweise aber tiefer als 2200 bar.

Bevorzugt beträgt der Durchmesser der im Spritzgussverfahren hergestellten gespritzten Borsten beim borstenträgerseitigen Ende 0,5 bis 1 mm, bevorzugt 0,75 mm bis 0,9 mm. Der Durchmesser des Borstenstamms beim dessen nutzungsseitigen Ende beträgt 0,05 mm bis 0,4 mm, vorzugsweise 0,15 mm bis 0,35 mm.

Der Durchmesser des Borstenstamms nimmt von dessen borstenträgerseitigen Ende bis dessen nutzungsseitigen Ende vorzugsweise kontinuierlich ab. Die gespritzten Borsten haben somit, abgesehen vom speziell geformten nutzungsseitigen Endbereich der gespritzten Borsten, eine kegelförmige Form.

Bevorzugt ist der Querschnitt der gespritzten Borsten kreisrund. Er kann jedoch auch elliptisch, sternförmig oder mehreckig ausgebildet sein, im Prinzip kann er eine beliebige geschlossene Kontur einnehmen. Überdies ist ein Wechsel der Form über die Länge der gespritzten Borsten möglich. Die Limitierung hierbei sind die Möglichkeiten der Entformung beziehungsweise jene der Zwangsentformung.

Die Borstenkappe beziehungsweise der speziell geformte nutzungsseitige Endbereich der gespritzten Borste selber kann kegelförmig, halbkugelförmig oder mit gerundetem Übergang zur Mantelfläche des Borstenstammes ausgebildet sein. Überdies ist es möglich, den freien Endbereich der gespritzten Borsten aufzuteilen und so eine gespritzte Borste mit mehreren Enden zu formen.

Es ist auch möglich, das freie Ende der gespritzten Borste durch das flache Ende des Borstenstamms mit scharfkantigem Übergang zur Mantelfläche des Borstenstamms auszubilden.

Die Geometrie der gespritzten Borsten ist so ausgelegt, dass sie sich über die Länge auf ihr freies Ende zu verjüngt. Die Entformbarkeit ist ein zu berücksichtigender Faktor; weiter dringen gespritzte Borsten, welche sich gegen ihr freies Ende hin verjüngen, besser in die Zahnzwischenräume ein. Dies analog zu extrudierten, konventionellen zugespitzten Borsten.

Auf diese Weise kann die gespritzte Borste die Form eines stumpfen Kegels oder einer Pyramide erhalten, mit den oben erwähnten Möglichkeiten für den Endbereich, wobei die gestalteten und angegebenen Konizitäten sehr gering sind und vom Konsumenten kaum wahrgenommen werden. Es ist aber nicht ausgeschlossen, grössere Konizitäten zu gestalten, die schlussendlich auch sichtbar sind.

Werden als Borstenträger Trägerplättchen verwendet, beträgt deren Gesamtdicke vorzugsweise zwischen 0,7 mm bis 2.0 mm, insbesondere 1,2 mm bis 1,6 mm.

Die Wanddicke des Trägerplättchens im Bereich der Verteilkanäle, beispielsweise gemessen zwischen dem Boden des Verteilkanals bis zur Vorderseite des Trägerplättchens, beträgt vorzugsweise mindestens 0,3 mm bis 1,2 mm, insbesondere 0,7 mm bis 1 mm.

Es ist auch möglich, mit einem Spritzgusswerkzeug mittels des ersten und zweiten Werkzeugeinsatzes sogenannte Einzelbündel von gespritzten Borsten herzustellen.

Die separaten Einzelbündel weisen einen Bündelstamm auf, von dem eine Anzahl gespritzter Borsten abstehen, beispielsweise 2 bis 15, insbesondere 3 bis 10. Die im Zusammenhang mit den Borstenbündeln angegebene Anzahl Borsten trifft bevorzugt auch für die Einzelbündel zu.

Bevorzugt beginnt die freiliegende Länge der Borsten mit ihrem Austritt aus dem Borstenträger, so dass sich beim Vorhandensein von Durchlässen im Borstenträger im Bereich der Durchlässe eine Borstenbasis bildet, in welcher die gespritzten Borsten integral miteinander verbunden sind.

Alternativ kann die Borstenbasis auch über den Borstenträger vorstehend ausgestaltet sein. Dies führt dazu, dass die freiliegende Länge der gespritzten Borsten erst in einer Entfernung zum Borstenträger beginnt. Diese Entfernung kann bis zu 5 mm betragen. Damit kann ebenfalls die Härte/Elastizität der gespritzten Borsten eingestellt werden.

Bevorzugt weist die Borstenbasis, und weisen somit die Durchlässe, einen Durchmesser von 1,5 mm bis 3,5 mm, vorzugsweise 1,9 mm bis 2,6 mm auf. Dieselben Abmessungen können auch für den Bündelstamm gelten.

Alternativ können mehrere Borstenbasen zusammen eine gemeinsame Zone bilden, welche in einem einzelnen Durchlass eingelegt ist. Diese Ausgestaltungsvariante hat den Vorteil, dass die gespritzten Borsten dieser Zone flexibler aufgehängt sind und sich die gemeinsame Borstenbasis gegenüber dem Borstenträger entsprechend deformieren kann.

In einer weiteren Ausgestaltungsform können mehrere Borstenbündel auch aus einer flächigen Zone, bestehend aus Borstenmaterial, abstehen. Diese Ausgestaltungsvariante hat den Vorteil, dass die gespritzten Borsten keine Durchlässe durch das Hartmaterial des Borstenträgers, bezw des Trägerplättchens benötigen. An dieser Stelle sei erwähnt, dass der Borstenträger zusätzlich zu den im Spritzgussverfahren hergestellten gespritzten Borsten auch mit extrudierten, konventionellen Borsten bestückt sein kann, beispielsweise im AFT-Verfahren (Anchor Free Tufting). Dabei wird, wie oben beschrieben, vorab der Borstenträger beziehungsweise das Trägerplättchen mit gespritzten Borsten und gegebenenfalls borstenlosen, weichelastischen Reinigungs- und Massageelementen versehen. Dabei werden jedoch einige (durchgehende), für die konventionellen Borsten bestimmte Durchlässe offen gelassen. Anschliessend werden die extrudierten, konventionellen Borsten durch diese Durchlässe hindurch geführt und dann auf der Rückseite des Borstenträgers beziehungsweise des Trägerplättchens an ihren der Nutzungsseite abgewandten Enden aufgeschmolzen. Damit wird ein am Borstenträger beziehungsweise Trägerplättchen haftender Schmelzteppich zur Befestigung der extrudierten, konventionellen Borsten gebildet. Dieser Schmelzteppich kann die Zuführkanäle des Borstenmaterials für die gespritzten Borsten mindestens teilweise überdecken.

Beim Bestücken des Borstenträgers beziehungsweise Trägerplättchens mit extrudierten, konventionellen Borsten mittels Ankerstanzen werden, anstatt der erwähnten durchgängigen Durchlässe, Sacklöcher im Borstenträger beziehungsweise Trägerplättchen ausgebildet, welche mittels Ankerstanzen mit den konventionellen Borsten bestückt werden. Wie beim AFT Verfahren wird vorher der Borstenträger beziehungsweise das Trägerplättchen mit gespritzten Borsten und gegebenenfalls borstenlosen, weichelastischen Reinigungs- und Massageelementen versehen.

Beim In Mould Verfahren (IAP oder IMT) werden, im Unterschied zum AFT oder Ankerstanzen, die extrudierten, konventionellen Borsten im Spritzgusswerkzeug mit dem Hart- und/oder Weichmaterial des Borstenträgers an ihren, dem nutzungsseitigen Ende abgewandten Enden zur Verankerung am Borstenträger umspritzt. Anschliessend wird der Borstenträger beziehungsweise das Trägerplättchen, wie vorab beschrieben, mit gespritzten Borsten und gegebenenfalls Weichelastischen Reinigungsund Massageelementen versehen.

Die extrudierten, konventionellen Borsten können zylindrisch oder zugespitzt ausgestaltet sein. Hergestellt sind diese Borsten vorzugsweise aus Polyamid (PA) oder Polyester (PBT). Der zylindrische Teil dieser Borsten weist einen Durchmesser von 0.1 bis 0.3 mm, vorzugsweise 0.15 bis 0.225 mm auf. Diese extrudierten, konventionellen Borsten werden ebenfalls vorzugsweise in weiteren Borstenbündeln eingesetzt.

Pro weiterem Borstenbündel mit extrudierten, konventionellen Borsten werden rund 20 bis 300 nutzungsseitige Borstenenden eingesetzt. Die Anzahl Borsten eines weiteren Borstenbündels mit extrudierten, konventionellen Borsten sind somit wesentlich höher als die Anzahl Borstenenden eines Borstenbündels mit gespritzten Borsten. Das Verhältnis der Anzahl ist zwischen 1:2 bis 1:40, vorzugsweise 1:2 bis 1:10. Extrudierte, konventionelle Borsten sind mit Vorteil länger als gespritzte Borsten.

Mit Vorteil wechseln sich Zonen mit Borstenbündeln aus gespritzten Borsten und Zonen mit weiteren Borstenbündeln aus extrudierten, konventionellen Borsten ab. Beispielsweise können dies alternierende Reihen in Längs- oder Querrichtung sein.

Optional können weitere Borstenbündel, die nicht senkrecht zur Oberfläche des Borstenträgers stehen, aus extrudierten, konventionellen Borsten gebildet werden. Beispielsweise können solche weitere Borstenbündel eine sogenannte X Stellung bilden oder seitlich über den Bürstenkopf abstehen. Dies ist zwar auch mit gespritzten Borsten machbar, jedoch aufwendiger in der Herstellung.

Des Weitern können Zonen mit Borstenbündel aus gespritzten Borsten von borstenlosen, weichelastischen Reinigungs- und Massageelementen umgeben sein.

Es ist auch möglich, die borstenlosen, weichelastischen Massage- und Reinigungselemente nicht am Borstenträger anzuspritzen, sondern diese in den Borstenträger mittels Kraft- und oder Formschluss beweglich oder unbeweglich einzusetzen, beispielsweise mittels einer Schnapp oder Schweissverbindung.

Es sei auch erwähnt, dass als Borstenmaterial, Hartmaterial und/oder Weichmaterial wasserlösliche, spritzbare Polymere verwendet werden können. In diese können Wirksubstanzen eingelagert sein, welche bei der Verwendung der Bürste im Kontakt mit Wasser, insbesondere bei Zahnbürsten, freigegeben werden. Weiter ist es möglich Elemente mit den wasserlöslichen, spritzbaren Polymeren zu gestalten, welche anschliessend im Kopfteil der Zahnbürste montiert werden.

Die freiliegende Länge der gespritzten Borsten beträgt vorzugsweise 4 mm bis 16 mm, insbesondere 8 mm bis 12 mm, dies insbesondere bei Zahnbürsten.

Erfindungsgemäß weisen die gespritzten Borsten, insbesondere für die problemlose Entformung, einen minimalen Konuswinkel von 0,5° bis 5°, bevorzugt 0.8° bis 2°, besonders bevorzugt 0.8°bis 1.5° auf.

Dem Borstenmaterial und auch dem Weichmaterial können Mittel beigefügt werden, welche den Entformungsprozess der gespritzten Elemente unterstützen, sogenannte Entformungshilfen. Diese Mittel werden vorzugsweise mittels Masterbatch dem Granulat beigemischt.

Weiter ist es auch möglich, das Spritzgusswerkzeug beziehungsweise dessen Kavitäten regelmässig mit Gleitmittel zu behandeln, um die Entformung zu verbessern.

Aus den angegebenen Dimensionen für die gespritzten Borsten ergeben sich auch die entsprechenden Abmessungen für das Spritzgusswerkzeug beziehungsweise die ersten und zweiten Werkzeugeinsätze.

Separat hergestellte Einzelbündel können auch durch Einsetzen des Bündelstammes in entsprechende Ausnehmungen am Borstenträger befestigt werden, oder mit dem Material für den Borstenträger umspritzt werden.

Weitere, weniger bevorzugte Ausgestaltungsvarianten für Bürsten mit gespritzten Borsten der genannten Art variieren beispielsweise in der Anzahl gespritzter Borsten pro Borstenbündel.

So ist es möglich, einen Borstenteppich zu formen, in welchem 35 oder mehr gespritzte Borsten integriert sind. Die Borsten stehen hierbei vorzugsweise eine an der anderen an. Die Anwendung dieser Borstenteppiche auf Zahnbürsten bringt den Nachteil, dass die Interdentalwirkung der Zahnbürste schlechter wird.

Flächenbündel mit 13 bis 35 gespritzten Borsten, vorzugsweise 16 bis 28 gespritzten Borsten, können eingesetzt werden, um Borstenbündel zu gestalten, die den im AFT-Verfahren hergestellten Bürsten sehr ähnlich sind. Die gespritzten Borsten stehen wiederum vorzugsweise eine an der anderen an. Die Grundfläche der gespritzten Borsten ist geometrisch offen.

Generell ist es so, dass durch den Aufbau einer Zahnbürste mit Verteilkanälen und Durchlässen und dem entsprechenden Aufbau des Spritzgusswerkzeugs eine grosse Variantenvielfalt erreichen kann. Mit einer Ausgestaltung des Borstenträgers beziehungsweise Trägerplättchens können diverse Borstenfeldkonfigurationen geschaffen werden. Denn die einzelnen ersten und zweiten Werkzeugeinsätze sind bevorzugt einfach austauschbar. Auf diese Weise können rasch andere Borstenformen oder weichelastische Massage- und Reinigungselemente auf einem Borstenträger beziehungsweise Trägerplättchen erzeugt werden; dazu sind bevorzugt die Durchlässe am selben Ort positioniert und weisen diese dieselben Grössen auf. So können in einer Ausgestaltung gespritzte Borsten an den Durchlässen eines Verteilkanals ausgeformt sein und in der anderen Ausgestaltung weichelastische Massage- und Reinigungselemente.

Die Austauschbarkeit in kleiner Grösse bringt zudem Vorteile in Bezug auf die Herstellung beziehungsweise die Fehlerkosten. Die Herstellung der ersten Werkzeugeinsätze beziehungsweise der Borstenkavitäten ist technisch sehr anspruchsvoll. Kleinste Partikel im Material, aus welchem der Einsatz geschaffen werden soll, können einen Fehler im Prozess beziehungsweise im Arbeitsresultat bringen. Fehler im Bereich der Borstenkavitäten führen dazu, dass die entsprechenden Kavitäten vielfach nicht tolerierbare Fehler auf dem Produkt bringen.

Die Kombination eines nicht ebenen Trägerplättchens zusammen mit einem in einem Winkel angeordneten Werkzeugeinsatzpaar (erste und zweiter Werkzeugeinsatz) ermöglicht die Formung von Borstenbündeln, die in einem Winkel zur Entformungsrichtung bzw. Öffnungsrichtung des Spritzgusswerkzeugs stehen. Diese Werkzeugeinsätze werden entweder vor dem kompletten Entformen des Borstenfeldes so bewegt, dass dabei die gespritzten Borsten entformt werden, oder sie sind in einem Winkel angeordnet, der eine Zwangsentformung zulässt. Auf diese Weise können X-förmig, V-förmige oder seitlich abstehend angeordnete Borstenbündel mit gespritzten Borsten oder vom Borstenfeld nicht senkrecht abstehende Borstenbündel mit gespritzten Borsten geschaffen werden.

Die Anwendungsmöglichkeiten öffnen sich durch diese mögliche Variante, sie sind durch die Spritzgussmöglichkeiten begrenzt.

Alternativ zur Zwangsentformung können die Werkzeugeinsätze für die gespritzten Borsten auch beweglich ausgestaltet sein um die Schrägstellung der Borstenbündel zu erreichen.

Die Ausgestaltung der Zahnbürste bzw. die Anordnung der Borstenbündel und der borstenlosen, weichelastischen Massage- und Reinigungselemente kann auf dem Kopfteil symmetrisch oder asymmetrisch in Bezug auf die Längsachse und die Mittelquerachse des Borstenfeldes erfolgen.

Für die Anordnung der Borstenbündel existieren verschiedene Randbedingungen. Der Randabstand der Borstenbündel beträgt bevorzugt mindestens so viel wie die Breite einer Kanalwand. Der Abstand zwischen einzelnen Borstenbündeln auf der Bürste ist aufgrund der Geometrien im Spritzgusswerkzeug gegeben und beträgt bevorzug zwischen 0.4 mm und 0.8 mm vorzugsweise zwischen 0.4 mm und 0.6 mm.

Im vorliegenden Zusammenhang werden unter "gespritzten Borsten" solche verstanden, welche im Herstellungsprozess der Zahnbürste mittels Spritzgiessen aus Borstenmaterial hergestellt werden. Mit "extrudierten, konventionellen Borsten" sind solche gemeint, welche losgelöst vom Herstellungsprozess der Zahnbürste in bekannter Art und Weise im Extruditionsverfahren hergestellt werden und dann, im Herstellungsprozess der Zahnbürste, am Borstenträger mittels Ankerstangen oder im AFT- oder IMT-Verfahren befestigt werden. "Weichelastische Massage- und Reinigungselemente" sowie "Zungenreiniger" sind weder gespritzte Borsten noch extrudierte, konventionelle Borsten; sie dienen einem anderen Zweck als die genannten Borsten.

Die vorliegende Erfindung wird an Hand in der Zeichnung dargestellten Ausführungsbeispielen näher erläutert. Es zeigen rein schematisch:
- Fig. 1: in perspektivischer Ansicht eine erfindungsgemässe Zahnbürste mit gespritzten Borsten und weichelastischen Massage- und Reinigungselementen;
- Fig. 2: in Draufsicht ein Trägerplättchen für gespritzte Borsten und weichelastische Massage- und Reinigungselemente für die Zahnbürste gemäss Fig. 1;
- Fig. 3: in perspektivischer schräger Draufsicht das Trägerplättchen aus Fig. 2;
- Fig. 4: in Untersicht das Trägerplättchen aus Fig. 2;
- Fig. 5: in perspektivischer schräger Untersicht das Trägerplättchen aus Fig. 2;
- Fig. 6: das Trägerplättchen in einem Längsschnitt entlang der Linie VI-VI der Figur 2;
- Fig. 7: das Trägerplättchen in einem Querschnitt entlang der Linie VII-VII der Figur 2;
- Fig. 8: in Draufsicht das Trägerplättchen mit gespritzten Borsten erster Art;
- Fig. 9: in gleicher Darstellung wie Fig. 3 das Trägerplättchen mit den gespritzten Borsten erster Art aus Fig. 8;
- Fig. 10: das mit den gespritzten Borsten erster Art versehene Trägerplättchen aus Fig. 8 in Untersicht mit dem betreffenden mit Borstenmaterial ausgefüllten Verteilkanal;
- Fig. 11: in gleicher Ansicht wie Fig. 5 das mit gespritzten Borsten erster Art versehene Trägerplättchen aus Fig. 8;
- Fig. 12: in gleicher Darstellung wie Fig. 6 der Längsschnitt durch das mit gespritzten Borsten erster Art versehene Trägerplättchen aus Fig. 8;
- Fig. 13: in gleicher Darstellung wie Fig. 7 im Querschnitt das mit gespritzten Borsten erster Art versehene Trägerplättchen aus Fig. 8;
- Fig. 14: in gleicher Darstellung wie Fig. 2 und 8 das Trägerplättchen, welches mit gespritzten Borsten erster und zweiter Art versehen ist;
- Fig. 15: in gleicher Darstellung wie Fig. 3 und 9 das mit gespritzten Borsten erster und zweiter Art versehene Trägerplättchen aus Fig. 14;
- Fig. 16: in gleicher Darstellung wie Fig. 4 und 10 das mit gespritzten Borsten erster und zweiter Art versehene Trägerplättchen aus Fig. 14;
- Fig. 17: in gleicher Darstellung wie Fig. 5 und 11 das mit gespritzten Borsten erster und zweiter Art versehene Trägerplättchen aus Fig. 14;
- Fig. 18: in gleicher Darstellung wie Fig. 6 und 12 das mit den gespritzten Borsten erster und zweiter Art versehene Trägerplättchen aus Fig. 14 im Längsschnitt;
- Fig. 19: in gleicher Darstellung wie Fig. 7 und 13 das mit den gespritzten Borsten erster und zweiter Art versehe Trägerplättchen aus Fig. 14 im Querschnitt;
- Fig. 20: in gleicher Darstellung wie Fig. 2 , 8 und 14 das mit gespritzten Borsten erster und zweiter Art sowie zusätzlich mit weichelastischen Massage- und Reinigungselementen versehene Trägerplättchen, wobei das weichelastische Material auch die Rückseite des Trägerplättchens bedeckt;
- Fig. 21: in gleicher Darstellung wie Fig. 3, 9 und 15 das mit gespritzten Borsten erster und zweiter Art sowie zusätzlich weichelastischen Massage- und Reinigungselementen versehene Trägerplättchen aus Fig. 20;
- Fig. 22: in gleicher Darstellung wie Fig. 4, 10 und 16 das mit gespritzten Borsten erster und zweiter Art sowie zusätzlich weichelastischen Massage- und Reinigungselemente versehene Trägerplättchen aus Fig. 20;
- Fig. 23: in gleicher Darstellung wie Fig. 5, 11 und 17 das mit gespritzten Borsten erster und zweiter Art sowie zusätzlich weichelastischen Massage- und Reinigungselementen versehene Trägerplättchen aus Fig. 20;
- Fig. 24: in gleicher Darstellung wie Fig. 6, 12 und 18 das Trägerplättchen aus Fig. 20 mit den gespritzten Borsten erster und zweiter Art sowie den weichelastischen Massageund Reinigungselementen im Längsschnitt;
- Fig. 25: in gleicher Darstellung wie Fig. 7, 13 und 19 das mit gespritzten Borsten erster und zweiter Art sowie mit weichelastischen Massage- und Reinigungselementen versehene Trägerplättchen aus Fig. 20 im Querschnitt;
- Fig. 26: eine schematische Darstellung für die Herstellung einer Zahnbürste gemäss Fig. 1 mit einem Bürstenkörper und einem in dessen Kopfbereich angeordneten Trägerplättchen gemäss den Fig. 2 bis 25;
- Fig. 27: in Draufsicht die Vorderseite eines Halsteils und eines Kopfteils eines Zahnbürstenkörpers mit Durchlässen für das Borstenmaterial und weichelastisches Material;
- Fig. 28: in perspektivischer schräger Draufsicht denselben Teil des Zahnbürstenkörpers wie in Fig. 27;
- Fig. 29: in Untersicht die Rückseite desselben Teils des Zahnbürstenkörpers wie Fig. 27 und 28;
- Fig. 30: in perspektivischer schräger Untersicht denselben Teil des Zahnbürstenkörpers wie in Fig. 27 bis 29;
- Fig. 31: einen Längsschnitt entlang der Linie XXXI-XXXI der Fig. 29 durch den in den Figuren 27 bis 30 gezeigten Teil des Zahnbürstenkörpers;
- Fig. 32: einen Querschnitt entlang der Linie XXXII-XXXII der Fig. 29 durch den in den Figuren 27 bis 31 gezeigten Teil des Bürstenkörpers;
- Fig. 33: in gleicher Darstellung wie Fig. 27 den dort gezeigten Teil des mit gespritzten Borsten erster und zweiter Art versehenen Bürstenkörpers;
- Fig. 34: in gleicher Darstellung wie Fig. 28 der dort gezeigte Teil des Bürstenkörpers versehen mit gespritzten Borsten erster und zweiter Art;
- Fig. 35: in gleicher Darstellung wie Fig. 29 der mit gespritzten Borsten erster und zweiter Art versehene Teil des Zahnbürstenkörpers;
- Fig. 36: in gleicher Darstellung wie Fig. 30 der mit gespritzten Borsten erster und zweiter Art versehene dort gezeigte Teil des Zahnbürstenkörpers;
- Fig. 37: in gleicher Darstellung wie Fig. 31 der mit gespritzten Borsten erster und zweiter Art versehene Teil des Bürstenkörpers im Längsschnitt;
- Fig. 38: in gleicher Darstellung wie Fig. 32 der mit gespritzten Borsten erster und zweiter Art versehene Teil des Bürstenkörpers im Querschnitt;
- Fig. 39: in gleicher Darstellung wie Fig. 33 und 37 der dort gezeigte Teil des Bürstenkörpers versehen mit gespritzten Borsten erster und zweiter Art und weichelastischen Massage- und Reinigungselementen;
- Fig. 40: in gleicher Darstellung wie Fig. 28 und 34 den Teil des Zahnbürstenkörpers versehen mit gespritzten Borsten erster und zweiter Art und weichelastischen Massage- und Reinigungselementen;
- Fig. 41: in gleicher Darstellung wie Fig. 29 und 35 der dort gezeigte Teil des Zahnbürstenkörpers, wobei das weichelastische Material der weichelastischen Massage- und Reinigungselemente die Rückseite des Zahnbürstenkopfs überdeckt und ein Zungenreinigungselement ausbildet;
- Fig. 42: in gleicher Darstellung wie Fig. 30 und 36 der Teil des Zahnbürstenkörpers mit gespritzten Borsten erster und zweiter Art, weichelastischen Massage- und Reinigungselementen und dem weichelastischen Zungenreinigungselement;
- Fig. 43: in einem Schnitt entlang der Linie XXXXIII-XXXXIII der Fig. 41 den dort gezeigten Teil des am Bürstenkörper, welcher mit gespritzten Borsten erster und zweiter Art, weichelastischen Massage- und Reinigungselementen und dem weichelastischen Zungenreinigungselement versehen ist;
- Fig. 44: in einem Querschnitt entlang der Linie XXXXIV-XXXXIV der Fig. 39 den dort gezeigten Teil des Zahnbürstenkörpers, welcher mit gespritzten Borsten erster und zweiter Art, weichelastischen Massage- und Reinigungselementen und dem weichelastischen Zungenreinigungselement versehen ist;
- Fig. 45: ein Ablaufdiagramm zur Herstellung einer Zahnbürste gemäss den Fig. 27 bis 44;
- Fig. 46: einen Schnitt durch einen Teil eines Spritzgusswerkzeugs zum Anspritzen der gespritzten Borsten an ein Trägerplättchen für eine Zahnbürste gemäss den Fig. 1 bis 25;
- Fig. 47: in Draufsicht einen ersten Werkzeugeinsatz zur Herstellung von gespritzten Borsten;
- Fig. 48: den ersten Werkzeugeinsatz in Untersicht;
- Fig. 49: in Ansicht den ersten Werkzeugeinsatz;
- Fig. 50: den ersten Werkzeugeinsatz in einem Längsschnitt entlang der Linie L-L der Fig. 47;
- Fig. 51: einen zweiten Werkzeugeinsatz im Längsschnitt entlang der Linie LI - LI der Fig. 52;
- Fig. 52: den zweiten Werkzeugeinsatz in Draufsicht;
- Fig. 53: ein Längsschnitt durch einen Teil des am ersten Werkzeugeinsatz anliegenden zweiten Werkzeugeinsatz;
- Fig. 54: in Ansicht und Draufsicht eine erste Ausführungsform eines Einzelbündels von gespritzten Borsten;
- Fig. 54a: in perspektivischer Draufsicht die erste Ausführungsform des Einzelbündels;
- Fig. 55: in Ansicht und Draufsicht eine zweite Ausführungsform eines Einzelbündels;
- Fig. 55a: in perspektivischer Draufsicht die zweite Ausführungsform des Einzelbündels;
- Fig. 56: in Ansicht und Draufsicht die erste Ausführungsform des Einzelbündels nach dem Erkalten;
- Fig. 56a: in perspektivischer Draufsicht die erste Ausführungsform des Einzelbündels nach dem Erkalten;
- Fig. 57: in Ansicht und Draufsicht die zweite Ausführungsform eines Einzelbündels nach dem Erkalten;
- Fig. 57a: in perspektivischer Draufsicht die zweite Ausführungsform des Einzelbündels nach dem Erkalten;
- Fig. 58: in perspektivischer Darstellung einen Teil einer erfindungsgemässen Zahnbürste mit einem am Zahnbürstenkörper befestigten Trägerplättchen, welches mit gespritzten Borsten, weichelastischen Massage- und Reinigungselementen und mit im AFT-Verfahren angebrachten konventionellen Borsten versehen ist;
- Fig. 59: in Draufsicht die Zahnbürste gemäss Fig. 58;
- Fig. 60: ein Längsschnitt durch die Zahnbürste gemäss den Fig. 58 und 59;
- Fig. 61: in perspektivischer Draufsicht eine weitere Ausführungsform einer erfindungsgemässen Zahnbürste, bei welcher der Zahnbürstenkörper mit gespritzten Borsten, weichelastischen Massage- und Reinigungselementen und mit gestanzten konventionellen Borsten versehen ist;
- Fig. 62: in Draufsicht die Zahnbürste gemäss Fig. 61;
- Fig. 63: ein Längsschnitt durch die Zahnbürste gemäss den Fig. 61 und 62;
- Fig. 64: einen Längsschnitt durch einen Borstenträger, welcher sowohl auf der Frontseite als auch auf der Rückseite mit einem Verteilkanal, beziehungsweise auf der Rückseite mit einem Anspritzkanal für das Borstenmaterial versehen ist;
- Fig. 65: einen in Fig. 55 mit A bezeichneten Teil einer gespritzten Borste vergrössert;
- Fig. 66: einen in Fig. 55 mit B bezeichneten Teil von zwei gespritzten Borsten vergrössert;
- Fig. 67: eine weitere Ausführungsvariante eines zweiten Werkzeugeinsatzes im Längsschnitt entlang der Linie LXVII-LXVII der Fig. 68;
- Fig. 68: der zweite Werkzeugeinsatz aus Fig. 67 in Draufsicht;
- Fig. 69: einen Längsschnitt durch einen Teil des am ersten Werkzeugeinsatz anliegenden zweiten Werkzeugeinsatz aus Fig. 67 und 68;
- Fig. 70: in Seitenansicht den Kopfteil und einen daran anschliessenden Abschnitt des Halsteils einer weiteren Ausführungsform einer erfindungsgemässen Zahnbürste mit gespritzten Borsten und weichelastischen Massage- und Reinigungselementen;
- Fig. 71: in Draufsicht den Kopfteil und den Abschnitt des Halsteils der Zahnbürste gemäss Fig. 70;
- Fig. 72: in Draufsicht die Rückseite des Kopfteils und des Abschnitts des Halsteils der Zahnbürste gemäss Fig. 70 und --71;
- Fig. 73: ein erster Querschnitt entlang der Linie LXXIII - LXXIII durch die Zahnbürste gemäss den Fig. 70 - 72;
- Fig. 74: ein zweiter Querschnitt entlang der Linie LXXIV - LXXIV durch die Zahnbürste gemäss den Fig. 70 - 72;
- Fig. 75: ein mittiger Längsschnitt entlang der Linie LXXV - LXXV durch die Zahnbürste gemäss den Fig. 70 - 72;
- Fig. 76: ein Schnitt entlang der Linie LXXVI durch einen Teil des Kopfteils Zahnbürste gemäss den Fig. 70 - 72;
- Fig. 77: ein Ablaufdiagramm zur Herstellung einer erfindungsgemässen Zahnbürste in einem Würfelwerkzeug; und
- Fig. 78: ein Ablaufdiagramm zur Herstellung der komplett verpacken Zahnbürste im Inline-Verfahren.

Fig. 1 zeigt eine als Handzahnbürste 10 ausgebildete Bürste gemäss der vorliegenden Erfindung. Sie weist als Borstenträger 12 ein Trägerplättchen 14 auf, von welchem gespritzte Borsten erster Art 16, gespritzte Borsten zweiter Art 18 und - borstenlose, d.h. keine Borsten aufweisende - weichelastische Massage- und Reinigungselemente 20 abstehen. Vom Trägerplättchen 14 ist in Fig. 1 nur die dem freiliegenden Teil 22 der gespritzten Borsten 16, 18 und dem freiliegenden Teil der weichelastischen Massage- und Reinigungselemente 20 zugewandte Vorderseite 24 sichtbar. Die weichelastischen Massage- und Reinigungselemente 20 dienen sowohl der Reinigung der Zähne als auch der Massage des Zahnfleisches und des Gaumens.

Die Handzahnbürste 10 weist weiter einen Bürstenkörper 26 auf. Dieser besteht hier aus einem Griffteil 28, einem daran einstückig anschliessenden Halsteil 30 und einem vom Halsteil 30 getragenen Kopfteil 32. Der Kopfteil ist mit einer, hier nicht sichtbaren, wannenförmigen Ausnehmung versehen, in welche das mit den gespritzten Borsten 16 und 18 sowie den weichelastischen Massage- und Reinigungselementen 20 versehene Trägerplättchen 14 eingesetzt und am Kopfteil 32 vorzugsweise unlösbar befestigt ist. Die Befestigung kann beispielsweise mittels Ultraschallschweissen hergestellt werden. Dazu verfügt das Trägerplättchen 14 vorzugsweise über eine Schweisskante. Es sind jedoch, wie weiter oben beschrieben, auch andere geeignete Befestigungen wie Kleben, Umspritzen, Schwund- oder Schnappverbindungen, usw. möglich.

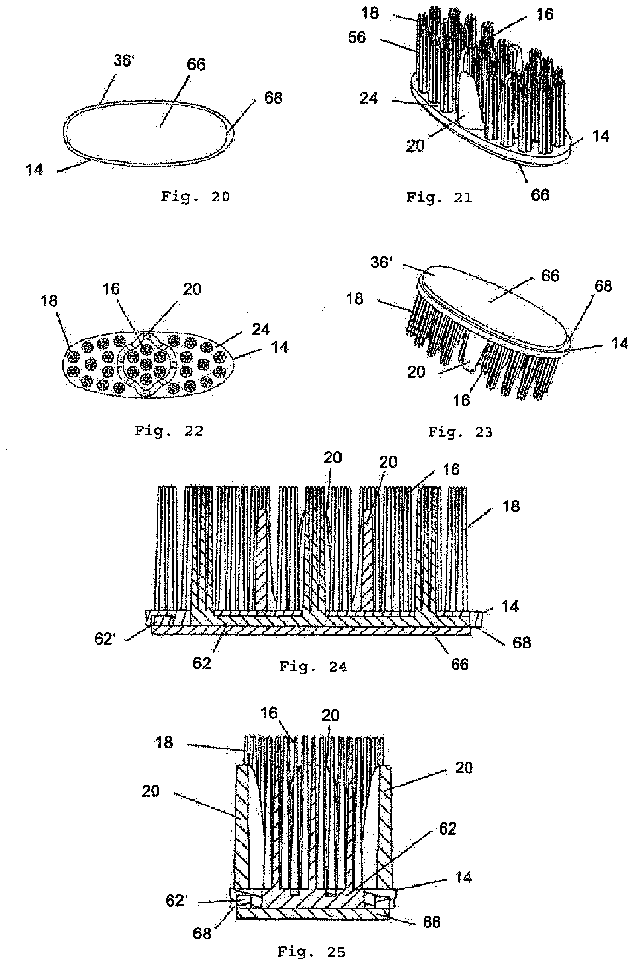

Wird das Trägerplättchen 14 in eine Geometrie im Kopfteil 32 eingeschweisst, kann für den Schweissprozess beispielsweise auf die bekannten Schweissparameter und Schweissgeometrien aus dem AFT-Prozess (Anchor Free Tufting) zurückgegriffen werden, d.h. die wannenförmige Ausnehmung wie auch die entsprechenden Geometrien am freibleibenden Rand 68 (siehe beispielsweise Fig. 24) sind so gestaltet, wie an Trägerplättchen 14 und Ausnehmungen für den AFT-Prozess.

Im vorliegenden Fall bilden Kanalwände 50 (siehe beispielsweise Fig. 6 ) die Schweissauflage und eine abgesetzte TPE-Schicht dient der Zentrierung des Trägerplättchens 14 in der wannenförmigen Ausnehmung im Kopfteil 32.

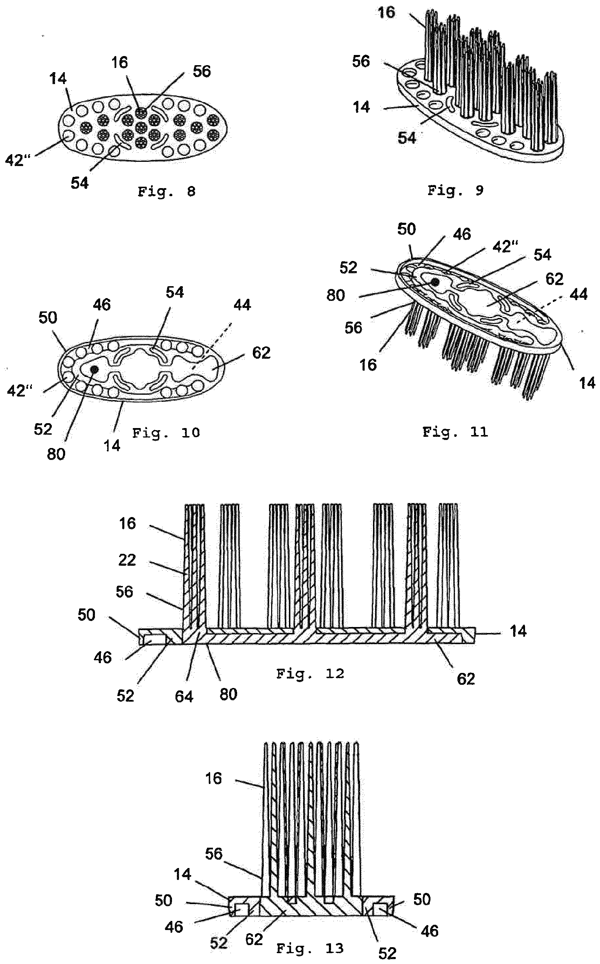

Der Schweissbereich zwischen Trägerplättchen 14 und Kopfteil 32 wird vorzugsweise frei von Borstenmaterial 62 gehalten; siehe beispielsweise Fig. 12 .

Der Bürstenkörper 26 ist in allgemein bekannter Art und Weise im Spritzgussverfahren hergestellt. Er kann, wie im vorliegenden Ausführungsbeispiel, aus einem einzigen Hartmaterial bestehen. Er kann jedoch auch im Zwei- oder Mehrkomponenten-Spritzgussverfahren hergestellt sein. In diesem Fall ist es möglich, zwei oder mehr Hartmaterialien oder zusätzlich zu mindestens einem Hartmaterial mindestens ein Weichmaterial zu verwenden.

Im gezeigten Ausführungsbeispiel ist am Griffteil 28 auf der Vorderseite 24' des Bürstenkörpers 26 eine Daumenauflage 34 und auf der Rückseite 36 eine Zeigfingerauflage 38 ausgebildet. Diese sind durch eine Reihe von vorstehenden Rippen 40 ausgebildet.

Das Verfahren zur Herstellung und der Aufbau der in der Fig. 1 gezeigten Handzahnbürste 10 geht aus den Fig. 2 bis 26 hervor. Betreffend der Materialien und der Abmessungen wird auf die Einleitung weiter oben verwiesen.

Die Fig. 2 bis 7 zeigen ein im Spritzgussverfahren aus einem Hartmaterial hergestelltes Trägerplättchen 14. Im gezeigten Ausführungsbeispiel ist dessen Vorderseite 24 eben.

Es ist jedoch auch möglich, dass die Vorderseite 24 eine dreidimensionale Form aufweist und/oder dass es im Zwei- oder Mehrkomponenten-Spritzgussverfahren hergestellt ist. In diesem Fall kann es beispielsweise aus zwei unterschiedlichen Hartmaterialien hergestellt sein; es ist jedoch auch möglich, dass es beispielsweise zwei oder mehr Abschnitte aus einem Hartmaterial aufweist, die mittels einem Weichmaterial aneinander befestigt sind. Es ist auch denkbar, dass aus einem Hartmaterial gebildete Hülsen für die gespritzten Borsten 16, 18 vorgesehen sind und diese Hülsen mittels eines Weichmaterials am verbleibenden Teil des Trägerplättchens 14 aus Hartmaterial befestigt sind.

Das gezeigte Trägerplättchen 14 weist von der Vorderseite 24 zur Rückseite 36' durchgehend verlaufende Durchlässe 42 auf.

Wie dies aus den Fig. 4 bis 7 hervorgeht, weist das Trägerplättchen 14 gegen die Rückseite 36' hin offene Verteilkanäle 44 und 46 auf. Der erste Verteilkanal 44 ist den gespritzten Borsten erster Art 16 und der zweite Verteilkanal 46 den gespritzten Borsten zweiter Art 18 zugeordnet. Die betreffenden ersten Durchlässe 42' und zweiten Durchlässe 42" verlaufen vom Boden 48 des ersten Verteilkanals 44 beziehungsweise zweiten Verteilkanals 46 zur Vorderseite 24 des Trägerplättchens 14.

Der zweite Verteilkanal 46 verläuft U-förmig entlang dem Rand des Trägerplättchens 14, wobei er radial gegen aussen von einer ersten Kanalwand 50 begrenzt ist. Radial gegen innen ist der zweite Verteilkanal 46 von einer zweiten Kanalwand 52 begrenzt, welche ihrerseits die radial äussere Begrenzung des ersten Verteilkanals 44 bildet.

Der erste Verteilkanal 44 weist in seinem vorderen Endbereich eine dreieckförmige Erweiterung auf, von welcher in den abgerundeten Ecken drei erste Durchlässe 42' ausgehen. Im Mittelbereich des Trägerplättchens 14 weist der erste Verteilkanal 44 eine etwa kreisförmige Erweiterung auf, von welcher rosettenartig angeordnet sieben erste Durchlässe 42' ausgehen. Im hinteren Endbereich weist der erste Verteilkanal 44 eine dritte Erweiterung auf, welche annähernd rechteckig ausgebildet ist. Von dieser gehen fünf erste Durchlässe 42' aus. Die erwähnten Erweiterungen sind über - in Längsrichtung des Trägerplättchens 14 verlaufende - Kanalabschnitte 44' miteinander verbunden.

Die zweite Kanalwand 52 weist von der Rückseite 36' zur Vorderseite 24 durchgehende Kanalwanddurchlässe 54 auf, welche den weichelastischen Massage- und Reinigungselementen 20 zugeordnet sind und sich segmentartig um die mittlere Erweiterung des ersten Verteilkanals 44 erstrecken.

Die zweiten Durchlässe 42" sind in einer Reihe hintereinander entlang des zweiten Verteilkanals 46 angeordnet.

Die Fig. 8 bis 13 zeigen in gleicher Darstellung wie die Fig. 2 bis 7 das Trägerplättchen 14, wobei nun im Spritzgussverfahren die gespritzten Borsten erster Art 16 hergestellt sind. Diese sind in Borstenbündel 56 zusammengefasst, wobei jedes Borstenbündel 56 einem der ersten Durchlässe 42' zugeordnet ist.

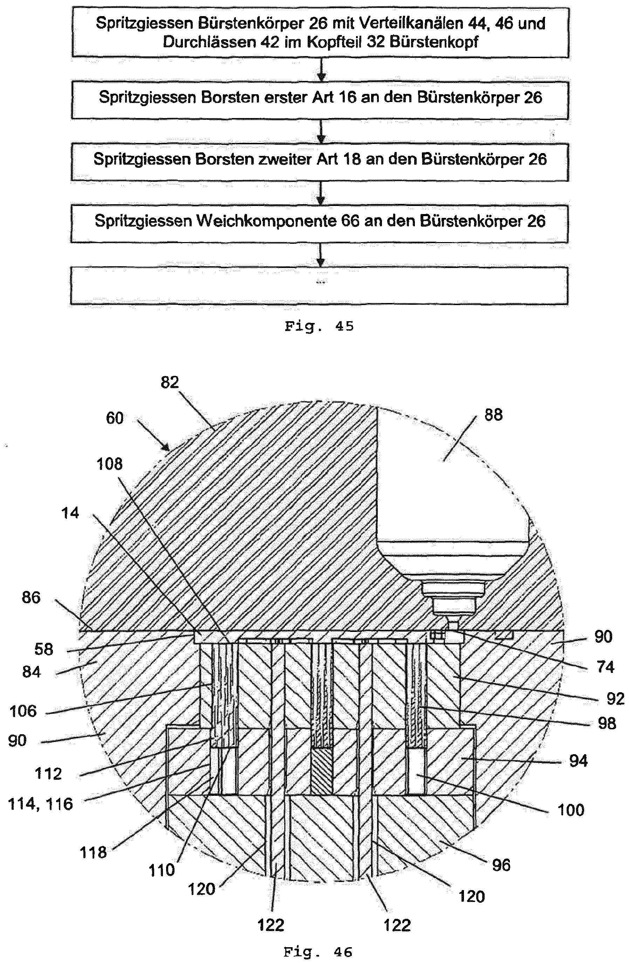

Zur Herstellung der gespritzten Borsten erster Art 16 wird das Trägerplättchen 14 in eine Trägerkavität 58 eines Spritzgusswerkzeugs 60 eingelegt, wie dies in der Fig. 46 gezeigt und weiter unten beschrieben ist. Das Borstenmaterial 62 für die gespritzten Borsten erster Art 16 wird in den ersten Verteilkanal 44 eingespritzt, wo es sich verteilt und durch die ersten Durchlässe 42', zur Ausformung der gespritzten Borsten erster Art 16, hindurch fliesst.

Wie dies insbesondere den Fig. 12 und 13 entnehmbar ist, sind die Borsten erster Art 16 integral - d.h. einstückig - mit dem im ersten Verteilkanal 44 vorhandenen Borstenmaterial 62 ausgebildet. Weiter ist, wie dies aus den Fig. 10 bis 13 hervorgeht, der erste Verteilkanal 44 mit dem Borstenmaterial 62 ausgefüllt.

Auf die Herstellung der Borstenbündel 56 mit den gespritzten Borsten erster und zweiter Art 16, 18 wird weiter unten im Zusammenhang mit den Fig. 46 bis 53 sowie 67 bis 69 näher eingegangen.

An dieser Stelle sei jedoch bereits erwähnt, dass im gezeigten Ausführungsbeispiel ein Borstenbündel 56 aus sieben gespritzten Borsten erster Art 16 besteht. Diese gespritzten Borsten 16 stehen auf der Vorderseite 24 des Trägerplättchens 14 bezüglich diesem ab. Ihr freiliegender Teil 22 erstreckt sich im gezeigten Ausführungsbeispiel von der von der Vorderseite 24 definierten Ebene, wobei in den ersten Durchlässen 42' eine den gespritzten Borsten erster Art 16 jedes Borstenbündels 56 gemeinsame Borstenbasis 64 ausgebildet ist. Die Länge des freiliegenden Teils 22 entspricht der freiliegenden Länge.

Bevorzugt ist die Borstenbasis 64 für gespritzte Borsten erster Art 16 wie auch für gespritzte Borsten zweiter Art 18 in ihrer Höhe maximal so hoch wie der Aussenrand des Trägerplättchens 14 bzw. die erste Kanalwand 50.

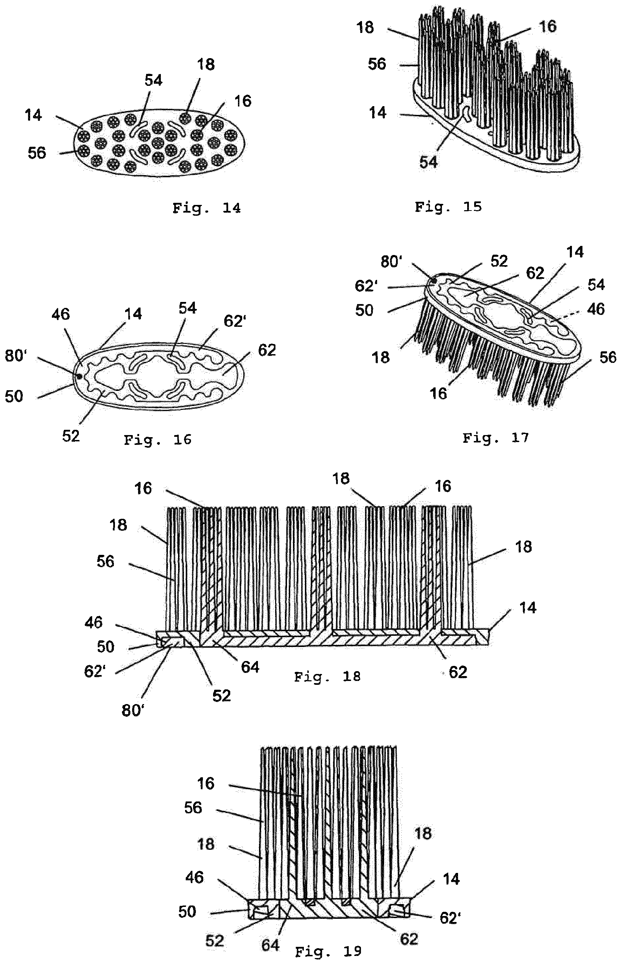

Die Fig. 14 bis 19 zeigen in gleicher Darstellung wie die Fig. 2 bis 13 das Trägerplättchen 14, welches nun jedoch zusätzlich zu den gespritzten Borsten erster Art 16 mit den gespritzten Borsten zweiter Art 18 versehen ist. Dazu ist das mit den gespritzten Borsten erster Art 16 versehene Trägerplättchen 14 in eine entsprechende Kavität des Spritzgusswerkzeugs 60 eingesetzt worden. Das Borstenmaterial 62' für die gespritzten Borsten zweiter Art 18 wurde in den zweiten Verteilkanal 46 eingespritzt, welches sich in diesen verteilt hat und durch die zweiten Durchlässe 42" zur Bildung der gespritzten Borsten zweiter Art 18 hindurch geflossen ist.

Im vorliegenden Ausführungsbeispiel ist der zweite Verteilkanal 46 mit dem Borstenmaterial 62' aufgefüllt und das im zweiten Verteilkanal 46 vorhandene Borstenmaterial 62' ist mit den gespritzten Borsten zweiter Art 18 integral, d.h. einstückig verbunden. Im Übrigen sind hier die gespritzten Borsten zweiter Art 18 gleich ausgebildet wie die gespritzten Borsten erster Art 16.

Die gespritzten Borsten erster Art 16 und die gespritzten Borsten zweiter Art 18 können sich beispielsweise durch die Farbe des Borstenmaterials 62, 62' unterscheiden. Es ist auch möglich, dass das Borstenmaterial 62 ein anderes ist als das Borstenmaterial 62', beispielsweise von chemischer Zusammensetzung oder anderen Eigenschaften (beispielsweise Shore Härte des Materials, Oberflächenbeschaffenheit) her.

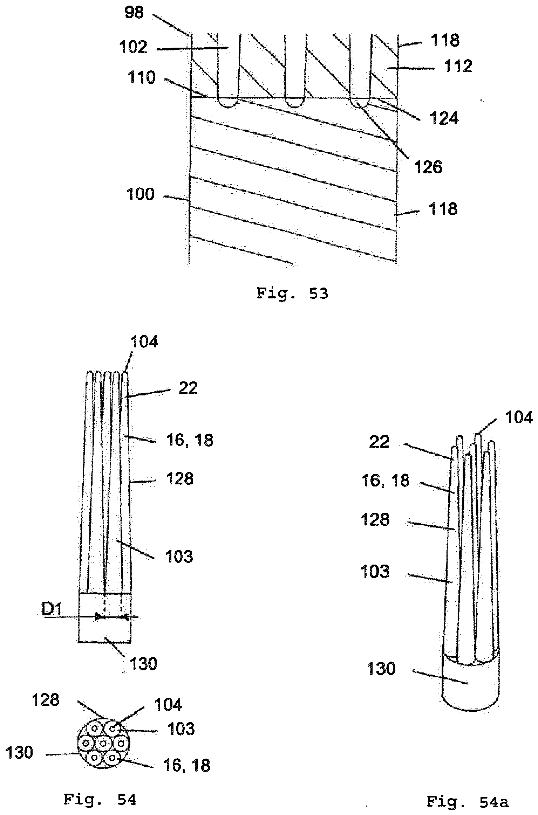

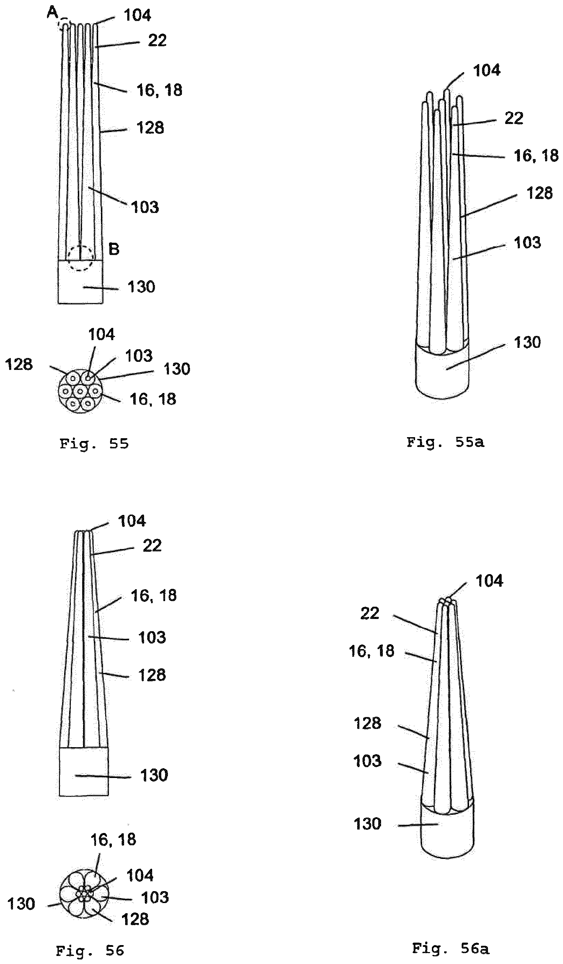

Es ist auch denkbar, dass das Borstenmaterial 62 und das Borstenmaterial 62' identisch sind. Weiter ist es möglich, dass sich die gespritzten Borsten erster Art 16 und die gespritzten Borsten zweiter Art 18 in ihren Dimensionen unterscheiden, beispielsweise durch ihre Länge oder auch durch ihre geometrische Ausbildungsform. Beispiele für verschiedene Längen sind in den Fig. 54 und 55 gezeigt.

In gleicher Darstellung wie die Fig. 2 bis 19 ist in den Fig. 20 bis 25 das Trägerplättchen 14 gezeigt, wobei es nun zusätzlich zu den gespritzten Borsten erster Art 16 und gespritzten Borsten zweiter Art 18 mit den weichelastischen Massage- und Reinigungselementen 20 versehen ist.

Zur Herstellung der weichelastischen Massage- und Reinigungselemente 20 wird das mit den gespritzten Borsten erster Art 16 und zweiter Art 18 versehene Trägerplättchen 14 in eine weitere Kavität des Spritzgusswerkzeugs 60 eingelegt und wird das betreffende Weichmaterial 66 für die Massage- und Reinigungselemente 20 auf der Rückseite 36' des Trägerplättchens in die betreffende Kavität eingespritzt. Das Weichmaterial 66 verteilt sich dabei entsprechend der Kavität, im vorliegenden Beispiel auf der gesamten Rückseite 36' des Trägerplättchens 14 bis auf den umlaufenden, vom Weichmaterial 66 freibleibenden Rand 68, welcher beispielsweise zum Verschweissen mit dem Bürstenkörper 26 benötigt wird.

Weiter fliesst beim Spritzgiessen das Weichmaterial 66 durch die Kanalwanddurchlässe 54 hindurch und bildet auf der Vorderseite 24 die vom Trägerplättchen 14 vorstehenden weichelastischen Massage- und Reinigungselemente 20. Sie formen bei dieser Ausführungsform beispielhaft - in Draufsicht - ein annähernd kreisförmiges Gebilde, welches um die zentralen sieben Borstenbündel 56 mit gespritzten Borsten erster Art 16 herum verläuft und welches eine wellenförmige Höhenkontur aufweist, um die vier weichelastischen Massage- und Reinigungselemente 20 zu bilden.

Zwischen den Kanalwanddurchlässen 54 liegt das Weichmaterial 66 der weichelastischen Massage- und Reinigungselemente 20 auf der Oberfläche des Trägerplättchens 14 auf oder ist mit diesem auf der Oberfläche mittels Materialschluss verbunden.

Es sei an dieser Stelle erwähnt, dass es auch denkbar ist, im Trägerplättchen 14 einen Verteilkanal (oder mehrere Verteilkanäle) für das Weichmaterial 66 (oder Weichmaterialien 66) vorzusehen und durch diesen Verteilkanal das Weichmaterial zur Bildung der weichelastischen Massage- und Reinigungselemente 20 beim Spritzgiessen zu verteilen. Dabei ist es möglich, dass das Weichmaterial 66 den betreffenden Verteilkanal ausfüllt, jedoch im Übrigen die Rückseite 36' des Trägerplättchens 14 frei lässt. Entsprechende Durchlässe im Trägerplättchen 14 lassen das Weichmaterial 66 in diesem Fall vom Verteilerkanal auf die Vorderseite 24 des Trägerplättchens 14 dringen.

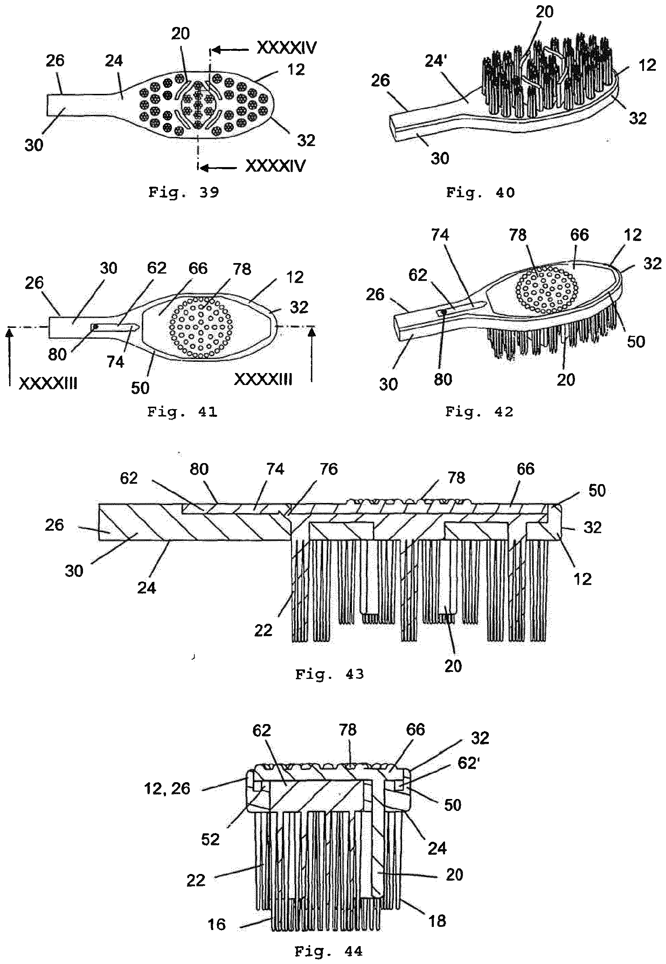

Es besteht die Möglichkeit, dass der Kopfteil 32 des Bürstenkörpers 26 ringförmig ausgebildet und das mit gespritzten Borsten 16, 18 und den weichelastischen Massage- und Reinigungselementen 20 versehene Trägerplättchen 14 in den Kopfteil 32 eingesetzt wird, derart, dass das Weichmaterial 66 auf der Rückseite 36' des Trägerplättchens 14 auf der Rückseite 36 der Handzahnbürste 10 frei liegt. In diesem Fall kann beim Spritzgiessen des Weichmaterials 66 mittels diesem im gleichen Spritzgussvorgang rückseitig ein - borstenloses, d.h. keine Borsten aufweisendes - beispielsweise vorstehende Noppen und/oder Rippen und/oder Lamellen aufweisendes Zungenreinigungselement ausgeformt werden, welches frei liegt (ähnlich der Ausführungsform gemäss Fig. 41 bis 44 ).

Der Vollständigkeit halber sei erwähnt, dass nicht zwingend weichelastische Massage- und Reinigungselemente 20 und/oder gespritzte Borsten zweiter Art 18 vorhanden sein müssen.

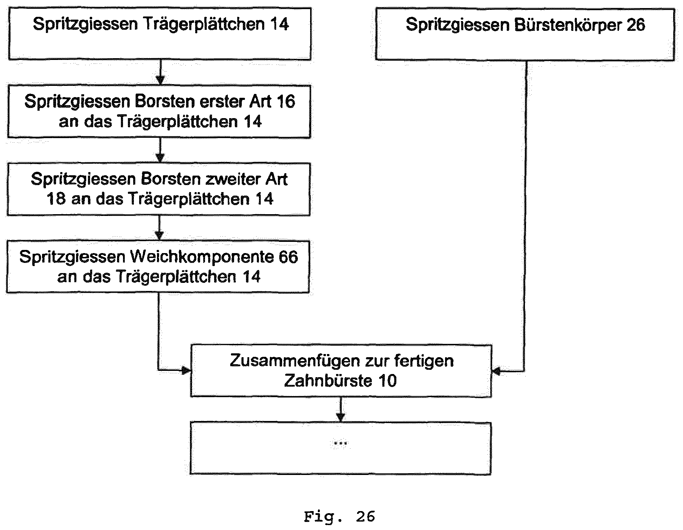

Der verfahrensgemässe Ablauf zur Herstellung der Handzahnbürste 10 gemäss Fig. 1 , wie er an Hand der Fig. 2 bis 25 weiter oben erläutert ist, ist in einem Ablaufdiagramm in der Fig. 26 dargestellt.

In einem ersten Schritt wird mittels Spritzgiessen das Trägerplättchen 14 hergestellt.

In einem zweiten Schritt werden mittels Spritzguss durch Einspritzen von Borstenmaterial 62 in den ersten Verteilkanal 44 die gespritzten Borsten erster Art 16 an das Trägerplättchen 14 angespritzt.

In einem dritten Schritt werden mittels Spritzgiessen durch Einspritzen von Borstenmaterial 62' in den zweiten Verteilkanal 46 die gespritzten Borsten zweiter Art 18 an das Trägerplättchen 14 angespritzt.

In einem vierten Schritt erfolgt das Spritzgiessen des Weichmaterials 66 an das Trägerplättchen 14, wobei, im gezeigten Ausführungsbeispiel, die weichelastischen Massage- und Reinigungselemente 20 hergestellt werden.

Bei physisch getrennten Verteilkanälen können die Borstenmaterialien 62, 62' und das Weichmaterial 66 gleichzeitig oder zeitlich versetzt in derselben Spritzgusskavität eingespritzt werden.

Separat wird mittels Spritzgiessen der Bürstenkörper 26 hergestellt. Der Bürstenkörper 26 und das mit den gespritzten Borsten 16, 18 und dem gespritzten Weichmaterial 66 (den Massage- und Reinigungselementen 20) versehene Trägerplättchen 14 werden dann zusammen gefügt. Dies kann beispielsweise mittels Manipulatoren oder Robotern geschehen. Die beiden zusammen gefügten Teile werden dabei fest miteinander verbunden, beispielsweise durch Verschweissen, insbesondere Ultraschallschweissen, durch Kleben, oder Schnappverbindungen etc..

Alternativ kann das mit den gespritzten Borsten 16, 18 und der gespritzten Weichmaterial 66 (den Massage- und Reinigungselemente 20) versehene Trägerplättchen 14 mit dem Hart- und/oder Weichmaterial des Bürstenkörpers 26 umspritzt und dabei unlösbar mit diesem verbunden werden.

In weiteren Schritten kann die fertige Zahnbürste 10 noch weiter bearbeitet wie bedruckt und verpackt werden.

Wie weiter oben erwähnt, kann das mit den gespritzten Borsten erster Art 16 versehene Trägerplättchen 14 direkt dem Schritt "Spritzgiessen Weichmaterial 66 an das Trägerplättchen 14" oder den Schritt "Zusammenfügen zur fertigen Zahnbürste 10" zugeführt werden, wenn keine gespritzten Borsten zweiter Art 18 beziehungsweise keine weichelastischen Massage- und Reinigungselemente 20 vorgesehen sind. Weiter ist es auch möglich, das mit den gespritzten Borsten erster Art 16 und den gespritzten Borsten zweiter Art 18 versehene Trägerplättchen 14 (direkt) dem Schritt "Zusammenfügen zur fertigen Zahnbürste 10" zuzuführen; in diesem Fall wird kein Weichmaterial 66 bzw. werden keine weichelastischen Massage- und Reinigungselemente 20 angespritzt.

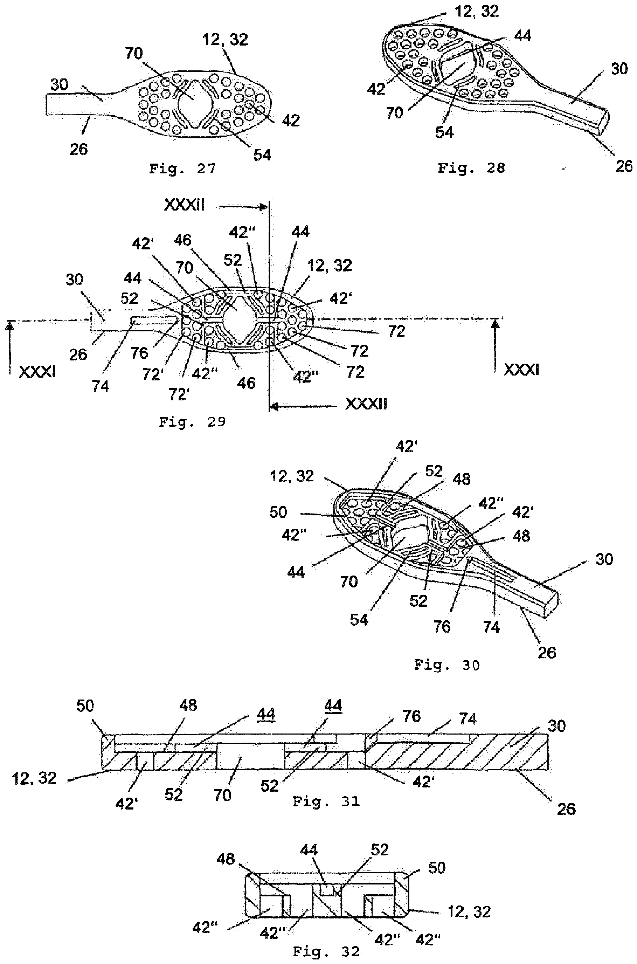

Anhand der Fig. 27 bis 44 wird die Herstellung einer weiteren Ausführungsform einer Handzahnbürste 10 gemäss der vorliegenden Erfindung näher erläutert. Der wesentliche Unterschied zwischen der oben beschriebenen Ausführungsform und der Vorliegenden liegt darin, dass der Borstenträger 12 durch den Kopfteil 32 des Bürstenkörpers 26 selber gebildet ist. Das heisst, dass die Funktionen und Aufgaben, die das Trägerplättchen 14 im vorherigen Ausführungsbeispiel hatte, jetzt nun direkt von einer entsprechenden, im Bürstenkörper 26 integrierten Körpergeometrie übernommen wird. Sinngemäss gelten die im Zusammenhang mit dem Trägerplättchen 14 beschrieben Eigenschaften und alternativen Ausführungsformen auch für diese Variante.

Die Fig. 27 bis 32 zeigen, entsprechend den Fig. 2 bis 7 , den durch den Kopfteil 32 des Bürstenkörpers 26 gebildeten Borstenträger 12. Vom Bürstenkörper 26 ist nur der Kopfteil 32 und ein Abschnitt des Halsteils 30 dargestellt. Der übrige Abschnitt des Halsteils 30 zusammen mit dem Griffteil 28 ist nicht gezeigt; die Ausbildungsform dieser Teile ist jedoch allgemein bekannt.

Der Borstenträger 12, d.h. der Kopfteil 32, weist von der in Fig. 27 sichtbaren Vorderseite 24 zu diesen gegenüberliegenden Rückseite 36 durchgehende, kreisförmige Durchlässe 42 auf. Weiter ist im Mittelbereich ein Einzeldurchlass 70 vorhanden, welcher hier annähernd die Form eines quer zur Längserstreckung der Handzahnbürste 12 verlaufenden Ovals aufweist. Weiter sind vier Kanalwanddurchlässe 54 vorhanden, welche zwischen dem Einzeldurchlass 70 und den Durchlässen 42 in Umfangsrichtung des Einzeldurchlasses 70 verteilt in einem Abstand zu diesem angeordnet sind.

Weiter ist in Fig. 28 bis 32 erkennbar, dass vom Einzeldurchlass 70 ein erster Verteilkanal 44, welcher gegen die Rückseite 36 hin offen ist, ausgeht.

Aus den Fig. 29 und 30 , welche die Rückseite 36 des Kopfteils 32 zeigen, geht die Zuordnung der ersten Durchlässe 42' zum ersten Verteilkanal 44 und der zweiten Durchlässe 42" zum zweiten Verteilkanal 46 hervor.

Vom Einzeldurchlass 70 geht der erste Verteilkanal 44 mittig und in Längsrichtung des Bürstenkörpers 26 beidseitig weg und erweitert sich einerseits in einem dem freien Ende des Kopfteils 32 zugewandten Endbereich und andererseits in einem dem Halsteil 30 zugewandten Endbereich des Kopfteils 32. Demnach bilden die quer zur Längsrichtung verlaufenden, dem freien Ende zugewandten drei Reihen 72 von Durchlässen 42 erste Durchlässe 42'. Weiter bilden die beiden ebenfalls zur Längsrichtung verlaufenden Reihen 72', welche im Halsteil 30 seitigen Endbereich liegen, ebenfalls erste Durchlässe 42'.

Bei dieser Ausführungsform weist weiter der Bürstenkörper 26, im Übergangsbereich zwischen Halsteil 30 und Kopfteil 32, einen zur Rückseite 36 hin offenen Anspritzkanal 74 auf. Dieser ist über einen im Inneren des Bürstenkörpers 26 verlaufenden Anspritzdurchlass 76 mit dem ersten Verteilkanal 44 strömungsverbunden.

Weiter weist der Kopfteil 32 zwei zweite Verteilkanäle 46 auf. Diese verlaufen, in Längsrichtung gesehen, seitlich ausserhalb des Einzeldurchlasses 70 und verbreitern sich in ihrem dem freien Ende zugewandten Endbereich und ihrem dem Halsteil 30 zugewandten Endbereich derart, dass jeweils drei Durchlässe zweite Durchlässe 42" bilden. Zwischen diesen erweiterten Bereichen der zweiten Verteilkanäle 46 und dem Einzeldurchlass 70 sind die Kanalwanddurchlässe 54 in der zweiten Kanalwand 52 angeordnet, welche die zweiten Verteilkanäle 46 vom Einzeldurchlass 70 und dem ersten Verteilkanal 44 trennt. Radial aussen sind sowohl der erste Verteilkanal 44 als auch die zwei weiteren Verteilkanäle 46 von der ersten Kanalwand 50 begrenzt, welche entlang dem seitlichen Umfang des Kopfteils 32 sich erstreckt.

An dieser Stelle sei erwähnt, dass bezüglich der durch die erste Kanalwand 50 definierten Ebene der Rückseite 36 des Kopfteils 32 die zweite Kanalwand 52 zurück versetzt ist d.h. die erste Kanalwand 50 bildet die Aussenkontur.

Im gezeigten Ausführungsbeispiel liegen die Böden 48 der Verteilkanäle 44, 46 in einer gemeinsamen Ebene und die Höhe der zweiten Kanalwand 52 ist geringer als die Höhe der ersten Kanalwand 50.

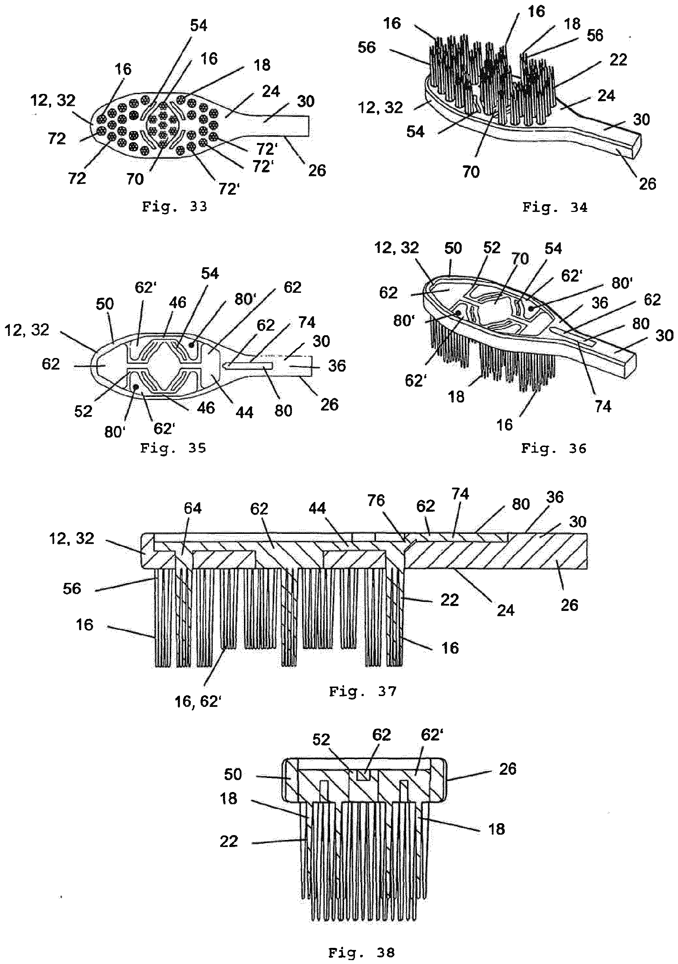

Die Fig. 33 bis 37 zeigen den mit den gespritzten Borsten erster Art 16 und den gespritzten Borsten zweiter Art 18 versehene Borstenträger 12. Zur Herstellung dieser Borsten wird der in den Fig. 27 bis 32 gezeigte, vorab im Spritzgussverfahren hergestellte Bürstenkörper 26 in die entsprechende Trägerkavität 58 des Spritzgusswerkzeugs 60 eingelegt. Das zur Bildung der gespritzten Borsten erster Art 16 benötigte Borstenmaterial 62 wird in den Anspritzkanal 74 eingespritzt. Das Borstenmaterial 62 fliesst von dort durch den Anspritzdurchlass 76 in den ersten Verteilkanal 44 und von diesem durch die ersten Durchlässe 42' in die Borstenkavitäten 102 (siehe Fig. 46 ) für die Bildung der gespritzten Borsten erster Art 16 hinein.

Gleichzeitig oder in einem zweiten Spritzgussschritt wird das zur Bildung der gespritzten Borsten zweiter Art 18 verwendete Borstenmaterial 62' in die beiden zweiten Verteilkanäle 46 eingespritzt. Das Borstenmaterial 62' verteilt sich in den zweiten Verteilkanälen 46 und fliesst durch die zweiten Durchlässe 42" hindurch in die Borstenkavitäten 102 zur Bildung der Borsten zweiter Art 18.

Das Borstenmaterial 62 und das Borstenmaterial 62' füllen den ersten Verteilkanal 44 beziehungsweise die beiden zweiten Verteilkanäle 46 zwischen den ersten und zweiten Kanalwänden 50, 52. Wie dies insbesondere den Fig. 35 bis 38 entnehmbar ist.

Die gespritzten Borsten erster Art 16 sind zusammen mit dem Borstenmaterial 62 im ersten Verteilkanal 44 integral ausgebildet. Dies trifft auch zu für die gespritzten Borsten zweiter Art 18 und das in den zweiten Verteilkanälen 46 vorhandene Borstenmaterial 62'.

Der Vollständigkeit halber sei erwähnt, dass das durch den zentralen Einzeldurchlass 70 zur Vorderseite 24 hin fliessende Borstenmaterial 62 zur Bildung mehrerer Borstenbündel 56 aus gespritzten Borsten erster Art 16, im gezeigten Ausführungsbeispiel von neun Borstenbündeln 56, verwendet wird, wobei die im Einzeldurchlass 70 gebildete Borstenbasis 64 diesen Borstenbündeln 56 gemeinsam ist.

In den ersten Durchlässen 42' und den zweiten Durchlässen 42" werden ebenfalls Borstenbasen 64 gebildet, von welchen betreffende Borstenbündel 56 von beispielsweise sieben gespritzten Borsten erster Art 16 beziehungsweise gespritzten Borsten zweiter Art 18 ausgehen. Weiter sei bemerkt, dass die gespritzten Borsten erster Art 16 als auch die gespritzten Borsten zweiter Art 18 von einigen Borstenbündeln 56 in der Länge ihres freiliegenden Teils 22 kürzer ausgebildet sind als die Borsten 16, 18 anderer Borstenbündel 56; vergleiche auch Fig. 54 bis 57 .

Die Fig. 39 bis 44 zeigen den mit den gespritzten Borsten erster und zweiter Art 16, 18 versehenen Borstenträger 12 - vergleiche Fig. 33 bis 38 -, wobei nun auch aus dem Weichmaterial 66 die (borstenlosen) weichelastischen Massage- und Reinigungselemente 20 sowie auf der Rückseite 36 ein (borstenloses), hier vorstehende Noppen aufweisendes Zungenreinigungselement 78 ausgeformt sind. Selbstverständlich können die Borstenmaterialien 62 und 62' zusätzlich oder für sich alleine einen Teil des Zungenreinigungselementes 78 bilden.

Der beborstete Borstenträger 12 wird in eine entsprechende Kavität des Spritzgusswerkzeugs 60 eingelegt und dann wird das Weichmaterial 66 in den umfangsseitig von der ersten Kanalwand 50 und bodenseitig von der zweiten Kanalwand sowie im Borstenmaterial 62 und 62' begrenzten wannenförmigen Raum eingespritzt. Dieser wird bis zum rückseitigen Ende der ersten Kanalwand 50 hin aufgefüllt, wobei bezüglich dieser Ebene vorstehende Noppen das Zungenreinigungselement 78 bilden. Dieses kann auch durch Lamellen oder andersartige Vorsprünge gebildet sein.

Beim Spritzen des Weichmaterials 66 fliesst dieses durch die Kanalwanddurchlässe 54 hindurch, um die auf der Vorderseite 24 vorstehenden weichelastischen Massage- und Reinigungselemente 20 zu bilden. In der gezeigten Ausführung werden gleichzeitig auf der Vorderseite 24' Massage- und Reinigungselemente 20 und auf der Rückseite 36 der Zahnbürste 10 Zungenreinigungselemente 78 ausgebildet. Sie sind einstückig miteinander verbunden. Weiter ist es auch möglich, dass dasselbe Weichmaterial 66, neben den genannten Elementen im Kopfteil 32, auch Elemente im Halsteil 30 und/oder Griffteil 28 ausbildet, beispielsweise Elemente im Bereich der Zeigefingerauflage 38 oder Daumenauflage 34.

In gezeigten Ausführungsbeispiel ist die freie Länge der weichelastischen Massage- und Reinigungselemente 20 kleiner als die freiliegende Länge, d.h. der freiliegende Teil 22, der kürzeren gespritzten Borsten 16, 18. Die Längenverhältnisse können jedoch auch andersartig ausgebildet sein.

Im vorliegenden Ausführungsbeispiel befindet sich der Anspritzpunkt 80 für das erste Borstenmaterial 62, wie in Fig. 35 bis 37 gezeigt, im Bereich des Anspritzkanals 74.

Die Anspritzpunkte 80' für das zweite Borstenmaterial 62' sind bezüglich der zweiten Durchlässe 42'' versetzt im Bereich der drei Durchlässe 42" angeordnet. Vorzugsweise sind sie bezüglich des Einzeldurchlasses 70 diagonal angeordnet, dies ergibt sich aus dem Aufbau des Spritzgusswerkzeugs 60.

Auch bei der weiter oben beschriebenen und in den Fig. 1 bis 25 gezeigten Ausführungsform sind die Anspritzpunkte 80 für das Borstenmaterial 62 und 80' für das Borstenmaterial 62' bezüglich der ersten Durchlässe 42' und zweiten Durchlässe 42" versetzt angeordnet.

Fig. 45 zeigt die Schritte zur Herstellung einer Handzahnbürste 10, wie sie oben beschrieben und in den Fig. 27 bis 44 dargestellt ist.

In einem ersten Schritt wird mittels Spritzguss der Bürstenkörper 26 mit den Verteilkanälen 44, 46 und den Durchlässen 42, 42' hergestellt. Dabei wird ein Hartmaterial verwendet und werden mindestens die Skelette des Griffteils 28 wie auch des Kopfteils 32 gespritzt.

In einem zweiten Schritt werden mittels Spritzgiessen die gespritzten Borsten erster Art 16 durch Einspritzen des Borstenmaterials 62 in den ersten Verteilkanal 44 beziehungsweise in den Anspritzkanal 74 hergestellt.

In einem dritten Schritt werden durch Spritzgiessen die gespritzten Borsten zweiter Art 18 durch Einspritzen des Borstenmaterials 62' in die zweiten Verteilkanäle 46 hergestellt.

In einem vierten Schritt wird das Weichmaterial 66 zur Bildung der weichelastischen Massage- und Reinigungselemente 20 und des Zungenreinigungselements 78 an den Bürstenkörper 26 angespritzt. Weiter kann dieses Weichmaterial 66 auch dazu verwendet werden, weitere Partien im Bürstenkörper 26 zu gestalten, beispielsweise im Halsteil 30, auf der Daumenauflage 34, der Zeigfingerauflage 38 oder im Griffteil 28.

In weiteren Schritten, die nicht detailliert ausgeführt werden, können die Handzahnbürsten 10 beschriftet und verpackt werden.

Es ist auch möglich, die gespritzten Borsten erster Art 16 und die gespritzten Borsten zweiter Art 18 im selben Verfahrensschritt zu spritzen. Dabei ist Voraussetzung, dass sich die beiden betreffenden Materialien nicht direkt berühren. Wenn beide Borstenmaterialien 62, 62' durch die Kanalwände 50, 52 klar getrennt sind, funktioniert dies.

Auch im vorliegenden Fall ist es möglich, auf ein Weichmaterial 66 zu verzichten und eine Zahnbürste nur aus gespritzten Borsten erster Art 16 oder nur aus gespritzten Borsten erster Art 16 und gespritzten Borsten zweiter Art 18 zu gestalten, d.h. ohne weichelastische Massage- und Reinigungselemente und ohne Zungenreinigungselement 78.

Eine auf die Weise, wie in Fig. 45 beschrieben, hergestellte Zahnbürste 10 besteht aus mindestens zwei Kunststoffkomponenten, einem Hartmaterial für das Griffteil 28, Halsteil 30 und Kopfteil 32 sowie einem Borstenmaterial für die Herstellung der gespritzten Borsten.

Weiter ist es auch möglich, weitere gespritzte Borsten beispielsweise dritter bis x-ter Art zu spritzen oder auch mehrere Weichmaterialien einzusetzen. Dies bei allen Ausführungsvarianten.

Je mehr Komponenten für die Herstellung der Zahnbürste verwendet werden, desto mehr Möglichkeiten bestehen in der Gestaltung der Borstenbündel und Griffteile.

Fig. 46 zeigt einen Querschnitt durch einen Teil eines Spritzgusswerkzeugs 60 zur Herstellung von Zahnbürsten gemäss der vorliegenden Erfindung. Es ist jener Teil des Spritzgusswerkzeugs 60 gezeigt, welcher der Herstellung von gespritzten Borsten 16, 18 dient.

Das Spritzgusswerkzeug 60 weist in bekannter Art und Weise einen feststehenden ersten Werkzeugteil 82 und einen dazu relativ verschiebbaren zweiten Werkzeugteil 84 auf. Die Trennebene der beiden Werkzeugteile 82, 84 ist mit 86 bezeichnet.

Die beiden Werkzeugteile 82, 84 begrenzen eine Trägerkavität 58, welche der Aufnahme des (nicht beborsteten) Borstenträgers 12 dient. In der gezeigten Ausführungsform ist der Borstenträger 12 durch das Trägerplättchen 14 gebildet, welches der Herstellung einer Zahnbürste gemäss den Fig. 1 bis 25 dient.

Die Herstellung einer Zahnbürste gemäss Fig. 27 bis 44 funktioniert gleich bis ähnlich. Es kommt der Kopfteil 32 in die entsprechend geformte Trägerkavität 58 zu liegen.

Durch den ersten Werkzeugteil 82 hindurch verläuft ein Hohlraum 88 für die Düse. Diese allgemein bekannte Düse ist hier nicht gezeigt; sie wird von der Spritzgussmaschine für die Herstellung der gespritzten Borsten erster Art 16 beziehungsweise gespritzten Borsten zweiter Art 18 mit den betreffenden Borstenmaterial 62 beziehungsweise 62' versorgt. Die Düse im Hohlraum 88 mündet in die Trägerkavität 58 beim betreffenden Anspritzpunkt 80 beziehungsweise 80', so dass das Borstenmaterial 62 beziehungsweise 62' in den zugeordneten ersten Verteilkanal 44 oder zweiten Verteilkanal 46 fliesst.

Der zweite Werkzeugteil 84 ist mehrteilig aufgebaut. Er weist eine Grundplatte 90 auf, in welcher ein die Trägerkavität 58 begrenzender Begrenzungskörper 92, ein Führungsblock 94 und ein Stützkörper 96 angeordnet sind. Der Stützkörper 96 liegt am Führungsblock 94 an und hält diesen in Anlage am Begrenzungskörper 92 auf dessen der Trägerkavität 58 abgewandten Seite, damit schlussendlich das Trägerplättchen 14 in der Trägerkavität 58 verklemmt wird und sich so durch die Verteilkanäle 44, 46 und die entsprechenden metallischen Gegenstücke geschlossene Kanalkonturen bilden. Dabei kann beispielsweise mit Übermassen bei der Höhe der Trägerplättchen 14 im Vergleich zum Platz in der Trägerkavität 58 die Klemmung und somit das Dichten verstärkt werden.

Weiter weist der zweite Werkzeugteil 84 pro zu spritzendem Borstenbündel 56 einen ersten Werkzeugeinsatz 98 und einen zweiten Werkzeugeinsatz 100 auf. Am ersten Werkzeugeinsatz 98 ist pro zu spritzender Borste erster Art 16 beziehungsweise Borste zweiter Art 18 eine durchgehende Borstenkavität 102 ausgebildet, welche der Ausbildung des Borstenstammes der Borsten 16, 18 dient und welche an die Trägerkavität 58 anschliesst, so dass das dieser zugeführte Borstenmaterial 62 beziehungsweise 62' durch die Durchlässe 42 beziehungsweise 42' oder 42" hindurch in die Borstenkavitäten 102 hineinströmen kann.

Auf der der Trägerkavität 58 abgewandten Seite des ersten Werkzeugeinsatzes 98 schliesst der zweite Werkzeugeinsatz 100 an. Dieser dient der Ausformung der Borstenkappe 104, d.h. des freien, nutzungsseitigen Endbereichs 104 der betreffenden gespritzten Borste 16, 18. Stellvertretend für alle übrigen Ausführungsformen ist die Borstenkappe 104 nur in den Fig. 54 bis 57 entsprechend gekennzeichnet. Der erste Werkzeugeinsatz 98 ist in einem zugeordneten, durchgehenden Einsatzdurchlass 106 des Begrenzungskörpers 92 angeordnet, durchgreift letzteren und liegt im geschlossenem Zustand des Spritzgusswerkzeugs 60 mit seiner dem Borstenträger 12 zugewandten Stirnfläche 108 am Borstenträger 12 an. Mit einem Endbereich 112, welcher an die der Stirnfläche 108 entgegengesetzten Stirnfläche 110 anschliesst, greift der erste Werkzeugeinsatz 98 in eine Führungsausnehmung 114 des Führungsblocks 94 ein. In dieser Führungsausnehmung 114 ist auch der zweite Werkzeugeinsatz 100 angeordnet. Mit seinem dem ersten Werkzeugeinsatz 98 abgewandten Ende liegt der zweite Werkzeugeinsatz 100 am Stützkörper 96 an.

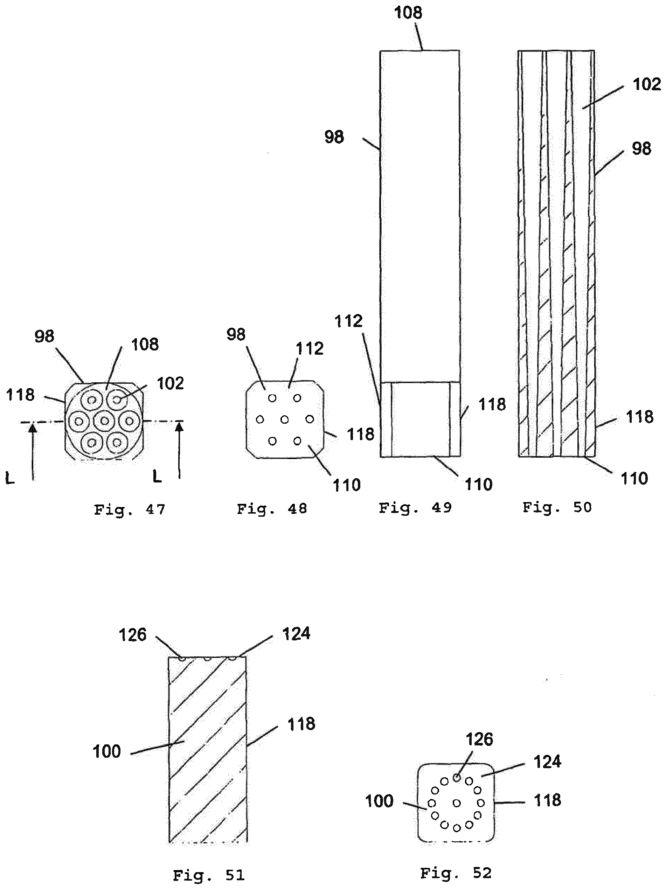

Die Führungsausnehmung 114 weist - im Querschnitt - eine Mehrkant-Kontur 116, bevorzugt eine Vierkant-Kontur auf, um den ersten Werkzeugeinsatz 98 und zweiten Werkzeugeinsatz 100 präzise aufeinander ausgerichtet zu führen, wie dies Fig. 53 zeigt. Zu diesem Zweck weisen der erste Werkzeugeinsatz 98 im Endbereich 112 und der zweite Werkzeugeinsatz 100 eine entsprechende Gegenkontur 118 auf, wie dies anhand der Fig. 47 bis 53 weiter unten beschrieben ist.

Die präzise Ausrichtung der Kappenkavitäten 126 auf die Borstenkavitäten 102 ist sehr wichtig, damit verhindert werden kann, dass sich aufgrund einer nicht genauen Zentrierung der beiden Kavitäten hinterschnittige Geometrien bilden oder die Borstenkappe 104 versetzt gegenüber dem übrigen Teil der gespritzten Borste 16, 18 steht. Dies würde beispielsweise beim Entformen dazu führen, dass die Borsten 16, 18 langgezogen werden, bis sich der Materialanteil im Hinterschnitt lösen kann.

Schlussendlich weisen der Begrenzungskörper 92, der Führungsblock 94 und der Stützkörper 96 Ausstosserdurchlässe 120 auf, welche von Ausstossstiften 122 durchgriffen sind und bei geöffnetem Spritzgusswerkzeug 60 dem Ausstossen des den gespritzten Borsten erster Art 16 beziehungsweise gespritzten Borsten zweiter Art 18 bestückten Borstenträgers 12 aus der Trägerkavität 58 dienen.

Der Vollständigkeit halber sei erwähnt, dass der Begrenzungskörper 92 in der Grundplatte 90 genau geführt wird.

Die Fig. 47 bis 50 zeigen den einstückigen ersten Werkzeugeinsatz 98 für die Herstellung eines Borstenbündels 56, welches hier aus sieben gespritzten Borsten 16 beziehungsweise 18 besteht. Selbstverständlich sind auch andere Borstenzahlen pro Werkzeugeinsatz 98 möglich. Mit dem Werkzeugeinsatz 98 wird in der Borstenkavität 102 der Borstenstamm der gespritzten Borsten 16, 18 geformt.

Im Endbereich 112, welcher beispielsweise sich etwa über 20% der gesamten Länge des ersten Werkzeugeinsatzes 98 erstreckt, weist der erste Werkzeugeinsatz 98 als Gegenkontur 118 einen quadratischen Querschnitt auf. Zu Entlüftungszwecken sind vorzugsweise die Ecken der Gegenkontur 118 gebrochen, vorzugsweise durch eine Anphasung von 45° oder eine entsprechende Rundung der Ecken. Der Führung in der Führungsausnehmung 114 dienen jedoch die ebenen Seiten der Gegenkontur 118.

Vom Endbereich 112 bis zur Stirnfläche 108 weist der erste Werkzeugeinsatz 98 einen kreisrunden Querschnitt auf. Entsprechend sind auch im Begrenzungskörper 92 die Einsatzdurchlässe 106 mit einem kreisförmigen Querschnitt ausgebildet, wobei zur Entlüftung des Werkzeugs zwischen dem ersten Werkzeugeinsatz 98 und dem zweiten Werkzeugeinsatz 100 ein dünner Spalt vorhanden sein kann.

Die Stirnfläche 108 und die weitere Stirnfläche 110 sind eben ausgebildet. Von der Stirnfläche 108 zur weiteren Stirnfläche 110 durchgehend sind am ersten Werkzeugeinsatz 98 die Borstenkavitäten 102 ausgenommen. Im gezeigten Ausführungsbeispiel sind diese kreisförmig und von der Stirnfläche 108 zur weiteren Stirnfläche 110 sich konisch verjüngend ausgebildet. Die Abmessungen entsprechen den in der Einleitung angegebenen Massen für die gespritzten Borsten 16 beziehungsweise 18.

Zur Herstellung der im Querschnitt sehr kleinen und bezüglich diesem äusserst langen Borstenkavitäten 102 wird für den ersten Werkzeugeinsatz 98 bevorzugt ein pulvermetallurgischer Stahl verwendet. In diesem kann in einem ersten Schritt mittels Laserbearbeitung pro Borstenkavität 102 ein durchgehendes Loch ausgebildet werden, durch welches im nächsten Schritt ein Erodierdraht gesteckt werden kann, um das Loch anschliessend im Erodierverfahren (Drahterosion) auf die gewünschte Form der Borstenkavität 102 zu erodieren bzw. auszudehnen. Das Herstellverfahren für die Borstenkavitäten 102 ist mit ein Grund, weshalb die Kavitäten für die gespritzten Borsten 16, 18 zweiteilig aufgebaut sind.

Mittels Drahterosion ist es auch möglich, die Borstenkavitäten 102 nicht nur mit kreisrunden Querschnitten auszubilden, sondern es sind auch mehreckige, ovale oder gar sternförmige Querschnitte möglich, welche über ihre Länge, falls gewünscht, auch eine Drehung aufweisen können. Der Kernpunkt bei der Gestaltung von Querschnittsverläufen ist darauf zu achten, dass die Entformung oder Zwangsentformung noch möglich ist.

Die Fig. 51 und 52 zeigen den zweiten Werkzeugeinsatz 100, welcher der Ausformung der als Borstenkappe 104 genannten Spitze der gespritzten Borsten 16 beziehungsweise 18 dient. Der zylinderförmige, einstückige zweite Werkzeugeinsatz 100 weist dieselbe Gegenkontur 118 wie der erste Werkzeugeinsatz 98 auf. Im gezeigten Ausführungsbeispiel sind die Kanten gerundet. Da die Gegenkonturen 118 am ersten wie auch am zweiten Werkzeugeinsatz 98 und 100 identisch sind, können diese beiden Teile aufeinander genau ausgerichtet im Führungsblock 94 mittels dessen Mehrkant-Kontur 116 genau geführt werden; siehe auch Fig. 53 .

Auf seiner dem ersten Werkzeugeinsatz 98 zugewandten Endfläche 124 weist der zweite Werkzeugeinsatz 100 von dieser Endfläche 124 ausgehende Kappenkavitäten 126 auf, welche mit den zugeordneten Borstenkavitäten 102 des ersten Werkzeugeinsatzes 98 fluchten, wie dies Fig. 53 zeigt. Die Kappenkavitäten 126 sind entsprechend der gewünschten Form der Spitze der gespritzten Borsten 16, 18 geformt und der Übergang von den Borstenkavitäten 102 zu den Kappenkavitäten 126 ist in bevorzugter Weise kontinuierlich. Im gezeigten Ausführungsbeispiel ist die Form der Kappenkavitäten 126 kugelkalottenförmig.

Aus entformungstechnischen Gründen ist es aber auch möglich, den Übergang nicht kontinuierlich zu gestalten und die Kappenkavitäten 126 im Durchmesser etwas enger anzulegen als die Durchmesser der Borstenkavitäten 102 im Bereich der Stirnfläche 110. Damit kann die Hinterschnittigkeit komplett vermieden werden. Dies bedeutet für den Durchmesser beziehungsweise die Querschnittsgeometrie der Kappenkavität 126 auf der Endfläche 124, dass sie maximal gleich gross ist wie die entsprechende Geometrie der Borstenkavitäten 102 im Bereich der Stirnfläche 110, vorzugsweise aber kleiner als diese ausgestaltet ist.

Im gezeigten Ausführungsbeispiel werden pro Borstenbündel 56 eine zentrale gespritzte Borste 16, 18 und um diese herum entlang eines Kreises gleichförmig verteilt sechs weitere gespritzte Borsten 16, 18 gespritzt. Die Längsachsen der Borstenkavität 102 der zentralen gespritzten Borste und von zwei Borstenkavitäten 102 der weiteren gespritzten Borsten liegen in einer mittleren Ebene, welche parallel zu zwei einander gegenüberliegenden Seiten der Gegenkontur 118 verläuft.

In bevorzugter Weise sind am zweiten Werkzeugeinsatz 100 eine zentrale Kappenkavität 126 und um diese herum auf dem genannten Kreis gleichmässig verteilt zwölf weitere Kappenkavitäten 126 ausgebildet, wobei die Achsen der zentralen Kappenkavitäten im rechtwinklig zueinander und parallel sowie mittig zu der Gegenkontur verlaufenden Ebenen liegen. Diese Ausführungsform hat den Vorteil, dass auf die Drehlage beim Einsetzen des zweiten Werkzeugeinsatzes 102 in die Führungsausnehmung 114 nicht geachtet werden muss. Dennoch ist es auch möglich, gleich viele Kappenkavitäten 126 wie Borstenkavitäten 102 auszubilden.

Dieselbe Lösung ist auch bei einer unterschiedlichen Anzahl von Borsten 16, 18 eines Borstenbündels 56 möglich.

Fig. 53 zeigt die beiden Werkzeugeinsätze 98, 100 im spritzbereiten Zustand gegenüber den Fig. 47 bis 52 vergrössert. Die Trennebene zwischen den beiden Werkzeugeinsätzen 98, 100 dient auch der Entlüftung der Borstenkavitäten 102 und der Kappenkavitäten 126 beim Spritzgiessen. Überdies sei erwähnt, dass der zweite Werkzeugeinsatz 100 aus einem anderen, insbesondere billigeren Stahl gefertigt werden kann, als der erste Werkzeugeinsatz 98.

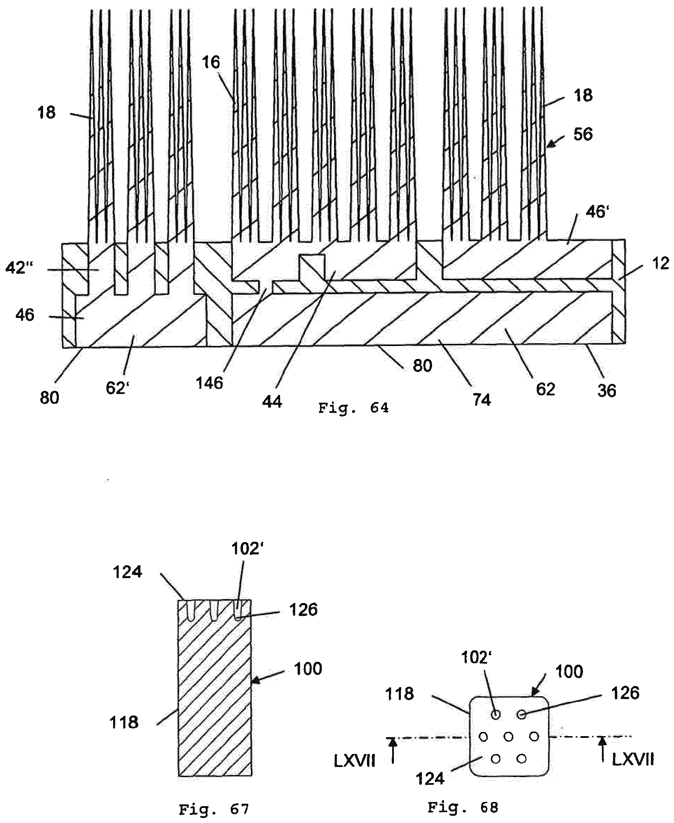

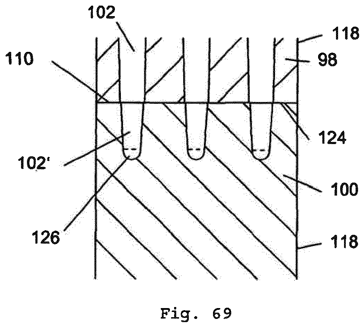

Die Fig. 67 und 68 zeigen eine weitere Ausführungsform eines zweiten Werkzeugeinsatzes 100, welcher der Ausformung der als Borstenkappe 104 genannten Spitze der gespritzten Borsten 16 beziehungsweise 18 dient. Die Eigenschaften und Funktionalitäten des in diesen Figuren gezeigten zweiten Werkzeugeinsatzes 100 entsprechen jenen der in Fig. 51 und 52 gezeigten und weiter oben beschriebenen Ausführungsform, mit der Ausnahme der Geometrie beziehungsweise der Aufteilung der Kavität zwischen den Borstenkavitäten 102 und den Kappenkavitäten 126; vergl. Auch Fig. 69 ..

Die Kappenkavitäten 126 sind entsprechend der gewünschten Form der Spitze der gespritzten Borsten 16, 18 geformt. Im Unterschied zu den in Fig. 51 und 52 gezeigten Kappenkavitäten 126 sind die in den Fig. 67 und 68 gezeigten Kavitäten des zweiten Werkzeugeinsatzes grösser beziehungsweise länger (entlang der Längsachse der gespritzten Borste beziehungsweise des zweiten Werkzeugeinsatzes gemessen) ausgebildet. Das heisst, dass in den Kavitäten des zweiten Werkzeugeinsatzes 100 neben den Kappenkavitäten 126 auch je ein Teil 102' der Borstenkavität 102 geformt ist. Die Übergangsstelle zwischen den ersten und zweiten Werkzeugeinsätzen 98 und 100 (die Trennebene) ist nicht mehr am Übergang vom Borstenstamm 103 zur Borstenkappe 104 angeordnet, sondern im Bereich des Borstenstammes 103. Ein Teil des Borstenstammes 103 wird im zweiten Werkzeugeinsatz 100 geformt.

Der Vorteil dieser Art der Aufteilung der Kavität für die Formung der gespritzten Borsten 16, 18 liegt darin, dass auch bei kleinen Durchmessern des Borstenstammes 103 auf der Seite der Borstenkappen 104 ein stabiler Herstellprozess (Drahterodieren) erreicht werden kann, da der Enddurchmesser des ersten Werkzeugeinsatzes 98 (bei gleicher Form der gespritzten Borsten 16, 18 und somit der entsprechenden Kavitäten) auf diese Weise grösser wird. Ein stabiler Herstellungsprozess heisst in diesem Fall auch, dass der runde Querschnitt der gespritzten Borsten 16, 18 genauer wird. Die feineren Strukturen können dann mit anderen Verfahren in den zweiten Werkzeugeinsatz 100 eingebracht werden.

Fig. 69 zeigt die beiden Werkzeugeinsätze 98, 100 aus den Fig. 67 und 68 im spritzbereiten Zustand im Bereich der Trennebene in vergrössertem Zustand. Dabei ist klar ersichtlich, dass ein Teil des Borstenstammes 103 - entsprechend dem Teil 102' der Borstenkavität 102 - vom zweiten Werkzeugeinsatz 100 geformt wird.

Der Enddurchmesser bewegt sich grössenmässig im gleichen Rahmen, wie bereits angegeben.

Mit einem Spritzgusswerkzeug 60, wie im Zusammenhang mit den Fig. 46 / 47 bis 53 und 67 - 69 gezeigt und beschrieben, können auch Einzelbündel 128 mit gespritzten Borsten 16, 18 hergestellt werden. Dazu ist einzig die Trägerkavität 58 unterschiedlich auszubilden, indem sie nicht mehr für die Aufnahme des Borstenträgers 12 bzw. des Trägerplättchens 14 ausgebildet ist, sondern eine Form entsprechend dem gewünschten Bündelstamm 130 aufweist, beispielsweise kreiszylinderförmig wie in den Fig. 54 bis 57 gezeigt.

Das Borstenmaterial 62, 62' wird durch die entsprechend ausgestaltete Düse im Hohlraum 88 in die als Bündelstammkavität ausgebildete Trägerkavität 58 eingespritzt, von wo das Borstenmaterial zur Ausbildung der gespritzten Borsten 16, 18 in die Borstenkavitäten 102 des ersten Werkzeugeinsatzes 98 und in die Kappenkavitäten 126 des zweiten Werkzeugeinsatzes 100 gelangt.

Selbstverständlich ist es möglich, in einem einzigen Arbeitszyklus mehrere Einzelbündel 128 herzustellen, wenn das Spritzgusswerkzeug 60 mit mehreren ersten und zweiten Werkzeugeinsätzen 98, 100 versehen ist und beispielsweise der erste Werkzeugteil 82 einen von der Düse im Hohlraum 88 ausgehenden Verteilkanal aufweist, welcher zu den einzelnen der Herstellung der Bündelstämme 130 dienenden Trägerkavitäten 58 führt. Oder generell im Spritzgusswerkzeug 60 mehrere Düsen angebracht sind.

Das in den Fig. 54 und 54a gezeigte Einzelbündel 128 weist den Bündelstamm 130 und sieben von diesem abstehende, gespritzte Borsten 16, 18 auf. Es sind wiederum eine zentrale gespritzte Borste und um diese herum verteilt die übrigen sechs gespritzte Borsten vorgesehen. Die gespritzten Borsten 16 beziehungsweise 18 d.h. ihre Längsachsen haben eine zueinander parallele Ausrichtung.

Der Durchmesser des Bündelstamms 130 entspricht einem Vielfachen des Durchmessers D1 einer einzelnen Borsten 16, 18 an der Austrittsstelle aus dem Bündelstamm 130. Der Durchmesser D1 des Borstenstamms 103 und somit der gespritzten Borsten 16, 18 am borstenträgerseitigen Ende ist der besseren Übersichtlichkeit halber nur in Fig. 54 eingezeichnet. Der Durchmesser des Bündelstamms 130 im Verhältnis zur einzelnen Borste beträgt 2:1 bis 6:1, vorzugsweise 2:1 bis 4:1.

Der Bündelstamm 130 hat eine Höhe von 1,5 mm bis 2,5 mm vorzugsweise 1,7 mm bis 2,1 mm.

Das in der Fig. 55 und 55a gezeigte Einzelbündel 128 ist gleich ausgebildet wie jenes gemäss der Fig. 54 und 54a , wobei einzig die Länge der gespritzten Borsten 16, 18 grösser ist; die Konizität der gespritzten Borsten 16, 18 ist entsprechend angepasst kleiner.

Mögliche Abmessungen für Einzelbündel 128 sind in der Einleitung angegeben. Als Borstenmaterialien 62, 62' werden auch hier dieselben Materialien wie für die übrigen Ausführungsformen verwendet, welche ebenfalls in der Einleitung angegeben sind.

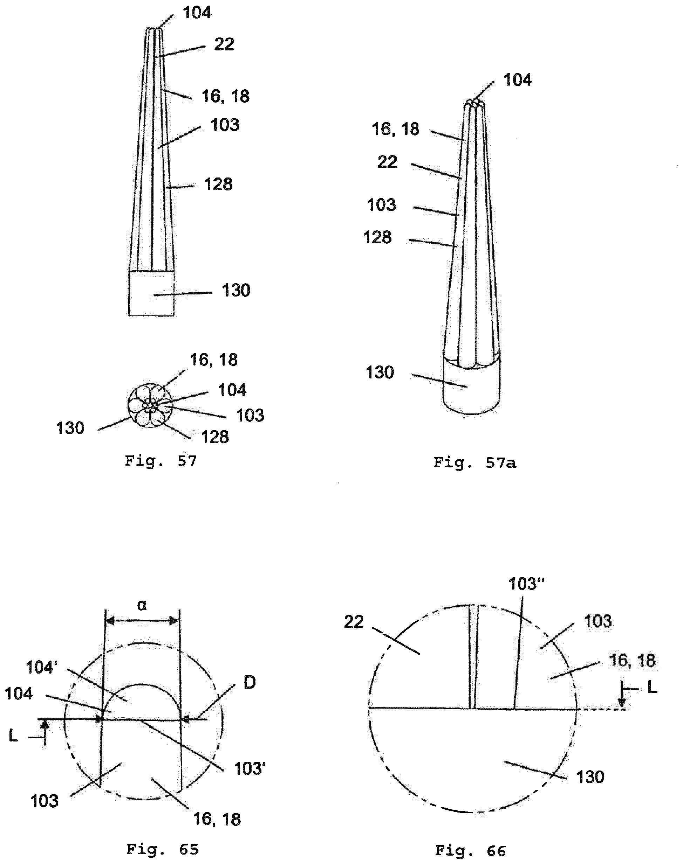

Wird nach dem Spritzgiessen der Einzelbündel 128, jedoch auch der Borstenbündel 56, die Abkühlung derart ausgeführt, dass der Bündelstamm 130 beziehungsweise die Borstenbasis 64 in der Mitte langsamer abkühlt als radial aussen, führt dies dazu, dass sich der Bündelstamm 130 entlang der Mittellängsachse des Borstenbündels 56 zusammenzieht. Die Austrittsfläche der gespritzten Borsten 16, 18 wird kugelartig gegen innen gewölbt, sodass sich die im Spritzgusswerkzeug 60 noch parallel zueinander ausgerichteten, aussen liegenden gespritzten Borsten 16, 18, wie in den Fig. 54, 54a und 55, 55a gezeigt, sich mit ihren freien Enden aufeinander zu bewegen, wie dies die Fig. 56, 56a und 57,57 a zeigen. Die gespritzten Borsten 16, 18 bilden quasi eine geschlossene Rosette, wie die Draufsichten zeigen; maximal so stark, dass sich ihre freien Enden berühren.

Die Nutzung der Einzelbündel 128 kann beispielsweise auf die nachfolgend beschriebene Art passieren. Mehrere Einzelbündel 128 werden in demselben Spritzgusswerkzeug hergestellt. Sie können beispielsweise durch ihre Anspritzkanäle verbunden sein oder auch lose produziert werden. Anschliessend können sie in die entsprechenden Produkte montiert und darin befestigt werden. Dabei ist es möglich, die Geometrie der Bündelstämme 130 anzupassen, damit die Montage und Befestigung optimiert passieren kann. Beispielsweise durch Schnappnasen für das Einrasten in Bürstenkörpern oder auch durch umlaufende Konturen für Schweissungen etc. Die Einzelbündel 128 können beweglich oder unbeweglich an einem Bürstenkörper fixiert werden.

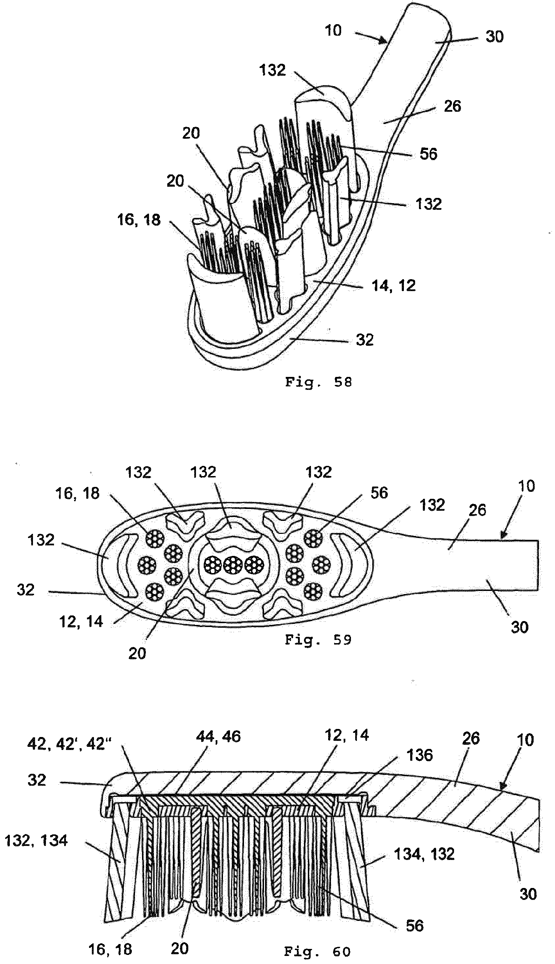

In den Fig. 58 bis 60 ist der Kopfteil 32 und Halsteil 30 einer weiteren Handzahnbürste 10 gemäss der vorliegenden Erfindung gezeigt. Am Trägerplättchen 14 sind wiederum gespritzte Borsten erster Art 16 und gegebenenfalls gespritzte Borsten zweiter Art 18 aus dem betreffenden Borstenmaterial 62 beziehungsweise 62' und (borstenlose) weichelastische Massage- und Reinigungselemente 20 aus dem Weichmaterial 66 angespritzt, auf dieselbe Art und Weise wie dies weiter oben im Zusammenhang mit der Ausführungsform gemäss den Fig. 1 bis 25 gezeigt und beschrieben ist. Aus Lesbarkeitsgründen wird auf eine Wiederholung der Beschreibung verzichtet; die oben gemachten Ausführungen gelten somit uneingeschränkt auch für die in den Figuren 58 - 60 gezeigte Ausführungsform. Zusätzlich ist das Trägerplättchen 14 mit daran befestigten weiteren Borstenbündeln 132 aus extrudierten, konventionellen Borsten 134 versehen.

Zur Herstellung einer derartigen Zahnbürste 10 kann das Trägerplättchen 14 zuerst mit den extrudierten, konventionellen Borsten 134, welche die weiteren Borstenbündel 132 bilden, versehen werden, wobei anschliessend die gespritzten Borsten 16 beziehungsweise 18 hergestellt und danach die (borstenlosen) weichelastischen Massage- und Reinigungselemente 20 gespritzt werden.

Dazu bietet sich vor allem das In Mould Verfahren (IAP oder IMT) an. Dabei werden die extrudierten, konventionellen Borsten 134 im Spritzgusswerkzeug mit dem Hart- und/oder Weichmaterial des Trägerplättchens 14 an ihren der Nutzungsseite abgewandten Endabschnitt, zur Verankerung am Trägerplättchen 14, umspritzt. Anschliessend wird das Trägerplättchen 14, wie vorab beschrieben, mit gespritzten Borsten 16, 18 und (borstenlosen) weichelastischen Reinigungs- und Massageelementen 20 versehen.

Es ist jedoch auch denkbar, dass die weiteren Borstenbündel 132 aus extrudierten, konventionellen Borsten 132 als letztes in den Borstenträger 12, beziehungswiese das Trägerplättchen 14 eingesetzt werden. Das heisst, dass zuerst auf die bereits beschriebe Art und Weise die gespritzten Borsten 16, 18 und gegebenenfalls die (borstenlosen) weichelastischen Massage- und Reinigungselemente 20 gespritzt werden, bevor die extrudierten, konventionellen Borsten 134 in den Borstenträger 12 beziehungsweise das Trägerplättchen 14 eingesetzt werden (im AFT Verfahren oder Ankerstanzverfahren).

Zur Herstellung der weiteren Borstenbündel 132 aus extrudierten, konventionellen Borsten 134 im AFT-Verfahren werden konventionelle Borsten 134 durch die betreffenden durchgehenden Durchlässe oder Ausnehmungen des Trägerplättchens 14 hindurch gesteckt und anschliessend werden auf der Rückseite 36' des Trägerplättchens 14 die der Nutzungsseite abgewandten Endbereiche der extrudierten, konventionellen Borsten 134 aufgeschmolzen, um zur Befestigung am Trägerplättchen 14 einen Schmelzeteppich 136 auszubilden.

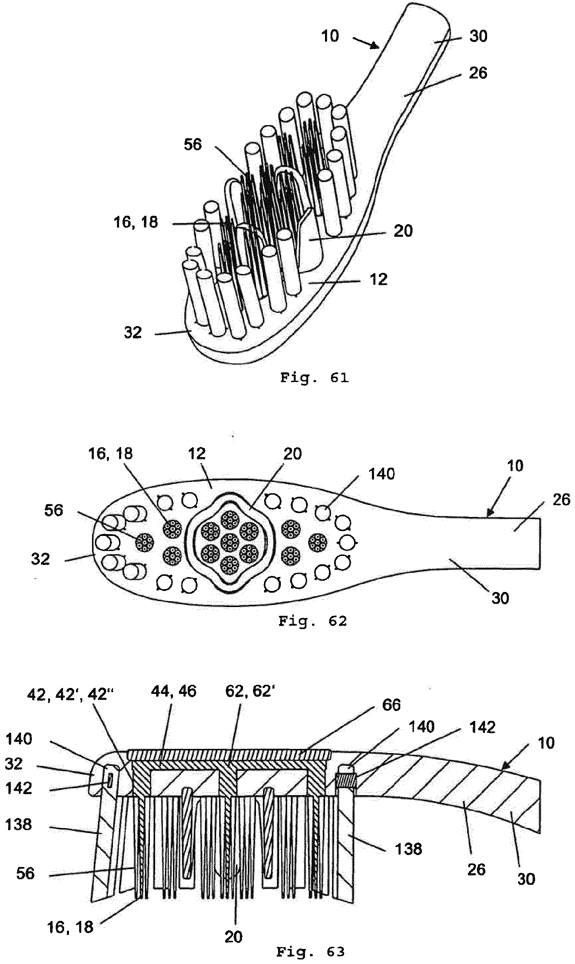

Weiter ist es möglich, wie dies die Fig. 61 bis 63 zeigen, eine Zahnbürste 10 gemäss der vorliegenden Erfindung zusätzlich mit gestanzten Borsten 138 zu versehen. Gezeigt ist dies am Beispiel einer erfindungsgemässen Zahnbürste, analog jener gemäss den Fig. 27 bis 44 . Aufgrund der besseren Lesbarkeit wird auch hier erneut auf eine vollständige Beschreibung verzichtet und auf die Beschreibung der Fig. 27 bis 44 verwiesen.

Am Kopfteil 32, d.h. an den den Borstenträger 12 bildenden Bürstenkörper 26, werden gespritzte Borsten erster Art 16 und/oder allenfalls gespritzte Borsten zweiter Art 18 sowie gegebenenfalls die (borstenlosen) weichelastischen Massage- und Reinigungselemente 20 angespritzt, wie dies weiter oben (insbesondere zu Fig. 27 bis 44 ) beschrieben und gezeigt ist. Zusätzlich werden jedoch bei der Herstellung des Bürstenkörpers 26, in dessen Kopfteil 32, Sacklöcher 140 für die weiteren Borstenbündel 138 mit extrudierten, konventionellen Borsten 134 ausgebildet, welche in allgemein bekannter Art und Weise u-förmig gebogen und mittels eines Drahtankerabschnitts 142 durch Ankerstanzen in diesen Sacklöchern 140 am Bürstenkörper 26 befestigt werden.

In bevorzugter Weise erfolgt das Stanzen der weiteren Borstenbündel 138 mit extrudierten, konventionellen Borsten 134 nach dem Spritzgiessen der gespritzten Borsten 16 beziehungsweise 18 und der (borstenlosen) weichelastischen Massage- und Reinigungselemente 20. Die Sacklöcher 140 werden vorzugsweise mit der Hartkomponente des Griffteils 28 ausgebildet. Vorzugsweise bildet dabei das Borstenmaterial 62, 62' für die gespritzten Borsten 16, 18 keinen Teil des Sackloches 140. Die Rückseite des Kopfteils 32 ist vorzugsweise hinter den Sacklöchern 140 ebenfalls frei von Borstenmaterial 62, 62'.

Nur der Vollständigkeit halber sei erwähnt, dass sowohl bei der Ausführungsform gemäss den Fig. 58 bis 60 als auch bei jener gemäss den Fig. 61 bis 63 auf weichelastische Massage- und Reinigungselemente 20 verzichtet werden kann.

An dieser Stelle sei erwähnt, dass es auch möglich ist, bei der in den Fig. 1 bis 25 gezeigten Ausführungsform, im Kopfteil 32 des Borstenträgers 12 Sacklöcher 140 vorzusehen, in welche auf bekannte Art und Weise weitere Borstenbündel 138 mit extrudierten, konventionellen Borsten 134 gestanzt werden. Dazu ist es beispielsweise möglich, den um das Trägerplättchen 14 herum verlaufende Teil des Kopfteils 32 etwas breiter als gezeigt auszubilden und dort eine Reihe von Sacklöchern 140 auszubilden.

Es ist auch denkbar, das Trägerplättchen 14, in Längsrichtung der Zahnbürste 10 gesehen, kürzer auszubilden und in Längsrichtung gesehen auf der einen, auf der anderen oder auf beiden Seiten des Trägerplättchens 14 im Kopfteil 32 die Sacklöcher 140 für die weiteren Borstenbündel 138 mit konventionellen, extrudierten Borsten 134 vorzusehen.

Wie dies die Fig. 64 zeigt, ist es auch denkbar, dass der Borstenträger 12, sei es das Trägerplättchen 14 oder der Bürstenkörper 26, auf der Rückseite 36, 36' einen Anspritzkanal 74 aufweist, welcher durch einen Durchbruch 146 mit dem ersten Verteilkanal 44 auf der Vorderseite 24 strömungsverbunden ist.

Die gespritzten Borsten erster Art 16, gemäss Fig. 64 , werden, wie weiter oben beschrieben, gespritzt, indem beim Anspritzpunkt 80 in den Anspritzkanal 74 das Borstenmaterial 62 eingespritzt wird, welches durch den Durchbruch 146 hindurch in den ersten Verteilkanal 44 zur Bildung der gespritzten Borsten erster Art 16 gelangt.

Es ist auch möglich, den zweiten Verteilkanal 46 auf der Rückseite 36 vorzusehen und durch die zweiten Durchlässe 42" hindurch die gespritzten Borsten zweiter Art 18 herzustellen, wie dies im Zusammenhang mit dem in den Fig. 1 bis 25 gezeigten Ausführungsbeispiel beschrieben ist.

In der Ausführungsform gemäss Fig. 64 ist jedoch auf der Vorderseite 24 des Borstenträgers 12 ein weiterer zweiter Verteilkanal 46' vorhanden, welcher mit dem zweiten Verteilkanal 46 strömungsverbunden ist. Der weitere zweite Verteilkanal 46 kann zu diesem Zweck auf der Vorderseite 24 um den ersten Verteilkanal 44 herum verlaufen und über einen weiteren Durchbruch 146 mit dem zweiten Verteilkanal 46 verbunden sein.

Zum Spritzgiessen der gespritzten Borsten zweiter Art 18, gemäss Fig. 64 , wird das Borstenmaterial 62' beim Anspritzpunkt 80' in den zweiten Verteilkanal 46 eingespritzt, von wo es einerseits durch die zweiten Durchlässe 42" und andererseits durch den betreffenden Durchbruch in den weiteren zweiten Verteilkanal 46 zur Bildung der gespritzten Borsten zweiter Art 18 fliesst.

Das in Fig. 64 gezeigte Ausführungsbeispiel zeigt auf, dass es auch möglich ist, durch Spritzgiessen mehrere Borstenbündel 56 durch einen einzelnen Durchlass 42 beziehungsweise Durchbruch 146 hindurch auszubilden; d.h. die Kavitäten für mehrere Borstenbündel mit Borstenmaterial zu befüllen.

Das Trägerplättchen 14 aus Fig. 64 besitzt Verteilkanäle 44, 46 auf der Vorderseite 24 wie auf der Rückseite 36'. Die Formgebung für Kanäle im Herstellungsprozess erfolgt demzufolge von beiden Werkzeugteilen 82, 84 des Spritzgusswerkzeugs her. Der Aufbau ist grundsätzlich dreilagig möglich, von der Rückseite 36' her ist zuerst ein Verteilkanal 44, 46 ausgebildet, dann folgt eine Schicht mit dem Material des Trägerplättchens 14 und dann wiederum eine Schicht mit Verteilerkanälen 44, 46 an welchen die gespritzten Borsten 16, 18 direkt angeformt sind.

Der Aufbau des Trägerplättchens 14 gemäss Fig. 64 bringt verschiedene Vor- und Nachteile mit sich. Ein Vorteil der Ausführungsform ist, dass durch die Mehrlagigkeit der Verteilkanäle neue komplexere Anordnungsmöglichkeiten für Borstenbündel 56 und auch für gespritzte (borstenlose) weichelastische Massage- und Reinigungselemente 20 geschaffen werden. Die Materialverteilung im Trägerplättchen 14 ist ebenfalls auf komplexere Weise möglich. Nachteilig kann sein, dass das Trägerplättchen 14 durch die ganzen Gestaltungen dicker wird.

Werden die gespritzten Borsten erster Art 16 und die gespritzten Borsten zweiter Art 18 (bei allen Ausführungsformen) nicht gleichzeitig gespritzt, wird die zweite Kanalwand 52 vom betreffenden ersten beziehungsweise zweiten Verteilkanal 44, 46 her mit erheblichem Druck beaufschlagt. Um die dadurch entstehenden Kräfte aufnehmen zu können, ist die zweite Kanalwand 52 entsprechend stabil, d.h. dick auszubilden. Es ist jedoch auch möglich, die zweite Kanalwand 52 diesbezüglich dünner auszubilden; damit jedoch bei den hohen Spritzdrücken die zweite Kanalwand 52 nicht beschädigt wird, ist sie in diesem Fall mittels des Spritzgusswerkzeugs 60 abzustützen. Dies kann beispielsweise durch eine Stützgeometrie geschehen, welche in den zweiten Verteilkanal 46 beziehungsweise ersten Verteilkanal 44 eingreift.

Dabei ist es möglich, die sogenannte Core-Back Technologie anzuwenden. In dem Fall ist am Anfang des Spritzguss-Zyklus ein Kern (englisch Core), das heisst eine Stützgeometrie in den entsprechenden Verteilkanal 44, 46 oder die entsprechenden Verteilkanäle eingefahren und das erste Borstenmaterial 62 wird eingespritzt. Anschliessend werden die Kerne zurückgezogen und es wird das weitere Borstenmaterial 62" für beispielsweise gespritzte Borsten zweiter Art 18 eingespritzt.

Die zeitliche Differenz zwischen den Spritzgussvorgängen beträgt zwischen 0.5 s und 2,3 s, vorzugsweise zwischen 1,2 s und 1,8 s. Diese Schritte passieren in demselben Zyklus, das Trägerplättchen 14, beziehungsweise der Borstenträger 12, wird zwischen den Zyklen nicht umgelegt.

Liegt die erste Kanalwand 50, wie in den gezeigten Ausführungsbeispielen, bei der radial äusseren Wand des Borstenträgers 12, ist eine dünne Ausbildungsform möglich, wenn die Trägerkavität 58 derart ausgebildet ist, dass sie den Borstenträger 12 umfangsseitig stützt.

Der Borstenträger 12 gemäss Fig. 64 kann zusätzlich zum ersten Verteilkanal 44 einen zweiten Verteilkanal 46 aufweisen.

Vom zweiten Verteilkanal 46 können zweite Durchlässe 42" für die gespritzten Borsten zweiter Art 18 ausgehen.

Abschliessend ist zur Figur 64 zu erwähnen, dass auf die Verteilkanäle auf der Vorder- bzw. Rückseite des Borstenträgers 12 komplett verzichtet werden kann, und sich damit ein Kissen aus Borstenmaterial 62 bilden kann, welches mehrere Borstenbündel 56 speist und dadurch flexibel innerhalb des Borstenträgers 12 beziehungsweise Trägerplättchens 14 aufgehängt ist.

Die Fig. 65 zeigt, gegenüber Fig. 55 vergrössert, einen nutzungsseitigen Endabschnitt des Borstenstamms 103 einer gespritzten Borste 16, 18. An das nutzungsseitige Ende 103' des Borstenstamms 103 schliesst integral die Borstenkappe 104 an. Die hier eine sphärische Form, insbesondere eine Halbkugelform, aufweisende Borstenkappe 104 bildet den Nutzugsseitigen Endbereich mit dem nutzungsseitigen Ende der Borste 16, 18.

An Stelle der halbkugelförmigen Borstenkappe 104 kann der speziell geformte, nutzungsseitige Endbereich 104' der gespritzten Borste 16, 18 auch kegelförmig oder eben mit einem gerundeten Übergang zur Mantelfläche des Borstenstamms 103 ausgebildet sein. Ebenfalls ist es denkbar, den nutzungsseitigen Endbereich 104' der Borste 16, 18 auf zu splitten und so eine gespritzte Borste 16, 18 mit mehreren "Enden" zu formen.

All dies ist bei einem vorgeschlagenen Spritzgusswerkzeug durch eine entsprechende Ausformung des zweiten Werkzeugeinsatzes 100, der Kappenkavität 126 möglich.

Weiter ist es auch denkbar, auf einen speziell geformte nutzugsseitigen Endbereich 104' der gespritzten Borsten 16, 18 zu verzichten und das ebene freie Ende 103' des Borstenstamms 103 als nutzungsseitiges Ende der Borsten 16, 18 zu verwenden. In diesem Fall ist der Übergang vom ebenen freien Ende 103' zur Mantelfläche des Borstenstamms 103 scharfkantig. Beim vorgeschlagenen Spritzgusswerkzeug kann dies auf einfache Art und Weise verwirklicht werden, in den der zweite Werkzeugeinsatz 100 entsprechend eben ausgebildet wird.

Mit L ist in Fig. 65 die Länge des Borstenstamms 103 bezeichnet, wobei hier nur der diesseitige Endbereich dieser Länge gezeigt sichtbar ist, das andere Ende ist entsprechend in der Fig. 66 angegeben.

Fig. 66 zeigt gegenüber Fig. 55 vergrössert teilweise zwei Borsten 16, 18 bei deren Austritt aus dem Bündelstamm 130 mit dem borstenkörperseitigen Ende 103". Besonders gut erkennbar ist, dass die gespritzten Borsten 16, 18 bei ihrem Borstenfuss beim borstenträgerseitigen Ende 103" voneinander beabstandet sind.

Stellvertretend für alle Ausführungsformen sind nur in den Fig. 54, 65 und 66 die Durchmesser D, D1, die Länge L und der Konuswinkel α des Borstenstamms 103 entsprechend bezeichnet.

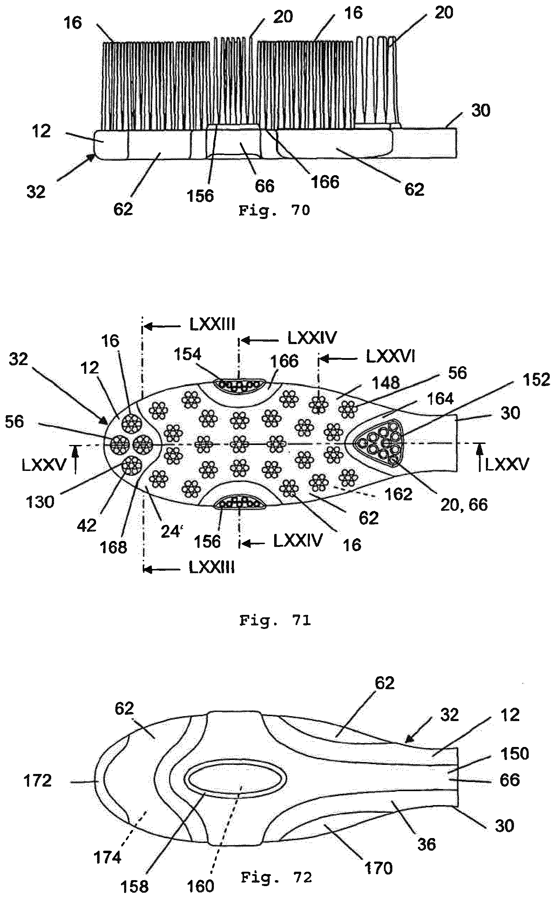

Anhand der Fig. 70 - 76 wird eine weitere Ausführungsform einer Handzahnbürste 10 gemäss der vorliegenden Erfindung näher erläutert. Im Unterschied zu den bereits gezeigten Ausführungsformen erfolgt die Materialverteilung für die gespritzten Borsten 16 in der vorliegenden Ausführungsform nicht ausschliesslich über Verteilkanäle 46. Die Verteilung erfolgt grösstenteils flächig, das heisst, dass die gespritzten Borsten 16 aus einer Fläche 148 mit Borstenmaterial 62 heraustreten.

Der Borstenträger 12 im Kopfteil 32 ist hier einstückig mit dem Halsteil 30 und dem Griffteil aus einem Hartmaterial im Spritzgussverfahren ausgebildet. Das Hartmaterial bildet das tragende, stabilisierende Gerippe der Handzahnbürste 10.

Selbstverständlich kann an das Hartmaterial im Halsteil 30 und/oder Griffteil 28, in bekannter Art und Weise, ein weiteres Material - Hartmaterial oder Weichmaterial - angespritzt sein.

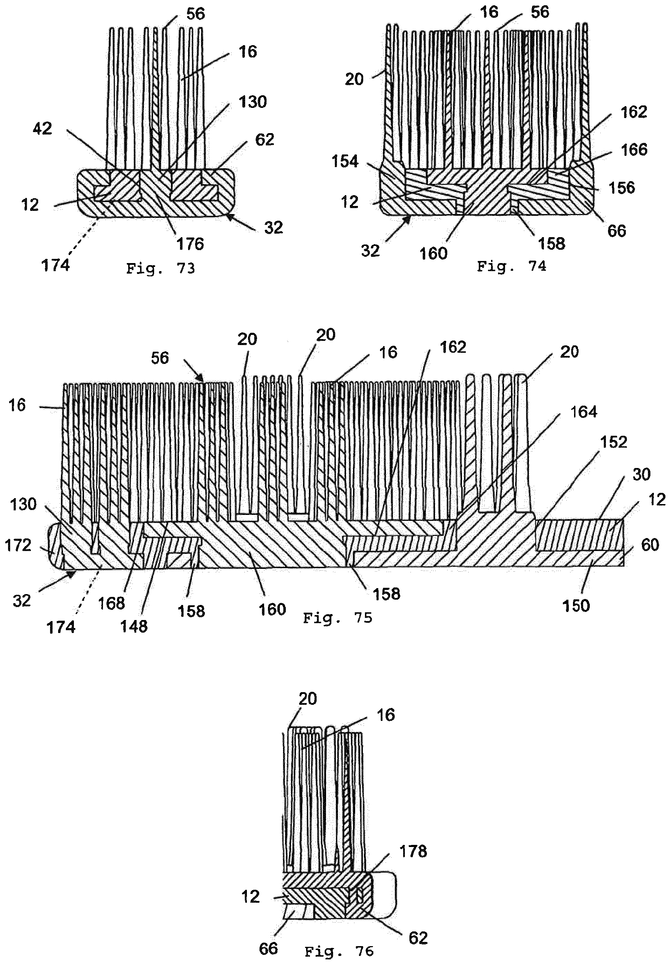

Im gezeigten Ausführungsbeispiel verläuft durch den Halsteil 30, auf der Rückseite 36, ein Speisekanal 150 für die Zuführung des Weichmaterials 66 für die weichelastischen Massage- und Reinigungselemente 20 vom Halsteil 30 in den Kopfteil 32; siehe Fig. 72 und 75 .

Von der Vorderseite 24' zum Boden des Speisekanals 150 verläuft im dem Halsteil 30 zugewandten Endbereich des Kopfteils 32 - ein, in etwa Dreieck förmiger, Weichmaterialdurchlass 152. Dieser ist mit dem Weichmaterial 66 gefüllt und das Weichmaterial bildet, gegenüber der Vorderseite 24' vorstehende (borstenlose) weichelastische Massage- und Reinigungselemente 20. Im gezeigten Ausführungsbeispiel sind diese mit kreisrundem Querschnitt, gegen das freie Ende hin sich (leicht) konisch verjüngend, stammartig ausgebildet. Sie können jedoch auch andere Formen, beispielsweise wie in Fig. 21 oder 40 gezeigt, aufweisen.

Je ein weiteres Feld 154 weichelastischer Massage- und Reinigungselemente 20 ist auf jeder Seite des Kopfteils 32, in Längsrichtung gemessen etwa in der Mitte des Kopfteils 32, vorgesehen. Dort weist der Borstenträger 12 eine, zur Seite hin freie, von der Vorderseite 24' zur Rückseite 36 durchgehende Seitenausmessung 156 auf, welche auf der Rückseite 36 mit dem Speisekanal 150 verbunden ist; dieser erstreckt sich auf der Rückseite 36 kreuzartig - vom Halsteil 30 - zu den Seitenausnehmungen 156, wobei er mitten im Kopfteil 132 - im Kreuzungsbereich - durch eine ovale Rippe 158 des Borstenträgers 12 begrenzt ist.

Die Seitenausnehmungen 156 sind, vom Speisekanal 150 her, mit dem Weichmaterial 66 gefüllt. Auch hier stehen die aus dem Weichmaterial 66 gespritzten, borstenlosen, weichelastischen Massage- und Reinigungselemente 20 gegenüber der Vorderseite 24' vor. Sie sind hier sich (leicht) konisch verjüngend mit kreisrundem Querschnitt, stammartig ausgebildet.

Die ovale Rippe 158 umgrenzt einen zentralen Durchlass 160, welcher sich von der Rückseite 36 zu einer grossflächigen Vertiefung 162 auf der Vorderseite 24' des Borstenträgers 12 erstreckt. Diese Vertiefung 162 ist Halsteil 30 seitig durch eine dem Weichmaterialdurchlass 152 begrenzende Rippe 164 des Borstenträgers 12 und seitlich durch bogenförmige Rippen 166, welche die Seitenausnehmungen 156 begrenzen, begrenzt. Gegen das freiliegende Ende des Kopf teils 32 hin ist die Vertiefung 162 durch eine wellenförmig verlaufende Frontwand 168 begrenzt, welche durch den Borstenträger 12 gebildet ist.

Zwischen der Rippe 164 und den Rippen 166, sowie zwischen diesen und der Frontwand 168 ist der Borstenträger 12 gegenüber den seitlichen Aussenkanten des Kopfteils 32 zurückversetzt ausgebildet, so dass das Borstenmaterial 62 beim Spritzgiessen in diesen Bereichen seitlich um den Borstenträger 12 herumfliessen kann; siehe insbesondere Fig. 73 und 76 .

Die grossflächige Vertiefung 162 ist mit dem Borstenmaterial 62 aufgefüllt, so dass dieses einen Oberflächenbelag auf dem Borstenträger 12 bildet, aus welchem eine Vielzahl Borstenbündel 56 mit, hier jeweils sieben, gespritzten Borsten 16 abstehen. Diese sind einstückig mit dem den Oberflächenbelag bildenden Borstenmaterial 66 ausgebildet.

Für die Herstellung jedes dieser Borstenbündel 56 weist das betreffende Spritzgusswerkzeug erste und zweite Werkzeugeinsätze 98, 100 auf, wie weiter oben beschrieben und in den Fig. 47 - 53 oder 67 - 69 gezeigt.

Wie dies insbesondere aus der Fig. 72 hervorgeht, ist auf der Rückseite 36 der kreuzförmig ausgebildete, mit Weichmaterial 66 gefüllte Speisekanal 150 mit dem Hartmaterial des Borstenträgers 12 begrenzt. Diese rippenartige Begrenzung begrenzt andererseits - in Längsrichtung gesehen zwischen den bogenförmigen Rippen 166 und der Rippe 164 - auf der Rückseite 36 seitliche Bereiche 170 mit Borstenmaterial 62.

Das dem freien Ende des Kopfteils 32 zugewandte Ende des Speisekanals 150 ist mit einer weiteren rippenartigen Begrenzung des Borstenträgers 12 begrenzt, welche sich wellenförmig auf der Rückseite 36 - in Längsrichtung gesehen - vom vorderen Ende der einen Rippe 166 zur anderen erstreckt.

Schlussendlich weist der Borstenträger 12 beim freien Ende, auf der Rückseite 36, eine vorstehende Endrippe 172 auf. Diese begrenzt zusammen mit der oben genannten weiteren rippenartigen Begrenzung eine von der einen zur anderen Seite verlaufende, kanalartige Vertiefung 174, welche ebenfalls mit dem Borstenmaterial 62 gefüllt ist.

Von dieser kanalartigen Vertiefung 174 verlaufen zur Vorderseite 24' des Borstenträgers 12, hier vier, Durchlässe 42. Diese sind, vier Borstenstämme 130 bildend, von der Rückseite 36 her mit dem Borstenmaterial 62 gefüllt. Dieses bildet auch pro Borstenstamm 130, hier sieben, gespritzte Borsten 16 aus, welche von der Vorderseite 24' frei abstehen.

Diese Durchlässe 42 befinden sich zwischen der Frontwand 168 und dem freien Endbereich des Kopfteils 32.

Alle Bereiche mit Borstenmaterial 62 sind somit gegenüber allen Bereichen mit Weichmaterial 66 mittels des Hartmaterials des Borstenträgers 12 voneinander getrennt. Alle Bereiche mit Borstenmaterial 62 sind miteinander verbunden und alle Bereiche mit Weichmaterial 66 sind miteinander verbunden.

Selbstverständlich ist es auch möglich, ein Trägerplättchen 14 (ähnlich/oder gleich dem oben beschriebenen und in den Fig. 70 - 76 gezeigten Borstenträger) als Borstenträger auszubilden und entsprechend mit einer Oberflächenschicht 148 aus Borstenmaterial zu versehen, mit welcher integral von ihr abstehende gespritzte Borsten beziehungsweise Borstenbündel ausgebildet sind. Dieses mit dem Borstenmaterial versehene Trägerplättchen 14 ist am Kopfteil des Bürstenkörpers befestigt, wie weiter oben beschrieben.

Die in den Fig. 70 bis 76 gezeigte und oben beschriebene Ausführungsform eignet sich auch für eine elektrische Zahnbürste.

Die aus der Fläche 148, d.h. aus dem Borstenmaterialbelag austretenden gespritzten Borsten 16 sind spezifisch gezeigt bei den Borstenbündeln 56 in der Kopfmitte der Fig. 70 - 76 . Das Borstenmaterial 62 wird entweder direkt im Kopfteil 32 angespritzt oder wird vom Griffteil 28 her über den Halsteil 30 in den Kopf teil 32 geführt. Im vorliegenden Fall ist der Anspritzpunkt des Borstenmaterials direkt im Kopfteil 32 vorgesehen. Das Borstenmaterial 62 verteilt sich im Kopfteil 32 so, dass es sich flächig ausbreitet und die gespritzten Borsten 16 aus dieser flächigen Materialausbreitung heraus ausbildet. Dadurch wird mit dem Borstenmaterial 62 grösstenteils auch die Oberfläche zwischen den betreffenden Borstenbündeln 56 gebildet.

Daneben ist in den besagten Figuren auch ersichtlich, dass (borstenlose) weichelastische Massage- und Reinigungselemente 20 gleichzeitig geformt werden können. In Fig. 71 sieht man diese im Bereich des Übergangs vom Halsteil 30 zum Kopfteil 32 und anderseits seitlich des Bürstenkopfs in den Feldern 154 und 156. Diese sind beispielhaft in der Form jeweils eines Stamms ausgeführt, können selbstverständlich aber jegliche spritzgiessbare Formen einnehmen.

Im vorderen Bereich des Kopfteils 32 ist ersichtlich, dass Borstenbündel 56 geformt sind und diese direkt von Hartmaterial des Borstenträgers 12 umgeben sind. Diese Borstenbündel 56 werden von der Rückseite 36 der Zahnbürste her mit Borstenmaterial 62 ausgebildet beziehungsweise geformt.

Im vorliegenden Beispiel sind die Materialien für die gespritzten Borsten 16 sowie für die (borstenlosen) weichelastischen Massage- und Reinigungselemente 20 durch Hartmaterial getrennt. Das heisst, die Zahnbürste 10 ist so gestaltet, dass die gespritzten Borsten 16 wie auch die weichelastischen Massage- und Reinigungselemente 20 im selben Spritzgiesszyklus gleichzeitig oder zeitlich leicht versetzt gespritzt werden können.

In den Fig. 73 bis 76 sind verschiedene Schnitte durch den in den Fig. 70 bis 72 gezeigten Kopfteil 32 dargestellt. Sie zeigen insbesondere die Materialverteilung und die Verbindungsmöglichkeiten der verschiedenen Materialien. Die Verbindungsmöglichkeiten sind wichtig, weil sich das Borstenmaterial 62 nicht in jedem Fall mit dem Material des Borstenträgers 12 verbindet, d.h. dass sich beim Spritzgiessen nicht unbedingt einen Materialschluss ergibt. So werden bei vielen Materialkombinationen Formschlüsse im Design für die Verbindung der Materialien eingesetzt.

Aus Fig. 73, einem Querschnitt im vorderen Bereich des Kopfteils 32 ist ersichtlich, wie sich das Borstenmaterial 62 um den Borstenträger 12 formt. Der Borstenträger 12 ist aus Hartmaterial geformt und setzt sich vom Griffteil 28 über das Halsteil 30 bis zum Kopfteil 32 fort. Er bildet das stabilisierende Gerippe. Das Borstenmaterial 62 schlingt sich um den Borstenträger 12.

Dabei sind zwei Möglichkeiten zur Fixierung gezeigt. Einerseits ist das Borstenmaterial 62 beidseits des Borstenträgers 12 um diesen herum geschlungen, eine Umklammerung wird erreicht. Des Weiteren kann das einzelne Borstenbündel 56, welches durch den Borstenträger 12 hindurch mit Borstenmaterial 62 versorgt wird, so angelegt werden, dass dessen Borstenstamm 130 durch eine Engstelle 176 hindurch verläuft und es so am Borstenträger fixiert ist. Der Borstenträger 12 greift quasi in eine umlaufende Nut des Borstenstamms 13 hinein.

Die Verbreiterung des Durchlasses 42 auf der Borstenseite der Engstelle 176 beträgt vorzugsweise zwischen 0.05 mm und 0.3 mm vorzugsweise zwischen 0.08 mm und 0.15 mm. Das Borstenbündel 56 wird auf diese Weise im Gebrauch nicht nach hinten gedrückt, die Kraft wird so von den gespritzten Borsten 16 über den Borstenstamm 130 auf den Borstenträger 12 gelenkt und nicht auf das Borstenmaterial 62 auf der Rückseite 36 des Kopfteils 32.

Die Fig. 74 zeigt einen mittigen Querschnitt durch das Borstenfeld, quer zur Längsachse der Zahnbürste 10. In diesem Beispiel sind alle drei in dieser Ausführungsform vorhandenen Materialien gezeigt. Der Borstenträger 12 verläuft zwischen den beiden Materialien, dem Borstenmaterial 62 und dem Weichmaterial 66 der (borstenlosen) weichelastischen Massage- und Reinigungselemente 20. Körpermässig verläuft das Borstenmaterial 62 innen durch den Borstenträger 12 und ist das Weichmaterial 66 aussen am Borstenträger 12 angespritzt. In diesem Querschnitt ist gut erkennbar, dass das Weichmaterial 66 mit dem Material des Borstenträgers 12, einem Hartmaterial, beim Spritzgiessen eine Verbindung eingeht und deshalb auf Formschluss-Verbindungen verzichtet werden kann. Beim Borstenmaterial 62 hingegen ist es so, dass dieses, wie in im Beispiel aus Fig. 73 bereits gezeigt, mit dem Borstenträger 12 einen Formschluss eingeht. Der Formschluss ist mittels eines Durchbruchs durch den Borstenträger 12 und vor und nach dem Durchbruch breiteren Passagen gezeigt.

In Fig. 75 ist ein Längsschnitt entlang der Längsachse der Zahnbürste dargestellt. Es ist gezeigt, wie die Borsten aus dem Borstenmaterial hervortreten. Dies ist in der Mitte des Bürstenkopfes gezeigt. Wiederum dargestellt ist die Formschluss-Thematik im mittleren Bereich des Borstenfeldes sowie bei den beiden Bündeln im vorderen Bereich des Bürstenkopfs.

Fig. 76 zeigt, dass das Borstenmaterial 62 einen Teil des Borstenträgers 12 auch komplett umgeben kann und so mit diesem formschlüssig verbunden ist. Dies kann auch dadurch ausgebildet werden, dass am Borstenträger 12 nebeneinander mindestens zwei Durchbrüche 178 ausgebildet sind und sich das Borstenmaterial 62 durch beide Durchbrüche 178 verteilt und vor und nach den Durchbrüchen 178 eine Einheit bildet. Oder, wie im in Fig. 76 gezeigten Ausführungsbeispiel, dass am Borstenträger 12, nahe beim seitlichen Rand, ein Durchbruch 178 ausgebildet wird, das Borstenmaterial 62 durch den Durchbruch 178 hindurch verläuft und seitlich um den Borstenträger 12 herum verläuft, sowie beidseits des Durchbruchs 178 zu einer Einheit verbunden ist. Der minimale Durchmesser des Durchbruchs 178 beträgt zwischen 0.3 mm und 1.4 mm, vorzugsweise zwischen 0.5 mm und 1.0 mm.

Das in den Fig. 70 - 76 gezeigte Kopfteil 32 einer Handzahnbürste 10 ist so ausgelegt, dass es in einem Würfelwerkzeug sehr effizient hergestellt werden kann. Das entsprechende Ablaufdiagramm ist in Fig. 75 gezeigt.

Im ersten Schritt, das heisst in der 1. Station der vier Stationen des Würfelwerkzeugs, wird der Grundkörper mittels Spritzgiessen hergestellt. Dieser entspricht grösstenteils dem Bürstenkörper 26 der fertigen Handzahnbürste 10. Der Grundkörper besteht meistens aus einem Hartmaterial, welches die Grundstabilität des finalen Produkts sicherstellt beziehungsweise den Bürstenkörper 26 grösstenteils bildet.

In der 2. Station des Würfelwerkzeugs passiert ein Kühlvorgang, der den Grundkörper mindestens teilweise auskühlen lässt. Es ist aber auch möglich, dass in dieser Station weitere Manipulationen am Grundkörper erfolgen. Beispielsweise das Anbringen von Montageteilen, Kennzeichnungen etc.

In der 3. Station werden, wiederum mittels Spritzgiessen, die gespritzten Borsten 16 angebracht. Die gezeigte Handzahnbürste 10 enthält nur eine Art von gespritzten Borsten 16, die hier angebracht werden. Daneben wird ebenfalls in der 3. Station eine weitere Materialkomponente angebracht, die einen Teil des Griffes und auch einen Teil der Rückseite 36 des Kopfteils 32 der Zahnbürste 10 bildet. Im gezeigten Ausführungsbeispiel besteht sie aus dem Weichmaterial 66 und bildet die (borstenlosen) weichelastischen Massage- und Reinigungselemente 20.

Dies ist möglich, weil die Hohlräume für die verschiedenen Materialien am Borstenträger 12 getrennt sind und so ein paralleles Einbringen von unterschiedlichen Materialien möglich ist.

Es ist auch möglich, dass mehrere gespritzte Borstenarten in der 3. Station spritzgegossen werden. Dabei ist es, wie oben beschrieben, nötig, dass die verschiedenen Materialkomponenten komplett voneinander getrennt sind. So können beispielsweise neben gespritzten Borsten erster Art 16 gespritzte Borsten zweiter Art 18 oder die weichelastischen Massage- und Reinigungselemente 20 gespritzt werden.

Für die rationelle Fertigung der Handzahnbürste 10 ist es von Vorteil, dass nach dem Spritzgiessen in der 3. Station das Produkt den kompletten Spritzgiessprozess durchlaufen hat. Weitere Volumen am Bürstenkörper 26 können gleichwohl später noch angebracht werden, beispielsweise durch Montage. Dabei können Volumen angeklebt, eingeklickt, angeschweisst etc. werden.

In der 4. Station des Würfelwerkzeugs werden die Bürstenkörper 26 entnommen.

Ein grosser Vorteil der Herstellung der Handzahnbürsten 10 auf diese Weise ist, dass die kostspieligen Kavitäten für die Herstellung der gespritzten Borsten, das heisst die ersten und zweiten Werkzeugeinsätze 98, 100, nur für eine einzige Station hergestellt werden müssen, da für das Borstenfeld anschliessend keine weiteren Manipulationen mittels Spritzgiessen vorgesehen werden müssen. Weiter ist nach diesen verketteten Schritten das Produkt ganz oder grösstenteils fertiggestellt. Die rationellste Fertigung wird durch die direkte oder indirekte Verknüpfung des Spritzgiessprozesses mit den nachfolgenden Prozessen erreicht. Dies ist im Ablaufdiagramm in Fig. 76 gezeigt. Selbstverständlich ist diese Verknüpfung aber nicht zwingend einzugehen.

Dabei ist es so, dass die Handzahnbürste 10 direkt aus dem Spritzgiessprozess kommend, weiter verarbeitet, das heisst, verpackt werden. Dabei ist es möglich, dass verschiedene zusätzliche Bearbeitungsprozesse ander Handzahnbürste 10 vorgenommen werden, bevor sie schlussendlich verpackt wird. Daneben ist es auch möglich, dass die Handzahnbürsten 10 gepuffert werden.

Die zusätzlichen Bearbeitungsprozesse können dabei vor oder nach dem Puffern oder auch auf dem direkten Weg vom Spritzgiessen zum Verpacken stattfinden. Diese Prozessschritte sind durch "..." symbolisiert. Beispiele für Bearbeitungen, die in diesen Schritten stattfinden können sind Prägen (Kennzeichnen oder Dekorieren), Versehen mit der Lotnummer und so weiter.

Der vorzugsweise vorhandene Puffer dient dazu, den beiden Prozessen Spritzgiessen und Verpacken, trotz Verkettung, eine gewisse Unabhängigkeit zu geben. Wie im Ablaufdiagramm gezeigt, ist es möglich einen solchen Puffer einzusetzen oder eben nicht.

Das Verpacken erfolgt am Schluss der Herstellkette. Dabei wird die Handzahnbürste 10 mit einer Verpackung umhüllt. Beispiele dafür sind Blisterverpackungen, Beutelverpackungen etc.

Die im Zusammenhang mit den Einzelbündeln 128 und deren Borsten 16, 18 gemachten Ausführungen treffen entsprechend auch auf die weiter oben beschriebenen Ausführungsformen mit Borstenbündel 56 mit gespritzen Borsten 16, 18 zu; die Borstenbasis 64 entspricht dann dem Bündelstamm 130.

Um Zahnbürsten 10 effektiver zu gestalten ist es auch möglich, dem Borstenmaterial 62, 62' und / oder dem Weichmaterial 66 mehr Abrasivität zu verleihen. Zu diesem Zweck können beispielsweise Schleifpartikel in den Kunststoff integriert werden.

Weiter ist es möglich, Partikel zur Dekoration und Gestaltung beizumischen beispielsweise Glitterpartikel, um auf diese Weise einen optischen Effekt zu erzielen.

Mit den beschriebenen bevorzugten Ausgestaltungsvarianten für gespritzte Borsten 16, 18 ist es möglich, die Anforderungen, welche an Borstenbündel gestellt werden, zu erfüllen. Sie sollen möglichst abriebfest sein, eine gute Chemikalienresistenz haben, standfest sein bzw. eine gute Rückstellfähigkeit besitzen und auch nicht leicht auszureissen sein.

Die Chemikalienresistenz wird gemessen mittels des sogenannten Odol-Tests (Odol ist ein Markenzeichen von SmithKline Beecham Consumer Healthcare GmbH) . Dabei wird der Bürstenkopf während 24 Stunden in eine Lösung bestehend aus 50% Odol und 50% Wasser eingelegt. Anschliessend wird die Materialbeschädigung und die Verfärbung beurteilt, das heisst, das Aussehen und die Funktionalität werden geprüft.

Die Standfestigkeit und die Rückstellungsfähigkeit werden aufgrund einer 13,5 stündigen Schrubbbewegung auf einer Zahnstruktur mit einer Belastung von 250 Gramm beurteilt. Das visuelle Aussehen des Borstenfeldes ist das Beurteilungskriterium.

Das Auszugsgewicht der Borstenbündel wird mit einer präzisen Messung beurteilt. Dazu wird ein Borstenbündel geklemmt und vom festgemachten Bürstenkopf weggezogen. Das Auszugsgewicht muss dabei mindestens 1.8 kg betragen.

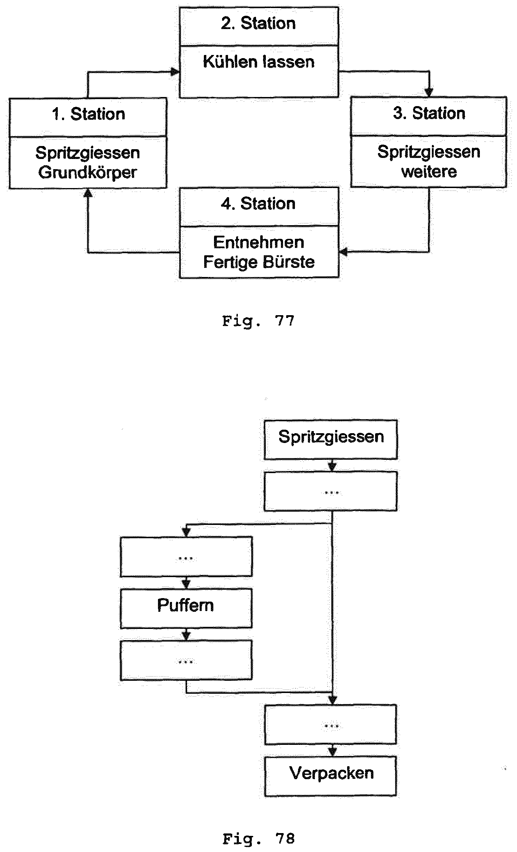

Das in Fig. 26 , 45 , 77 und 78 gezeigte Herstellverfahren kann, wie beschrieben, verschiedene nachgelagerte Prozessschritte, wie beispielsweise Verpacken haben.

Dabei ist es auch möglich die gespritzten Borsten 16, 18 nachzubearbeiten und auf diese Weise Limitierungen auszuschalten, welche vom Spritzgussprozess her gegeben sind. So können die gespritzten Borsten 16, 18, beispielsweise analog den extrudierten konventionellen Borsten 134, geschnitten und gerundet werden. Hierbei spielen die Borstenmaterialien 62, 62' eine zentrale Rolle, diese müssen die Behandlung zulassen. Das heisst, dass sie beispielsweise durch den Rundungsprozess nicht schmelzen oder nur sehr kontrolliert schmelzen dürfen.

Die im Zusammenhang mit den Fig. 26 , 45 , 77 und 78 angesprochenen nachgelagerten Verfahrensschritte und auch die jeweils abgebildeten Verfahrensschritte können im Herstellungsprozess direkt verknüpft sein, so dass beispielsweise am Ende der Produktionsstrasse fertig verpackte Zahnbürsten ausgestossen werden, d.h. die Produktion erfolgt inline, also ohne dass die durchgeführten Prozessschritte irgendwie getrennt wären. Für die Herstellung der Zahnbürsten, also das Spritzgiessen, werden Spritzgussmaschinen in verschiedener Anzahl benötigt, je nach Ausführung.

Für die Herstellung einer Zahnbürste 10 mit einem Bürstenkörper 26 und einem Trägerplättchen 14 mit gespritzten Borsten 16, 18 gemäss den Fig. 2 bis 25 und wie in Fig. 26 gezeigt, werden mindestens zwei Spritzgussmaschinen benötigt. Eine erste Maschine um den Bürstenkörper 26 herzustellen und eine zweite Maschine um das Trägerplättchen 14 herzustellen und die gespritzten Borsten 16, 18 und die (borstenlosen) weichelastischen Massage- und Reinigungselemente 20 anzuspritzen. Je nach Aufbau des Herstellprozesses und der Zahnbürste 10 wird für das Zusammenfügen von Trägerplättchen 14 und Bürstenkörper 26 eine weitere Spritzgussmaschine benötigt oder dieser Schritt wird in eine der bestehenden Spritzgussmaschinen integriert oder das Zusammenfügen passiert nicht mittels Spritzgiessen.

Für die Herstellung einer Zahnbürste 10 mit einem Bürstenkörper 26, dessen Kopfteil 32 den Borstenträger 12 bildet, und mit gespritzten Borsten 16, 18 sowie weichelastischen Massage- und Reinigungselementen 20, wie in den Fig. 27 bis 45 gezeigt, wird mindestens eine Spritzgussmaschine benötigt. Die Herstellung kann in einem einzigen Spritzgusswerkzeug auf einer Spritzgussmaschine erfolgen. Verfahrenstechnisch kann es auch möglich sein, dass die Herstellung aufgeteilt wird und beispielsweise der Bürstenkörper 26 auf einer Maschine hergestellt wird und die gespritzten Borsten 16, 18 sowie weichelastischen Massage- und Reinigungselemente 20 auf einer anderen Maschine gespritzt werden.

Die Werkzeugtechnologie oder die Werkzeugtechnologien, die für die Herstellung der Zahnbürsten 10 eingesetzt werden oder werden können, sind alle bekannten. Von Etagenwerkzeugen, über Würfelwerkzeuge, über Indexplattenwerkzeuge und Helikopterwerkzeuge bis hin zu SPCS-Werkzeugen. Dabei ist es auch möglich, Werkzeuge einfach auszugestalten und auf Roboterhilfen für das Umlegen der Teile zu verzichten und dies manuell zu verrichten.

Selbstverständlich sind die aufgezeigten Ausgestaltungsvarianten beispielhaft und die einzelnen Ausprägungen und Elemente dieser Ausgestaltungsvarianten können mit anderen Ausgestaltungsvarianten kombiniert werden ohne den Rahmen dieser Erfindung zu verlassen. Insbesondere sind die Anordnungen der Borsten, Weichelemente, Kanäle und Durchlässe als Beispiel zu sehen und können in anderen Anordnungen passieren.

Die gemachten Beschreibungen für spezifische Figuren lassen sich selbstverständlich auch auf andere Figuren übertragen, die gleiche oder ähnliche Ausprägungen zeigen und in welchen die Ausprägungen nicht im gleichen Detail beschrieben sind.

Der Vollständigkeit halber sei erwähnt, dass die Offenbarung im Zusammenhang mit den gespritzten Borsten 16, 18 und Borstenbündel 56 beziehungsweise Einzelbündel 128 auch zutreffen, wenn sich die Verteilkanäle 44, 46 auf der Vorderseite des Borstenträgers 12 befinden und die gespritzten Borsten 16, 18 direkt vom Borstenmaterial 62, 62' in diesen Verteilkanälen abstehen. Dieses Borstenmaterial 62, 62' bildet dann die Borstenbasis 64 beziehungsweise den Bündelstamm 130.

## Patentansprüche

1. Zahnbürste umfassend einen Bürstenkörper mit einem Griffteil (28), einem Halsteil (30) und einem einen Borstenträger (12) umfassenden Kopfteil (32), wobei
die Zahnbürste im Mehrkomponentenspritzgussverfahren aus einem Weichmaterial, einem Hartmaterial und einem Borstenmaterial hergestellt ist, und vom Borstenträger (12) abstehende, aus dem Borstenmaterial (62, 62') gespritzte Borsten (16, 18) mit einem Borstenstamm (103) aufweist, wobei
auf der Vorderseite des Borstenträgers (12) eine aus dem Borstenmaterial (62, 62') hergestellte Oberflächenschicht (148) angespritzt ist, und wobei mindestens eine Vielzahl von gespritzten Borsten (16, 18) integral mit der Oberflächenschicht (148) ausgebildet sind und von dieser abstehen, wobei
auf dem Borstenträger (12) zwischen 100 bis 500 gespritzte Borsten (16, 18) vorhanden sind und die gespritzten Borsten (16, 18) einen minimalen Konuswinkel (α) von 0,5° bis 5° aufweisen.

2. Zahnbürste gemäss Anspruch 1, **dadurch gekennzeichnet, dass** zwischen dem Borstenmaterial und dem Hartmaterial des Borstenträgers (12) ein Form- aber kein Materialschluss besteht.

3. Zahnbürste gemäss Anspruch 1 oder 2, **dadurch gekennzeichnet, dass** der Querschnitt der gespritzten Borsten (16, 18) kreisrund, elliptisch, sternförmig oder mehreckig ausgebildet ist.

4. Zahnbürste gemäss einem der vorhergehenden Ansprüche, **dadurch gekennzeichnet, dass** der Borstenträger (12) durch ein Trägerplättchen (14) gebildet wird, welches in das Kopfteil (32) eingesetzt ist.

5. Zahnbürste gemäss einem der vorhergehenden Ansprüche, **dadurch gekennzeichnet, dass** der Borstenträger mindestens einen Verteilkanal (44, 46) für das Borstenmaterial aufweist, wobei der Verteilkanal (44, 46) Kanalwände (50) mit Hinterschnitten aufweist.

6. Zahnbürste gemäss einem der vorhergehenden Ansprüche, **dadurch gekennzeichnet, dass** der Borstenträger (12) einen Durchlass aufweist, welcher sich in Richtung zur Vorderseite des Borstenträgers (12) etwas, vorzugsweise stufenartig, verbreitert oder sich konisch öffnet.

7. Zahnbürste gemäss einem der vorhergehenden Ansprüche, **dadurch gekennzeichnet, dass** der Bürstenkörper eine Durchdringung aufweist und das Borstenmaterial vor und nach der Durchdringung breiter als die Durchdringung ausgebreitet ist oder dass der Bürstenkörper von aussen oder durch Durchbrüche hindurch vom Borstenmaterial umschlungen ist.

8. Zahnbürste gemäss einem der vorhergehenden Ansprüche, **dadurch gekennzeichnet, dass** die Verteilung des Borstenmateriales im Kopfteil (32) flächig ist, wobei das Borstenmaterial im Kopfteil (32) der Zahnbürste eingebracht ist und zwar direkt durch einen Anspritzpunkt am Kopfteil (32).

9. Zahnbürste gemäss einem der vorhergehenden Ansprüche, **dadurch gekennzeichnet, dass** die gespritzten Borsten (16, 18) Borstenbündel (56) bilden.

10. Zahnbürste gemäss Anspruch 9, **dadurch gekennzeichnet, dass** die Anzahl jeweils ein Borstenbündel (56) bildende gespritzte Borsten 2 bis 15, vorzugweise 3 bis 10, besonders bevorzugt 4, 5, 6, 7, 8 oder 9, beträgt.

11. Zahnbürste gemäss Anspruch 9 oder 10, **gekennzeichnet durch** 10 bis 40, besonders bevorzugt 15 bis 30 Borstenbündel (56) mit gespritzten Borsten (16, 18), welche integral mit der Oberflächensicht ausgebildet sind und von dieser abstehen.

12. Zahnbürste gemäss einem der vorhergehenden Ansprüche, **dadurch gekennzeichnet, dass** das Verhältnis des Durchmessers (D) der gespritzten Borsten (16, 18) gemessen beim nutzungsseitigen Ende (103') des Borstenstamms (103) - zur freiliegenden Länge (22) der gespritzten Borsten (16, 18) mindestens 1:35, vorzugsweise mindestens 1:40 beträgt.

13. Zahnbürste gemäss Anspruch 12, **dadurch gekennzeichnet, dass** das Verhältnis des Durchmessers (D) der gespritzten Borsten (16, 18) zur freiliegenden Länge (23) höchstens 1:90, vorzugsweise höchstens 1:80 beträgt.

14. Zahnbürste gemäss einem der vorhergehenden Ansprüche, **dadurch gekennzeichnet, dass** der Durchmesser (Dl) der gespritzten Borsten (16, 18) beim borstenträgerseitigen Ende (103") 0,5 bis 1 mm, bevorzugt 0,75 mm bis 0,9 mm, beträgt, und dass bevorzugt der Durchmesser (D) beim nutzungsseitigen Ende (103') des Borstenstamms 0,05 mm bis 0,4 mm, besonders bevorzugt 0,15 mm bis 0,35 mm, beträgt.

15. Zahnbürste gemäss einem der vorhergehenden Ansprüche, **dadurch gekennzeichnet, dass** die freiliegende Länge (22) der gespritzten Borsten (16, 18) 4 mm bis 16 mm, insbesondere 8 mm bis 12 mm, beträgt.

16. Zahnbürste gemäss einem der vorhergehenden Ansprüche, **dadurch gekennzeichnet, dass** die gespritzten Borsten (16, 18) einen minimalen Konuswinkel (α) von 0.8° bis 2°, bevorzugt von 0.8° bis 1.5°, aufweisen.

17. Zahnbürste gemäss einem der vorhergehenden Ansprüche, **dadurch gekennzeichnet, dass** der Borstenträger (17) mindestens einen Verteilkanal (44, 46) für das Borstenmaterial (62, 62') aufweist, und mindestens eine Anzahl der gespritzten Borsten (16,18) integral mit dem Borstenmaterial (62, 62') im Verteilkanal (44, 46) ausgebildet sind.

18. Zahnbürste gemäss Anspruch 17, **dadurch gekennzeichnet, dass** der Verteilkanal (44, 46) auf einer den gespritzten Borsten (16, 18) abgewandten Rückseite (36') des Borstenträgers (12) an diesem ausgebildet ist und der Borstenträger (12) vom Boden (48) des Verteilkanals (44, 46) zu einer den gespritzten Borsten (16, 18) zugewandten Vorderseite (24) des Borstenträgers (12) verlaufende Durchlässe (42) für das Borstenmaterial (62, 62') aufweist.

19. Zahnbürste gemäss Anspruch 18, **dadurch gekennzeichnet, dass** einem Durchlass (42) mehrere gespritzte Borsten (16, 18) zugeordnet sind.

20. Zahnbürste gemäss Anspruch 19, **dadurch gekennzeichnet, dass** das Borstenmaterial (62, 62') im Bereich des Durchlasses (42) eine den dem Durchlass (42) zugeordneten gespritzten Borsten (16, 18) gemeinsame Borstenbasis (64) bildet und bevorzugt der Borstenstamm (103) beim Austritt aus dem Borstenträger (12) beginnt.

21. Zahnbürste gemäss Anspruch 19, **dadurch gekennzeichnet, dass** das Borstenmaterial (62, 62') im Bereich des Durchlasses (42) und gegenüber der Vorderseite (24') der Zahnbürste (10), vorzugsweise bis zu 5 mm, vorstehend eine den dem Durchlass (42) zugeordneten gespritzten Borsten (16, 18) gemeinsame Borstenbasis (64) bildet.

22. Zahnbürste gemäss einem der Ansprüche 18 bis 21, **dadurch gekennzeichnet, dass** ein Anspritzpunkt (80, 80') für das Borstenmaterial (62, 62 ') bezüglich der Durchlässe (42) versetzt angeordnet ist.

23. Zahnbürste gemäss einem der vorhergehenden Ansprüche, **gekennzeichnet durch** 150 bis 300 gespritzte Borsten (16,18).

24. Zahnbürste gemäss einem der vorhergehenden Ansprüche, **dadurch gekennzeichnet, dass** am Borstenträger (12) mindestens ein borstenloses, weichelastisches Massage- und Reinigungselement (20) angespritzt ist und dieses aus einem Weichmaterial (66) besteht.

25. Zahnbürste gemäss einem der vorhergehenden Ansprüche, **gekennzeichnet durch** ein borstenloses, weichelastisches Zungenreinigungselement (78), welches aus einem Weichmaterial (66) besteht.

26. Zahnbürste gemäss Anspruch 24 oder 25, **dadurch gekennzeichnet, dass** als Weichmaterial (66) thermoplastisches Polyurethan-Elastomer (TPE-U), thermoplastisches Styrol -Elastomere (TPE-S), wie beispielsweise ein Styrol-Ethylen-Butylen-Styrol-Copolymer (SEBS) oder ein Styrol-Butadien-Styrol-Copolymer (SBS), thermoplastisches Polyamid-Elastomer (TPE-A), thermoplastisches Polyolefin-Elastomer (TPE- O), thermoplastisches Polyester-Elastomere (TPE-E), thermoplastisches Polyethylen (PE) oder Polyurethan (PU) gewählt ist, und vorzugsweise die Härte unter 90 Shore A liegt.

27. Zahnbürste gemäss einem der Ansprüche 24 bis 26, **dadurch gekennzeichnet, dass** das Weichmaterial (66) für die borstenlosen, weichelastischen Massage- und Reinigungselemente (20) eine Härte kleiner 40 Shore A aufweist.

28. Zahnbürste gemäss einem der Ansprüche 24 bis 27, **dadurch gekennzeichnet, dass** die Shore A Härte des Weichmaterials (66) für das borstenlose, weichelastische Massage- und Reinigungselement (20) tiefer ist, bevorzugt wesentlich tiefer ist, als die Shore A Härte des Borstenmaterials (62, 62') für die gespritzten Borsten (16, 18).

29. Zahnbürste gemäss einem der vorhergehenden Ansprüche, **dadurch gekennzeichnet, dass** der Borstenträger (12) wenigstens aus einem Hartmaterial besteht und das Borstenmaterial (62, 62') sich von dem Hartmaterial unterscheidet.

30. Zahnbürsten gemäss Anspruch 29, **dadurch gekennzeichnet, dass** als Hartmaterial für den Borstenträger (12) beziehungsweise das Trägerplättchen (14) und gegebenenfalls den Bürstenkörper (26) wenigstens einer der folgenden Thermoplaste verwendet ist: Styrolpolymerisat wie Styrolacrylinitril (SAN), Polystyrol (PS), Acrylinitrylbutadienstyrol (ABS), Styrolmethylmethacrylate (SMMA) oder Styrolbutadien (SB); Polyolefin wie Polypropylen (PP) oder Polyethylen (PE) beispielsweise auch in den Formen high density Polyethylen (HDPE) oder low density Polyethylen (LDPE); Polyester wie Polyethylenterephtalat (PET) in Form von säuremodifiziertem Polyethylenerephtalat (PETA) oder glykolmodifiziertem Polyethylenterephtalat (PETG), Polybutylenterephtalat (PBT), säuremodifiziertes Polycyclohexylenedimethyleneterephthalat (PCT-A) oder glykolmodifiziertes Polycyclohexylenedimethlyeneterphtalat (PCT-G); Cellulosederivat wie Celluloseacetat (CA), Celluloseacetobutyrat (CAB), Cellulosepropionat (CP), Celluloseacetatphtalat (CAP) oder Cellulosebutyrat (CB); Polyamide (PA); Polymethylmethacrylat (PMMA); Polycarbonat (PC); Polyoxymeethylen (POM); Polyvinylchlorid (PVC); Polyurethan (PUR); vorzugsweise Polypropylen (PP).

31. Zahnbürste gemäss einem der vorhergehenden Ansprüche, **dadurch gekennzeichnet, dass** das Borstenmaterial (62, 62') ein Polyamid-Elastomer, ein Polyester-Elastomer oder ein Hartmaterial ist.

32. Zahnbürste gemäss einem der vorhergehenden Ansprüche, **dadurch gekennzeichnet, dass** das Borstenmaterial (62, 62') eine Shore-D Härte von 10 bis 100, vorzugsweise 30 bis 80, insbesondere zwischen 50 - 80, aufweist.

## Claims

1. Toothbrush comprising a brush body with a handle part (28), a neck part (30) and a head part (32) comprising a bristle carrier (12), wherein
the toothbrush is made from a soft material, a hard material and a bristle material in a multi-component injection molding process, and has bristles (16, 18) with a bristle stem (103) that protrude from the bristle carrier (12) and are injection molded from the bristle material (62, 62'), wherein
a surface layer (148) produced from the bristle material (62, 62') is injection molded onto the front face of the bristle carrier (12), and wherein at least a plurality of injection molded bristles (16, 18) are integrally formed with the surface layer (148) and protrude therefrom, wherein
between 100 and 500 injection molded bristles (16, 18) are present on the bristle carrier (12) and the injection molded bristles (16, 18) have a minimum cone angle (α) of 0.5° to 5°.

2. Toothbrush according to claim 1, **characterized in that** there is a form-fitting connection but no material connection between the bristle material and the hard material of the bristle carrier (12).

3. Toothbrush according to either claim 1 or 2, **characterized in that** the cross section of the injection molded bristles (16, 18) is circular, elliptical, star-shaped or polygonal.

4. Toothbrush according to any of the preceding claims, **characterized in that** the bristle carrier (12) is formed by a carrier plate (14) which is inserted into the head part (32).

5. Toothbrush according to any of the preceding claims, **characterized in that** the bristle carrier has at least one distribution channel (44, 46) for the bristle material, the distribution channel (44, 46) having channel walls (50) with undercuts.

6. Toothbrush according to any of the preceding claims, **characterized in that** the bristle carrier (12) has a passage which widens somewhat, preferably in steps, or opens conically toward the front face of the bristle carrier (12).

7. Toothbrush according to any of the preceding claims, **characterized in that** the brush body has a penetration and the bristle material is spread wider than the penetration upstream and downstream of the penetration, or **in that** the brush body is wrapped by the bristle material from the outside or through openings.

8. Toothbrush according to any of the preceding claims, **characterized in that** the distribution of the bristle material in the head part (32) is planar, the bristle material being introduced into the head part (32) of the toothbrush, specifically directly through an injection point on the head part (32).

9. Toothbrush according to any of the preceding claims, **characterized in that** the injection molded bristles (16, 18) form bristle bundles (56).

10. Toothbrush according to claim 9, **characterized in that** the number of injection molded bristles each forming a bristle bundle (56) is 2 to 15, preferably 3 to 10, particularly preferably 4, 5, 6, 7, 8 or 9.

11. Toothbrush according to either claim 9 or claim 10, **characterized by** 10 to 40, particularly preferably 15 to 30 bristle bundles (56) comprising injection molded bristles (16, 18) which are formed integrally with the surface layer and protrude therefrom.

12. Toothbrush according to any of the preceding claims, **characterized in that** the ratio of the diameter (D) of the injection molded bristles (16, 18) measured at the use end (103') of the bristle stem (103) to the exposed length (22) of the injection molded bristles (16, 18) is at least 1:35, preferably at least 1:40.

13. Toothbrush according to claim 12, **characterized in that** the ratio of the diameter (D) of the injection molded bristles (16, 18) to the exposed length (23) is at most 1:90, preferably at most 1:80.

14. Toothbrush according to any of the preceding claims, **characterized in that** the diameter (D1) of the injection molded bristles (16, 18) at the bristle carrier end (103") is 0.5 mm to 1 mm, preferably 0.75 mm to 0.9 mm, and **in that** the diameter (D) at the use end (103') of the bristle stem is 0.05 mm to 0.4 mm, particularly preferably 0.15 mm to 0.35 mm.

15. Toothbrush according to any of the preceding claims, **characterized in that** the exposed length (22) of the injection molded bristles (16, 18) is 4 mm to 16 mm, in particular 8 mm to 12 mm.

16. Toothbrush according to any of the preceding claims, **characterized in that** the injection molded bristles (16, 18) have a minimum cone angle (α) of 0.8° to 2°, preferably 0.8° to 1.5°.

17. Toothbrush according to any of the preceding claims, **characterized in that** the bristle carrier (17) has at least one distribution channel (44, 46) for the bristle material (62, 62'), and at least a number of the injection molded bristles (16, 18) are formed integrally with the bristle material (62, 62') in the distribution channel (44, 46).

18. Toothbrush according to claim 17, **characterized in that** the distribution channel (44, 46) is formed on a rear face (36') of the bristle carrier (12) facing away from the injection molded bristles (16, 18) and the bristle carrier (12) has passages (42) for the bristle material (62, 62') which extend from the bottom (48) of the distribution channel (44, 46) toward a front face (24) of the bristle carrier (12) facing the injection molded bristles (16, 18).

19. Toothbrush according to claim 18, **characterized in that** a plurality of injection molded bristles (16, 18) are associated with one passage (42).

20. Toothbrush according to claim 19, **characterized in that** the bristle material (62, 62') forms, in the region of the passage (42), a bristle base (64) common to the injection molded bristles (16, 18) associated with the passage (42), and the bristle stem (103) preferably begins when exiting the bristle carrier (12).

21. Toothbrush according to claim 19, **characterized in that** the bristle material (62, 62') forms, in the region of the passage (42) and projecting, preferably by up to 5 mm, with respect to the front face (24') of the toothbrush (10), a bristle base (64) common to the injection molded bristles (16, 18) associated with the passage (42).

22. Toothbrush according to any of claims 18 to 21, **characterized in that** an injection point (80, 80') for the bristle material (62, 62') is offset with respect to the passages (42).

23. Toothbrush according to any of the preceding claims, **characterized by** 150 to 300 injection molded bristles (16, 18).

24. Toothbrush according to any of the preceding claims, **characterized in that** at least one bristle-free, flexible massage-and-cleaning element (20) is injection molded onto the bristle carrier (12) and consists of a soft material (66).

25. Toothbrush according to any of the preceding claims, **characterized by** a bristle-free, flexible tongue-cleaning element (78) which consists of a soft material (66).

26. Toothbrush according to either claim 24 or claim 25, **characterized in that** thermoplastic polyurethane elastomer (TPE-U), thermoplastic styrene elastomer (TPE-S), such as a styrene-ethylene-butylene-styrene copolymer (SEBS) or a styrenebutadiene-styrene copolymer (SBS), thermoplastic polyamide elastomer (TPE-A), thermoplastic polyolefin elastomer (TPE-O), thermoplastic polyester elastomer (TPE-E), thermoplastic polyethylene (PE) or polyurethane (PU) is selected as the soft material (66), and the hardness is preferably below 90 Shore A.

27. Toothbrush according to any of claims 24 to 26, **characterized in that** the soft material (66) for the bristle-free, flexible massage-and-cleaning elements (20) has a hardness of less than 40 Shore A.

28. Toothbrush according to any of claims 24 to 27, **characterized in that** the Shore A hardness of the soft material (66) for the bristle-free, flexible massage-and-cleaning element (20) is lower, preferably substantially lower, than the Shore A hardness of the bristle material (62, 62') for the injection molded bristles (16, 18).

29. Toothbrush according to any of the preceding claims, **characterized in that** the bristle carrier (12) consists of at least one hard material and the bristle material (62, 62') differs from the hard material.

30. Toothbrushes according to claim 29, **characterized in that** at least one of the following thermoplastics is used as the hard material for the bristle carrier (12) or the carrier plate (14) and optionally the brush body (26): styrene polymer such as styreneacrylonitrile (SAN), polystyrene (PS), acrylonitrile butadiene styrene (ABS), styrene methyl methacrylates (SMMA) or styrene butadiene (SB); polyolefin such as polypropylene (PP) or polyethylene (PE), for example also in the form of high-density polyethylene (HDPE) or low-density polyethylene (LDPE); polyesters such as polyethylene terephthalate (PET) in the form of acid-modified polyethylene terephthalate (PETA) or glycol-modified polyethylene terephthalate (PETG), polybutylene terephthalate (PBT), acid-modified polycyclohexylenedimethylene terephthalate (PCT-A) or glycol-modified polycyclohexylenedimethylene terephthalate (PCT-G); cellulose derivative such as cellulose acetate (CA), cellulose acetate butyrate (CAB), cellulose propionate (CP), cellulose acetate phthalate (CAP) or cellulose butyrate (CB); polyamides (PA); polymethyl methacrylate (PMMA); polycarbonate (PC); polyoxymethylene (POM); polyvinyl chloride (PVC); polyurethane (PUR); preferably polypropylene (PP).

31. Toothbrush according to any of the preceding claims, **characterized in that** the bristle material (62, 62') is a polyamide elastomer, a polyester elastomer or a hard material.

32. Toothbrush according to any of the preceding claims, **characterized in that** the bristle material (62, 62') has a Shore D hardness of 10 to 100, preferably 30 to 80, in particular between 50 and 80.

## Revendications

1. Brosse à dents comprenant un corps de brosse comportant une partie poignée (28), une partie col (30) et une partie tête (32) comprenant un support de poils (12), dans laquelle
la brosse à dents est fabriquée, selon un procédé de moulage par injection à plusieurs composants, en une matière souple, en une matière dure et en une matière de poils, et comporte des poils (16, 18), moulés par injection à partir de la matière de poils (62, 62') et faisant saillie du support de poils (12), comportant une tige de poils (103), dans laquelle
sur la face avant du support de poils (12), une couche de surface (148) fabriquée en matière de poils (62, 62'), est moulée par injection et dans laquelle au moins une pluralité de poils (16, 18) moulés par injection sont formés monobloc avec la couche de surface (148) et font saillie de celle-ci, dans laquelle
sur le support de poils (12) entre 100 et 500 poils (16, 18) moulés par injection sont présents et les poils (16, 18) moulés par injection présentent un angle de cône (α) minimal de 0,5 ° à 5 °.

2. Brosse à dents selon la revendication 1, **caractérisée en ce que**, entre la matière de poils et la matière dure du support de poils (12), il existe une liaison par complémentarité de forme, mais pas de matière.

3. Brosse à dents selon la revendication 1 ou 2, **caractérisée en ce que** la section transversale des poils (16, 18) moulés par injection est circulaire, elliptique, étoilée ou polygonale.

4. Brosse à dents selon l'une quelconque des revendications précédentes, **caractérisée en ce que** le support de poils (12) est formé par une plaquette de support (14), laquelle est insérée dans la partie tête (32).

5. Brosse à dents selon l'une quelconque des revendications précédentes, **caractérisée en ce que** le support de poils comporte au moins un canal de répartition (44, 46) pour la matière de poils, dans laquelle le canal de répartition (44, 46) comporte des parois de canal (50) comportant des contre-dépouilles.

6. Brosse à dents selon l'une quelconque des revendications précédentes, **caractérisée en ce que** le support de poils (12) comporte un passage, lequel s'élargit quelque peu, de préférence de façon étagée, dans la direction de la face avant du support de poils (12) ou s'ouvre de manière effilée.

7. Brosse à dents selon l'une quelconque des revendications précédentes, **caractérisée en ce que** le corps de brosse comporte une traversée et que la matière de poils est étalée plus largement que la traversée avant et après la traversée, ou que le corps de brosse est enveloppé par la matière de poils de l'extérieur ou à travers des ouvertures.

8. Brosse à dents selon l'une quelconque des revendications précédentes, **caractérisée en ce que** la répartition de la matière de poils dans la partie tête (32) est plane, dans laquelle la matière de poils est introduite dans la partie tête (32) de la brosse à dents directement par un point d'injection au niveau de la partie tête (32).

9. Brosse à dents selon l'une quelconque des revendications précédentes, **caractérisée en ce que** les poils (16, 18) moulés par injection forment des faisceaux de poils (56).

10. Brosse à dents selon la revendication 9, **caractérisée en ce que** le nombre de poils moulés par injection formant respectivement un faisceau de poils (56) est compris entre 2 et 15, de préférence entre 3 et 10, de manière particulièrement préférée est de 4, 5, 6, 7, 8 ou 9.

11. Brosse à dents selon la revendication 9 ou 10, **caractérisée par** 10 à 40, de manière particulièrement préférée 15 à 30 faisceaux de poils (56) comportant des poils (16, 18) moulés par injection, lesdits faisceaux de poils étant formés monobloc avec la couche de surface et en faisant saillie.

12. Brosse à dents selon l'une quelconque des revendications précédentes, **caractérisée en ce que** le rapport du diamètre (D) des poils (16, 18) moulés par injection mesuré à l'extrémité (103') côté utilisation de la tige de poils (103) à la longueur (22) exposée des poils (16, 18) moulés par injection est d'au moins 1:35, de préférence d'au moins 1:40.

13. Brosse à dents selon la revendication 12, **caractérisée en ce que** le rapport du diamètre (D) des poils (16, 18) moulés par injection à la longueur (23) exposée est d'au plus 1:90, de préférence d'au plus 1:80.

14. Brosse à dents selon l'une quelconque des revendications précédentes, **caractérisée en ce que** le diamètre (D1) des poils (16, 18) moulés par injection à l'extrémité (103") côté support de poils est de 0,5 à 1 mm, de préférence de 0,75 à 0,9 mm, et que, de préférence, le diamètre (D) à l'extrémité (103') côté utilisation de la tige de poils est de 0,05 à 0,4 mm, de préférence de 0,15 mm à 0,35 mm.

15. Brosse à dents selon l'une quelconque des revendications précédentes, **caractérisée en ce que** la longueur (22) exposée des poils (16, 18) moulés par injection est de 4 à 16 mm, en particulier de 8 à 12 mm.

16. Brosse à dents selon l'une quelconque des revendications précédentes, **caractérisée en ce que** les poils (16, 18) moulés par injection présentent un angle de cône (α) minimal de 0,8 à 2 °, de préférence de 0,8 à 1,5 °.

17. Brosse à dents selon l'une quelconque des revendications précédentes, **caractérisée en ce que** le support de poils (17) comporte au moins un canal de répartition (44, 46) pour la matière de poils (62, 62'), et qu'au moins un nombre de poils (16, 18) moulés par injection sont formés monobloc avec la matière de poils (62, 62') dans le canal de répartition (44, 46).

18. Brosse à dents selon la revendication 17, **caractérisée en ce que** le canal de répartition (44, 46) est formé sur une face arrière (36') du support de poils (12) opposée aux poils (16, 18) moulés par injection, et que le support de poils (12) comporte des passages (42) pour la matière de poils (62, 62') s'étendant d'un fond (48) du canal de répartition (44, 46) jusqu'à une face avant (24) du support de poils (12) tournée vers les poils (16, 18) moulés par injection.

19. Brosse à dents selon la revendication 18, **caractérisée en ce qu'**une pluralité de poils (16, 18) moulés par injection sont associés à un passage (42).

20. Brosse à dents selon la revendication 19, **caractérisée en ce que** la matière de poils (62, 62') dans la zone du passage (42) forme une base de poils (64) commune aux poils (16, 18) moulés par injection associés au passage (42), et de préférence la tige de poils (103) à la sortie du support de poils (12).

21. Brosse à dents selon la revendication 19, **caractérisée en ce que** la matière de poils (62, 62') dans la zone du passage (42) et à l'opposé de la face avant (24') de la brosse à dents (10) forme une base de poils (64) commune aux poils (16, 18) moulés par injection associés au passage (42), de préférence jusqu'à 5 mm.

22. Brosse à dents selon l'une quelconque des revendications 18 à 21, **caractérisée en ce qu'**un point d'injection (80, 80') de la matière de poils (62, 62') est décalé par rapport aux passages (42).

23. Brosse à dents selon l'une quelconque des revendications précédentes, **caractérisée par** 150 à 300 poils (16, 18) moulés par injection.

24. Brosse à dents selon l'une quelconque des revendications précédentes, **caractérisée en ce qu'**au moins un élément de massage et de nettoyage (20) élastique souple sans poils est moulé par injection sur le support de poils (12) et est constitué d'une matière souple (66).

25. Brosse à dents selon l'une quelconque des revendications précédentes, **caractérisée par** un élément de nettoyage de langue (78) élastique souple sans poils constitué de la matière souple (66).

26. Brosse à dents selon la revendication 24 ou 25, **caractérisée en ce qu'**un élastomère de polyuréthane thermoplastique (TPE-U), un élastomère de styrène thermoplastique (TPE-S), tel qu'un copolymère styrène-éthylène-butylène-styrène (SEBS) ou un copolymère styrène-butadiène-styrène (SBS), un élastomère de polyamide thermoplastique (TPE-A), un élastomère de polyoléfine thermoplastique (TPE-O), un élastomère de polyester thermoplastique (TPE-E), un polyéthylène thermoplastique (PE) ou un polyuréthane (PU) est choisi comme matière souple (66), et, de préférence présente une dureté inférieure à 90 Shore A.

27. Brosse à dents selon l'une quelconque des revendications 24 à 26, **caractérisée en ce que** la matière souple (66) des éléments de massage et de nettoyage (20) élastiques souples sans poils présente une dureté inférieure à 40 Shore A.

28. Brosse à dents selon l'une quelconque des revendications 24 à 27, **caractérisée en ce que** la dureté Shore A de la matière souple (66) de l'élément de massage et de nettoyage (20) élastique souple sans poils est inférieure, de préférence sensiblement inférieure, à la dureté Shore A du col en matière de poils (62, 62') pour les poils (16, 18) moulés par injection.

29. Brosse à dents selon l'une quelconque des revendications précédentes, **caractérisée en ce que** le support de poils (12) est constitué d'au moins une matière dure et la matière de poils (62, 62') diffère de la matière dure.

30. Brosses à dents selon la revendication 29, **caractérisées en ce que** l'au moins une des matières thermoplastiques suivantes est utilisée comme matière dure pour le support de poils (12) ou la plaquette de support (14) et, le cas échéant, le corps de brosse (26) : un polymère styrénique tel que le styrène d'acrylonitrile (SAN), le polystyrène (PS), le styrène d'acrylonitrile butadiène (ABS), le styrène méthacrylate de méthyle (SMMA) ou le styrène butadiène (SB) ; une polyoléfine telle que le polypropylène (PP) ou le polyéthylène (PE), par exemple, également sous forme de polyéthylène haute densité (HDPE) ou de polyéthylène basse densité (LDPE) ; un polyester tel que le polyéthylène téréphtalate (PET) sous forme de polyéthylène téréphtalate modifié à l'acide (PETA) ou de polyéthylène téréphtalate modifié au glycol (PETG), le polybutylène téréphtalate (PBT), le polycyclohexylènediméthylène téréphtalate modifié à l'acide (PCT-A) ou le polycyclohexylènediméthylène téréphtalate modifié au glycol (PCT-G) ; un dérivé de cellulose tel que l'acétate de cellulose (CA), l'acétobutyrate de cellulose (CAB), le propionate de cellulose (CP), l'acétate phtalate de cellulose (CAP) ou le butyrate de cellulose (CB) ; un polyamide (PA) ; un polyméthacrylate de méthyle (PMMA) ; un polycarbonate (PC) ; un polyoxyéthylène (POM) ; un chlorure de polyvinyle (PVC) ; un polyuréthane (PUR) ; de préférence des polypropylènes (PP).

31. Brosse à dents selon l'une quelconque des revendications précédentes, **caractérisée en ce que** la matière de poils (62, 62') est un élastomère polyamide, un élastomère polyester ou une matière dure.

32. Brosse à dents selon l'une quelconque des revendications précédentes, **caractérisée en ce que** la matière de poils (62, 62') présente une dureté Shore D de 10 à 100, de préférence de 30 et 80, en particulier entre 50 et 80.
